# EUROPÄISCHE PATENTSCHRIFT

(11) **EP 4 321 895 B1**
(45) Veröffentlichungstag und Bekanntmachung des Hinweises auf die Patenterteilung: **14.01.2026**
(21) Anmeldenummer: 23190527.4
(22) Anmeldetag: 09.08.2023
(51) Int. Cl.: G01S 7/00, G01S 7/523, G01S 15/10, G01S 15/931

(54) **ULTRASCHALLSENSOR SOWIE VERFAHREN ZUR DURCHFÜHRUNG EINER ULTRASCHALLMESSUNG**
ULTRASONIC SENSOR AND METHOD FOR CARRYING OUT AN ULTRASONIC MEASUREMENT
CAPTEUR À ULTRASONS ET PROCÉDÉ DE RÉALISATION D'UNE MESURE À ULTRASONS

(30) Priorität: 10.08.2022 DE 102022120105; 10.08.2022 DE 102022120106
(43) Veröffentlichungstag der Anmeldung: 14.02.2024
(73) Patentinhaber: Elmos Semiconductor SE, 51379 Leverkusen (DE)
(72) Erfinder: Kreiß, Dennis, 44227 Dortmund (DE)
(74) Vertreter: dompatent

(56) Entgegenhaltungen:
- DE-A1- 102021 121 157
- US-A1- 2022 110 018
- US-A1- 2022 128 352

## Beschreibung

### Technisches Gebiet

Die vorliegende Erfindung betrifft einen Ultraschallsensor sowie ein Verfahren zur Durchführung einer Ultraschallmessung. Zudem betrifft die vorliegende Erfindung ein Rechnersystem zur Steuerung eines Ultraschallsensors, ein System für die Durchführung einer Ultraschallmessung, ein Fahrzeug umfassend einen Ultraschallsensor, ein Verfahren zur Steuerung eines Ultraschallsensors unter Verwendung eines Rechnersystems, ein Verfahren für die Durchführung einer Ultraschallmessung unter Verwendung eines Ultraschallsensors und eines Rechensystems sowie ein Computerprogrammprodukt.

### Allgemeine Einleitung

Moderne ADAS Systeme ("Advanced Driver Assistance Systems" - Fahrerassistenzsysteme, insbesondere für das autonome Fahren) setzen in modernen Fahrzeugen Ultraschallsensoren bevorzugt für automatische Einparkhilfen ein. In letzter Zeit zeigt der Markt eine immer klarere Tendenz zu erhöhten Datenraten, die Systeme wie LIN-Datenbusse und/oder andere Datenbusse in Zukunft nicht mehr erbringen können.

Ziel der hier in diesem Dokument offengelegten technischen Lehre ist eine effizientere, schnellere und sicherere und flexiblere Datenkommunikation zwischen dem jeweiligen Ultraschallsensor und dem Rechnersystem (häufig auch als ein gegenüber dem Ultraschallsensor übergeordnetes Rechnersystem ausgeführt). Marktteilnehmer bezeichnen das übergeordnete Rechnersystem auch als Steuergerät. Eine schnellere Datenkommunikation ermöglicht schnellere Ultraschall-Messsequenzen und mehr Daten, die das übergeordnete Rechnersystem auswerten kann. Eine höhere Datenrate kann so zu einer Steigerung der Systemperformance führen.

Stand der Technik sind die IO-Kommunikationsprotokolle, wie sie derzeit beispielsweise Produkte wie die Typen 524.09 / 524.33 der Firma Elmos und ähnlichen Produkten anderer Hersteller verwenden.

In der Anfangsphase der automobilen Ultraschallsensorik war das Eingabe- / Ausgabeprotokoll ein reines Protokoll, welches nur eine zeitliche Information (Zeit bis zu den erkannten Echos) bereitstellte. Diverse Status-Informationen, die der Ultraschallsensor nach der Ultraschallmessung überträgt, ergänzen in den Nachfolge-Produkten dieses Protokoll. Der Stand der Technik verwendet zur Konfiguration ein einfaches proprietäres Protokoll verwendet, dessen logische '0' und '1' durch unterschiedlich lange Low-Phasen gekennzeichnet sind. Nachteile dieser Eingabe-/Ausgabekommunikation sind die eher niedrige Datenrate und der geringe Informationsgehalt der Messdaten, die nur die zeitliche Information eines empfangenen Echos übertragen.

Neben der Eingabe-/Ausgabekommunikation gibt es auch andere Schnittstellenprotokolle. Solche beispielhaften anderen Schnittstellenprotokolle sind derzeit beispielsweise das LIN-Protokoll und das DSI3-Protokoll, die Marktteilnehmer im Markt für diese Zwecke nutzen. Diese Protokolle führen allerdings auch zu deutlichen höheren IC- und Systemkosten. Die hier vorgelegte technische Lehre will hier Abhilfe schaffen ohne die obigen Nachteile in Kauf nehmen zu müssen.

Das hier vorgelegte Dokument verweist insbesondere auf die Schriften WO 2020 182 963 A2, WO 2018 210 966 A1 und die Schriften der entsprechenden Patentfamilie, die sich mit der Kompression und der Datenübertragung befassen. Die technische Lehre dieser Schriften löst das hier diskutierte Problem nicht.

Zudem ist in der DE 10 2021 121 157 A1 ein Verfahren für ein Ultraschallsensorsystem beschrieben. Bei diesem Verfahren werden Abstandswerte auf Basis von Ultraschallechos ermittelt. Bei diesem Verfahren werden Lösungen mittels eines Trilaterationsverfahrens aus den Abstandswerten ermittelt und mittels eines Kalman-Filterverfahrens jeder dieser Lösungen zu gefilterten Lösungen gefiltert und mittels eines Clustering-Verfahrens die gefilterten Lösungen zu akzeptierten Lösungen geclustert und nicht akzeptierte gefilterte Lösungen verworfen.

Ferner ist aus der DE 10 2021 121 156 A1 ein Verfahren für ein Ultraschallsensorsystem bekannt, bei dem das Verfahren des Ultraschallsensorsystems Abstandswerte auf Basis Ultraschallechos, die mindestens vier Ultraschallsensoren erfassen, ermittelt. Das Verfahren des in der DE 10 2021 121 156 A1 beschriebenen Ultraschallsensorsystems ermittelt Lösungen mittels eines Trilaterationsverfahrens aus den Abstandswerten. Das Verfahren gemäß der DE 10 2021 121 156 A1 filtert mittels eines jeweiligen Kalman-Filterverfahrens jede dieser Lösungen zu gefilterten Lösungen und clustert mittels eines Clustering-Verfahrens diese gefilterten Lösungen zu akzeptierten Lösungen und verwirft nicht akzeptierte gefilterte Lösungen.

In der Schrift Pepperl+Fuchs: UCC****-50GK-B26 Series Ultrasonic Sensors. Manual. 2020-01. URL: http://files.pepperl-fuchs.com/webcat/navi/productinfo/doct/tdoct6155a eng.pdf sind kommerzielle Ultraschallsensoren beschrieben, die dazu ausgelegt sind, unter Verwendung des Puls-Echo-Prinzips Objekte zu detektieren. Die beschriebenen Sensoren sind in der Lage, feste, flüssige oder pulverförmige Objekte zu erkennen.

Schließlich ist in der DE 10 2012 017 368 A1 ein Verfahren zur Kommunikation zwischen einem Sensor, insbesondere einem Ultraschallsensor, und einem Steuergerät in einem Kraftfahrzeug beschrieben, wobei zwischen dem Sensor und dem Steuergerät Informationen übermittelt werden. Gemäß der DE 10 2012 017 368 A1 wird von dem Steuergerät an den Sensor ein Triggerimpuls übertragen, mittels welchem der Sensor zur Einleitung eines Messvorgangs angesteuert wird. Gemäß der technischen Lehre der DE 10 2012 017 368 A1 wird dabei von dem Steuergerät an den Sensor ein von dem Triggerimpuls separater Codepuls übertragen, anhand dessen dem Sensor eine Information über einen bei dem Messvorgang auf ein Sensorsignal anzuwendenden Code übermittelt wird.

Die vorliegende Erfindung verfolgt daher einen neuen, disruptiven Ansatz, der die Weiterentwicklung der bisherigen technischen Lehre an einem wesentlichen Punkt unterbricht und neu aufsetzt.

### Aufgabe der Erfindung

Der vorliegenden Erfindung liegt daher die Aufgabe zugrunde, eine Lösung zu schaffen, die die obigen Nachteile des Stands der Technik beseitigt oder zumindest reduziert und zusätzliche Vorteile hinsichtlich einer effizienten, sicheren und flexiblen Übertragung von Daten während einer Ultraschallmessung aufweist. Diese Aufgabe wird durch die technische Lehre der unabhängigen Ansprüche gelöst. Weitere vorteilhafte Ausgestaltungen der Erfindung sind in den Unteransprüchen definiert.

### Lösung der Aufgabe

Zur Lösung der vorstehend genannten Aufgabe wird mit der vorliegenden Erfindung ein Ultraschallsensor vorgeschlagen, wobei der Ultraschallsensor dazu eingerichtet ist,
- mit einem Rechnersystem mittels eines UART-Protokolls über eine UART-Datenschnittstelle des Ultraschallsensors zu kommunizieren, und
- ein Verfahren für die Kommunikation mit dem Rechnersystem mittels des UART-Protokolls durchzuführen, und
- das Verfahren in zeitlich aufeinanderfolgenden und zeitlich nicht überlappenden Ultraschallmesszyklen durchzuführen und
- den jeweiligen aktuellen Ultraschallmesszyklus in mindestens drei zeitlich einander nachfolgenden Phasen, das heißt in einer ersten Phase, einer zweiten Phase und einer dritten Phase durchzuführen und,
- den Ultraschallmesszyklus zu Beginn der ersten Phase des Ultraschallmesszyklus, zu starten, und
- in der ersten Phase zumindest ein Kommando von dem Rechnersystem zu empfangen, in dem Informationen darüber gespeichert sind, welche Art von Messung der Ultraschallsensor in einem Ultraschallmesszyklus, in der zweiten Phase des aktuellen Ultraschallmesszyklus, durchführen soll, und
- einen Ultraschallburst oder ein Ultraschallsignal zu Beginn der zweiten Phase, auszusenden, wobei die Eigenschaften des Ultraschallbursts bzw. des Ultraschallsignals von einem von dem Rechnersystem innerhalb der ersten Phase empfangenen Kommando abhängen, und
- in der ersten Phase mit dem Rechnersystem mittels UART-Protokoll zu kommunizieren und in der zweiten Phase unter Verwendung eines vom UART-Protokoll verschiedenen Kommunikationsprotokolls zu kommunizieren, und
- das Signal der UART-Datenschnittstelle des Ultraschallsensors während der zweiten Phase auf einen ersten logischen Wert zu legen, wenn der Ultraschallsensor ein Echo detektiert, und das Signal der UART-Datenschnittstelle während der zweiten Phase auf einen zweiten logischen Wert zu legen, wenn der Ultraschallsensor kein Echo detektiert, wobei sich der erste logische Wert vom zweiten logischen Wert unterscheidet, und
- die zweite Phase nach einem vordefinierten Zeitpunkt und/oder bei Vorliegen einer vordefinierten Bedingung zu beenden und die dritte Phase des Ultraschallmesszyklus zu beginnen, und
- in der dritten Phase des Ultraschallmesszyklus mittels UART-Protokoll Daten bis an das Rechnersystem zu übertragen.

Der erfindungsgemäße Ultraschallsensor erlaubt es besonders effiziente und gleichzeitig flexible Kommunikation mit dem Rechnersystem, indem in der ersten Phase und der dritten Phase die Kommunikation mit dem Rechnersystem mittels UART-Protokoll erfolgt und in der zweiten Phase eine Kommunikation mit einem vom UART verschiedenen Protokoll stattfindet. Auf diese Art kann in der ersten Phase (auch als Kommandophase oder Initiierungsphase bezeichnet) sowie der dritten Phase (auch als Endphase oder als Statusübermittlungsphase bezeichnet) eine besonders effiziente Kommunikation ermöglicht werden, während in der zweiten Phase (auch als Messphase bezeichnet) eine vom UART-Protokoll unabhängige Kommunikation ermöglicht wird, wodurch eine besonders flexible Kommunikation mit dem Rechnersystem erlaubt wird. In der zweiten Phase stehen für die Kommunikation mit dem Rechnersystem mehrere Freiheitsgrade zur Verfügung. Beispielsweise kann in der zweiten Phase die Pulsdauer variabel eingestellt werden, sodass zusätzliche Informationen über ein durch den Ultraschallsensor generiertes Echosignal übermittelt werden. Zudem erlaubt es die vorliegende Erfindung, eine effiziente Übermittlung von Kommandoinformationen an den Ultraschallsensor, durch die dem Ultraschallsensor Details zu der in der zweiten Phase durchzuführenden Messung bereitgestellt werden. Somit können in besonders effizienter Weise (je nach Anwendungsfall) die bevorzugten Parameter einer Ultraschallmessung eingestellt werden. Zudem erlaubt es die vorliegende Erfindung, in der dritten Phase zusätzliche Daten an das Rechnersystem zu übermitteln, welche anschließend durch das Rechnersystem ausgewertet werden können, um beispielsweise zuverlässiger bewerten zu können, ob die übermittelten Messdaten verlässlich sind.

Das Rechnersystem, mit dem der Ultraschallsensor kommuniziert, kann als eine übergeordnetes Rechnersystem ausgeführt sein, das wiederum für die Kommunikation bzw. für die Steuerung eines untergeordneten Ultraschallsensors oder mehrerer untergeordneter Ultraschallsensoren ausgebildet ist. Das Rechnersystem kann insofern als eine Mastereinheit ausgeführt sein, während der Ultraschallsensor bzw. mehrere Ultraschallsensoren als eine oder mehrere Slave-Einheiten ausgeführt sind. Das Rechnersystem kann zudem als ein Remote-Server ausgebildet sein, wobei der Ultraschallsensor über einen drahtgebundenen oder einen drahtlosen Kommunikationskanal mit dem Rechnersystem kommunizieren kann. Dadurch wird es ermöglicht, dass ein Fahrzeughersteller den Ultraschallsensor aus der Ferne ansteuern kann und insbesondere relevante Daten des Ultraschallsensors bei Bedarf auslesen kann. Auch wird dadurch eine Aktualisierung der Konfigurationsdaten eines Ultraschallsensors vereinfacht. Insbesondere, wenn der Ultraschallsensor mit einer drahtlosen Kommunikationsschnittstelle versehen ist, kann der Hersteller in beliebigen Zeitabständen die Konfigurationsdaten des Ultraschallsensors aktualisieren oder Statusinformationen auslesen, um somit die Zuverlässigkeit des Ultraschallsensors zu überprüfen. Die Aktualisierung der Konfigurationsdaten und die Überprüfung der Zuverlässigkeit kann sogar erfolgen, ohne dass ein Fahrzeug in die Werkstatt gebracht wird. Hierfür kann vorgesehen sein, dass der Ultraschallsensor über eine Mobilfunkschnittstelle (beispielsweise LTE oder 5G) verfügt, über die der Ultraschallsensor (direkt oder mittelbar über eine zwischen dem Ultraschallsensor und dem Rechnersystem vorgesehene Kommunikationseinheit) kommunizieren kann.

Bevorzugt kann vorgesehen sein,
- dass der Ultraschallsensor dazu eingerichtet ist, das Signal der UART-Datenschnittstelle des Ultraschallsensors während der zweiten Phase für eine vordefinierte Pulszeitdauer auf den ersten logischen Wert zu setzen, wenn der Ultraschallsensor ein Echo detektiert, und das Signal der UART-Datenschnittstelle ansonsten während der zweiten Phase auf einen zweiten logischen Wert zu setzen, wenn der Ultraschallsensor kein Echo detektiert.

Dadurch kann dem Rechnersystem in einer effizienten Weise ein durch den Ultraschallsensor detektierte Echo signalisiert werden.

Auch kann vorgesehen sein,
- dass die Pulszeitdauer von einem Parameter des detektierten Echos abhängt.

Dadurch können zusätzliche Informationen über die Eigenschaften des Echos an das Rechnersystem übermittelt werden, wobei das Rechnersystem die zusätzlichen Informationen auswerten kann, um beispielsweise die Aussagekraft einer Messung zu validieren.

Bevorzugt hängt dabei
- die Pulszeitdauer von der Amplitude eines durch den Ultraschallsensor erzeugten Echosignals ab.

Dadurch kann eine Pulsdauermodulation verwendet werden, um die Amplitude des Echosignals zu kodieren und zusätzliche Informationen zu der Amplitude des Echosignals an das Rechnersystem zu übermittelt. Auf diese Weise kann das Rechnersystem zusätzlich bewerten, ob es sich bei der Echodetektion um eine zuverlässige Detektion handelt (beispielsweise weil die Amplitude größer ist als ein vorgegebener Schwellwert), oder ob die Detektion eher als weniger zuverlässig zu bewerten ist (beispielsweise da die Amplitude kleiner ist als ein vorgegebener Schwellwert).

Ferner kann vorgesehen sein,
- dass die Daten die der Ultraschallsensor in der dritten Phase des Ultraschallmesszyklus an das Rechnersystem überträgt, ein oder mehrere der folgenden Daten umfassen:
   - Statusinformationen, die Messwerte physikalischer Parameter des Ultraschallsensors wiedergeben, und/oder
   - Statusinformationen, die logische Werte logischer Schaltnetzwerke innerhalb des Ultraschallsensors wiedergeben, und/oder
   - Statusinformationen, die Ergebnisse von Selbsttests des Ultraschallsensors wiedergeben, und/oder
   - Statusinformationen, die Messwerte der Ultraschallübertragungsstrecke des Ultraschallsensors wiedergeben, in die der Ultraschallsensor Ultraschallsignale hineinsendet und/oder aus der der Ultraschallsensor Ultraschallsignale empfängt, und/oder
   - Statusinformationen, die angeben, welche Art von Ultraschallburst und/oder Ultraschallsignal der Ultraschallsensor in der unmittelbar vorausgehenden Ultraschallmessphase ausgesendet haben will, und/oder
   - Statusinformationen, die Werte des Ultraschallbursts und/oder Ultraschallsignals des Ultraschallsensors angeben, den der Ultraschallsensor in der unmittelbar vorausgehenden zweiten Phase ausgesendet haben will, und/oder
   - Informationen, die Werte des Ultraschallbursts und/oder Ultraschallsignals angeben, den der Ultraschallsensor in der unmittelbar vorausgehenden zweiten Phase empfangen haben will, und/oder
   - Echoinformationen, die Messwerte der in der zweiten Phase empfangenen Echos wiedergeben, und/oder
   - Echoinformationen, die Messwerte der in der zweiten Phase empfangenen Echos wiedergeben, wobei diese Messwerte insbesondere
   - die Nummer des Echos und/oder
   - die Amplitude des Echos und/oder
   - den Zeitpunkt des Empfangs des Echos und/oder
   - einen Vertrauenswert für die Wahrscheinlichkeit, dass das Echo tatsächlich ein Echo eines Objekts in der Ultraschallübertragungsstrecke des Ultraschallsensors ist, in die der Ultraschallsensor Ultraschallsignale hineinsendet, und/oder aus der der Ultraschallsensor Ultraschallsignale empfängt, umfassen und/oder
   - Kommandoinformationen, die angeben, welche Kommandos bzw. welches Kommando der Ultraschallsensor in einer der vorausgehenden ersten Phasen und/oder in der unmittelbar vorausgehenden ersten Phase empfangen hat, und/oder
   - Kommandoinformationen, die angeben, welche Kommandos bzw. welches Kommando der Ultraschallsensor in einer der vorausgehenden ersten Phasen und/oder in der unmittelbar vorausgehenden ersten Phase empfangen hat und die bestimmt haben, welche Art von Ultraschallburst bzw. Ultraschallsignal der Ultraschallsensor ausgesendet hat, und/oder
   - Prüfinformationen der in der dritten Phase des Ultraschallmesszyklus übertragenen Daten, insbesondere CRC-Daten, wobei das Rechnersystem diese Prüfinformationen prüfen kann, um den ordnungsgemäßen Empfang der Daten zu prüfen, die der Ultraschallsensor an das Rechnersystem in der dritten Phase des Ultraschallmesszyklus überträgt, und/oder
   - Prüfinformationen der in der zweiten Phase signalisierten Informationen, wobei das Rechnersystem diese Prüfinformationen prüfen kann, um den ordnungsgemäßen Empfang der in der zweiten Phase signalisierten Informationen zu prüfen, und/oder
   - Prüfinformationen der in der ersten Phase von dem Rechnersystem signalisierten Kommandos, wobei das Rechnersystem diese Prüfinformationen prüfen kann, um den ordnungsgemäßen Empfang der in der in der ersten Phase signalisierten Kommandos durch den Ultraschallsensor zu prüfen, und/oder
   - Prüfinformationen der in der ersten Phase signalisierten Kommandos, die angeben, ob der Ultraschallsensor bei der Übertragung eines oder mehrerer Kommandos vom Rechnersystem an den Ultraschallsensor in der ersten Phase einen Fehler erkannt hat, und/oder
   - Prüfinformationen, die die Ergebnisse von Selbsttests oder Tests des Ultraschallsensors wiedergeben, und/oder
   - Längeninformationen, die angeben oder die es ermöglichen zu berechnen, wie viele Daten der Ultraschallsensor in der dritten Phase des Ultraschallmesszyklus an das Rechensystem übertragen hat, und/oder
   - wobei der Ultraschallsensor dazu eingerichtet ist, ein Empfangssignals eines Ultraschalltransducers des Ultraschallsensors bzw. eines Ultraschallempfängers des Ultraschallsensors in Abhängigkeit von einem akustischen Ultraschallsignal, das der Ultraschallsensor empfängt, zu bilden.

Durch die Bereitstellung der zusätzlichen Informationen in der dritten Phase kann eine signifikante Verbesserung der Ultraschallmessung erreicht werden. Einerseits können die übermittelten Statusinformationen zusätzliche Informationen bereitstellen, die insbesondere eine Bewertung der Zuverlässigkeit der durchgeführten Messung ermöglichen. Zudem ermöglichen die zusätzlich übermittelten Daten eine verbesserte Messung, da der Ultraschallsensor an das Rechnersystem ein unmittelbares Feedback liefert, durch welches die nachfolgende Messung in Abhängigkeit der vorherigen Messung adaptiert werden kann.

Darüber hinaus kann vorgesehen sein,
- dass der Ultraschallsensor dazu eingerichtet ist, ein Synchronisationssignal zur Synchronisation der UART-Taktfrequenz eines Teilnehmers der UART-Kommunikation über die UART-Datenschnittstelle zu übermitteln.

Auch kann vorgesehen sein,
- dass der Ultraschallsensor einen Systemtakt und/oder einen UART-Systemtakt der UART-Datenschnittstelle aufweist und
- wobei der Ultraschallsensor Parameter des Systemtakts und/oder des UART-Systemtakts in Abhängigkeit von einem dem Ultraschallsensor übermittelten Synchronisationssignal zur Synchronisation der UART-Taktfrequenz ändert.

Des Weiteren kann vorgesehen sein,
- dass der Ultraschallsensor dazu eingerichtet ist, eines oder mehrere Kommandos in der ersten Phase zu empfangen und auszuführen, wobei das Kommando eines oder mehrere der folgenden Kommandos und/oder Unterkommandos umfasst:
   - eine Synchronisationsinformation zur Synchronisation eines Systemtakts des Ultraschallsensors und/oder eines UART-Takts der UART-Datenschnittstelle, und/oder
   - eine Längeninformation, die angibt welche Länge das Kommando hat und/oder wie viele Kommandodaten das Kommando umfasst, und/oder
   - eine Prüfinformation, insbesondere ein Prüfbit und/oder einen Prüfwert, wie insbesondere eine CRC-Check-Summe, des Kommandos und/oder mehrerer Kommandos, und/oder
   - die Anzahl der Unterkommandos, die das gesamte Kommando bilden, und/oder
   - ein Kommando bzw. Unterkommando, dass der Ultraschallsensor die Messung in der zweiten Phase in der Art, wie der Ultraschallsensors sie bei der letzten Messung in der zweiten Phase des vergangenen Ultraschallmesszyklus durchgeführt hat, wiederholt durchführen soll, und/oder
   - ein Kommando bzw. Unterkommando, dass der Ultraschallsensor eine Messung in der zweiten Phase in der Art, wie der Ultraschallsensors sie bei einer vorausgegangenen Messung in einer zweiten Phase eines vorausgegangenen Ultraschallmesszyklus durchgeführt hat, wiederholt durchführen soll, und/oder
   - ein Kommando bzw. Unterkommando, dass der Ultraschallsensor die Messung in einer nachfolgenden zweiten Phase entsprechend einer vorgegeben und dem Ultraschallsensor bekannten Form durchführen soll, und/oder
   - ein Kommando bzw. Unterkommando, dass der Ultraschallsensor die Messung in der unmittelbar der vorliegenden ersten Phase nachfolgenden zweiten Phase entsprechend einer vorgegeben und dem Ultraschallsensor bekannten Form durchführen soll, und/oder
   - ein Kommando bzw. Unterkommando, dass der Ultraschallsensor die Messung in einer zweiten Phase mit einem Ultraschallburst ausführen soll, der einen Chirp entsprechend einer zuvor durchgeführten Chirp-Richtung in einem zuvor durchgeführten Ultraschallmesszyklus zeigen soll, und/oder
   - ein Kommando bzw. Unterkommando, dass der Ultraschallsensor die Messung in der unmittelbar nachfolgenden zweiten Phase mit einem Ultraschallburst ausführen soll, der einen Chirp entsprechend dem zuletzt unmittelbar zuvor durchgeführten Chirp-Richtung im unmittelbar zuvor durchgeführten Ultraschallmesszyklus zeigen soll, und/oder
   - ein Kommando bzw. Unterkommando, dass der Ultraschallsensor die Messung in einer nachfolgenden Ultraschallmessphase mit einem Ultraschallburst ausführen soll, der einen Chirp entgegen einer zuvor durchgeführten Chirp-Richtung in einem zuvor durchgeführten Ultraschallmesszyklus zeigen soll, und/oder
   - ein Kommando bzw. Unterkommando, dass der Ultraschallsensor die Messung in der unmittelbar nachfolgenden zweiten Phase mit einem Ultraschallburst ausführen soll, der einen Chirp entgegen dem zuletzt unmittelbar zuvor durchgeführten Chirp-Richtung im unmittelbar zuvor durchgeführten Ultraschallmesszyklus zeigen soll, und/oder
   - ein Kommando bzw. Unterkommando, dass der Ultraschallsensor die Messung in einer nachfolgenden zweiten Phase mit einem Ultraschallburst ausführen soll, der einen Chirp-down zeigen soll, und/oder
   - ein Kommando bzw. Unterkommando, dass der Ultraschallsensor die Messung in der unmittelbar nachfolgenden zweiten Phase mit einem Ultraschallburst ausführen soll, der einen Chirp-down zeigen soll, und/oder
   - ein Kommando bzw. Unterkommando, dass der Ultraschallsensor die Messung in einer nachfolgenden zweiten Phase mit einem Ultraschallburst ausführen soll, der einen Chirp-up zeigen soll, und/oder
   - ein Kommando bzw. Unterkommando, dass der Ultraschallsensor die Messung in der unmittelbar nachfolgenden zweiten Phase mit einem Ultraschallburst ausführen soll, der einen Chirp-up zeigen soll, und/oder
   - ein Kommando bzw. Unterkommando, dass der Ultraschallsensor die Messung in einer nachfolgenden zweiten Phase mit einem Ultraschallburst ausführen soll, der eine vorbestimmte Frequenz zeigen soll, und/oder
   - ein Kommando bzw. Unterkommando, dass der Ultraschallsensor die Messung in der unmittelbar nachfolgenden zweiten Phase mit einem Ultraschallburst ausführen soll, der eine vorbestimmte Frequenz zeigen soll, und/oder
   - ein Kommando bzw. Unterkommando, dass der Ultraschallsensor die Messung in einer nachfolgenden zweiten Phase mit einem Ultraschallburst ausführen soll, der eine vorbestimmte oder übermittelte Startfrequenz zeigen soll, und/oder
   - ein Kommando bzw. Unterkommando, dass der Ultraschallsensor die Messung in der unmittelbar nachfolgenden zweiten Phase mit einem Ultraschallburst ausführen soll, der eine vorbestimmte oder übermittelte Startfrequenz zeigen soll, und/oder
   - ein Kommando bzw. Unterkommando, dass der Ultraschallsensor die Messung in einer nachfolgenden zweiten Phase mit einem Ultraschallburst ausführen soll, der eine vorbestimmte oder übermittelte Endfrequenz zeigen soll, und/oder
   - ein Kommando bzw. Unterkommando, dass der Ultraschallsensor die Messung in der unmittelbar nachfolgenden zweiten Phase mit einem Ultraschallburst ausführen soll, der eine vorbestimmte oder übermittelte Endfrequenz zeigen soll, und/oder
   - ein Kommando bzw. Unterkommando, dass der Ultraschallsensor die Messung in einer nachfolgenden zweiten Phase mit einem Ultraschallburst ausführen soll, der eine vorbestimmte Anzahl an Ultraschallpulsen aufweisen soll, und/oder
   - ein Kommando bzw. Unterkommando, dass der Ultraschallsensor die Messung in der unmittelbar nachfolgenden zweiten Phase mit einem Ultraschallburst ausführen soll, der eine vorbestimmte Anzahl an Ultraschallpulsen aufweisen soll, und/oder
   - ein Kommando bzw. Unterkommando, dass der Ultraschallsensor die Messung in einer oder mehreren nachfolgenden zweiten Phase mit mehreren aufeinanderfolgenden Ultraschallbursts ausführen soll, der die jeder für sich eine vorbestimmte Anzahl an Ultraschallpulsen aufweisen sollen, und/oder
   - ein Kommando oder Unterkommando, das dem Ultraschallsensor signalisiert, dass in n nachfolgenden Ultraschallmesszyklen, insbesondere durch das Rechnersystem, die Kommandophase übersprungen werden soll, wobei n eine ganze positive Zahl größer gleich 0 ist, und/oder
   - ein Kommando bzw. Unterkommando, dass signalisiert, dass die eigentlich nachfolgende zweiten Phase dieses Ultraschallmesszyklus nicht ausgeführt wird, und/oder
   - ein Kommando bzw. Unterkommando, dass signalisiert, dass die eigentlich nachfolgende dritte Phase des Ultraschallmesszyklus nicht ausgeführt wird, und/oder
   - ein Kommando bzw. Unterkommando, dass ein oder mehrere der vorstehenden Unterkommandos inhaltlich und/oder in ihrer Wirkung umfasst, und/oder
   - ein Kommando, dass die UART-Kommunikation für einen vorbestimmten Zeitraum und/oder bis zum Auftreten eines Rückschaltsignals in der Datenkommunikation auf ein anderes Kommunikationsprotokoll für die Kommunikation zwischen einem Ultraschallsensor und dem Rechnersystem umstellt.

Bevorzugt kann vorgesehen sein, dass der Ultraschallsensor dazu eingerichtet ist, ein Kommando oder ein Unterkommando in Form eines XML-Codes zu empfangen. Der Einsatz von XML-Codes bietet einen erleichterten Austausch der Daten zwischen dem Rechnersystem und dem Ultraschallsensor. Der XML-Code ist textbasiert und einfach auszulesen, wodurch insbesondere Konfigurationsparameter in einer effizienten Weise übermittelt werden können. Zudem bietet die Verwendung von XML-Codes den Vorteil einer zusätzlichen Datenvalidierung, da XML-Codes mit Hilfe von Dokumenttypdefinitionen (DTD) oder XML-Schemas validiert werden können. Dadurch wird sichergestellt, dass die XML-Daten bestimmten Regeln und Strukturen entsprechen, wodurch die Datenintegrität und die Fehlererkennung verbessert werden.

Ferner kann bei der vorliegenden Erfindung vorgesehen sein,
- dass der Ultraschallsensor dazu eingerichtet ist, die Ultraschallburst bzw. das Ultraschallsignal zu Beginn der zweiten Phase entsprechend einem zuvor empfangenen Kommando und/oder Unterkommando auszusenden, und
- wobei der Ultraschallsensor dazu eingerichtet ist, ein reflektiertes Ultraschallsignal bzw. einen reflektierten Ultraschallburst in ein Empfangssignal in der zweiten Phase zu wandeln und zu empfangen, und
- wobei der Ultraschallsensor dazu eingerichtet ist, ein Hüllkurvensignal aus dem Empfangssignal in der zweiten Phase zu bilden, und
- wobei der Ultraschallsensor dazu eingerichtet ist, das Hüllkurvensignal in der zweiten Phase nach der Aussendung des Ultraschallbursts bzw. Ultraschallsignals zu vermessen und eine Messwertfolge zu ermitteln und
- wobei der Ultraschallsensor dazu eingerichtet ist, aus der Messwertfolge ein oder mehrerer Symbole für ein oder mehrere erkannte Signalobjekte mit jeweils zugehörigen Signalobjektparametern im Hüllkurvensignal zu ermitteln, und
- wobei der Ultraschallsensor dazu eingerichtet ist, solche Symbole für erkannte Signalobjekte und/oder die Parameter dieser Signalobjekte in der dritten Phase des Ultraschallmesszyklus an das Rechnersystem zu übermitteln.

Bevorzugt kann dabei vorgesehen sein,
- dass der Ultraschallsensor dazu eingerichtet ist, den Ultraschallburst bzw. das besagte Ultraschallsignal zu Beginn der zweiten Phase entsprechend einem zuvor empfangenen Kommando auszusenden, und
- wobei der Ultraschallsensor dazu eingerichtet ist, ein reflektiertes Ultraschallsignal bzw. einen reflektierten Ultraschallburst in ein Empfangssignal in der zweiten Phase zu wandeln und zu empfangen, und
- wobei der Ultraschallsensor dazu eingerichtet ist, ein Hüllkurvensignal aus dem Empfangssignal in der zweiten Phase zu bilden, und
- wobei der Ultraschallsensor dazu eingerichtet ist, das Hüllkurvensignal in der zweiten Phase nach der Aussendung des Ultraschallbursts bzw. Ultraschallsignals zu vermessen und Messwerte des Hüllkurvensignals in der zweiten Phase zu ermitteln, und
- wobei der Ultraschallsensor dazu eingerichtet ist,
   - das Eintreffen eines Echos beim Ultraschallsensor an das Rechnersystem in der zweiten Phase zu signalisieren, wenn der Werteverlauf des Hüllkurvensignals den Momentanwert einer Schwellwertkurve in eine erste Richtung kreuzt, und/oder
   - das zeitliche Ende des Eintreffens eines Echos beim Ultraschallsensor an das Rechnersystem in der zweiten Phase zu signalisieren, wenn der Werteverlauf des Hüllkurvensignals den Momentanwert einer Schwellwertkurve in eine der ersten Richtung entgegengesetzte zweite Richtung kreuzt.

Insbesondere kann bei der vorliegenden Erfindung vorgesehen sein,
- dass der Ultraschallsensor dazu eingerichtet ist, das Eintreffen von Echos beim Ultraschallsensor an das Rechnersystem in der zweiten Phase synchron zu einem Systemtakt des Ultraschallsensors und/oder synchron zu einem UART-Systemtakt der UART-Datenschnittstelle zu signalisieren.

Auch kann vorgesehen sein,
- dass der Ultraschallsensor dazu eingerichtet ist, Diagnosedaten wie z.B. HW-Fehler einer mikroelektronischen Schaltung oder anderer Vorrichtungsteile des Ultraschallsensors und andere Diagnose-Fehler des Ultraschallsensors an das Rechnersystem in der dritten Phase des Ultraschallmesszyklus zu signalisieren.

Bei der vorliegenden Erfindung kann es ferner vorgesehen sein,
- dass der Ultraschallsensor dazu eingerichtet ist, ermittelte Werte von bis zu vier Echos als Daten in der dritten Phase des Ultraschallmesszyklus vom Ultraschallsensor an das Rechnersystem zu signalisieren,
- wobei es sich bei den übertragenen ermittelten Werten insbesondere um die Echo-Höhe und/oder die zeitliche Echo-Position bezogen auf das Startsignal oder dergleichen handeln kann.

Darüber hinaus kann es vorgesehen sein,
- dass der Ultraschallsensor dazu eingerichtet ist, den Beginn der zweiten Phase innerhalb der zweiten Phase mit einem ersten Puls zu signalisieren, und
- wobei der Ultraschallsensor dazu eingerichtet ist, den Beginn der eigentlichen Messphase in der zweiten Phase mit einem zweiten Puls zu signalisieren;
- wobei der Ultraschallsensor dazu eingerichtet ist, den zeitlichen Abstand zwischen dem ersten Puls und dem zweiten Puls zu signalisieren,
- wobei der zeitliche Abstand zwischen dem ersten Puls und dem zweiten Puls bevorzugt auf einen Fehler des Ultraschallsensors hindeutet, wenn der Wert dieses zeitlichen Abstands nicht in einem Erwartungswertintervall für den Wert dieses zeitlichen Abstands liegt.

Weiterhin kann vorgesehen sein,
- dass der Ultraschallsensor dazu eingerichtet ist, zumindest Teile der Daten in der dritten Phase verschlüsselt an das Rechensystem zu übertragen und/oder zumindest Teile der Kommandos in der ersten Phase verschlüsselt von dem Rechnersystem zu empfangen, wobei die Verschlüsselung bevorzugt unter Verwendung eines true-random number Zufallsgenerators, eines Quanten-Zufallsgenerators, eines Quantum Key Distribution Verfahrens oder einem Post-Quanten-Krypthographie-Verfahrens. Dadurch kann die Sicherheit hinsichtlich der Übertragung der relevanten Daten signifikant erhöht werden. Für die Verschlüsselung der Daten bzw. der Kommandos können beispielsweise Verfahren zum Einsatz kommen, die in der DE 10 2022 125 568 A1, DE 10 2021 128 004 A1, WO 2023/072329 A1 und DE 10 2022 128 216 A1 beschrieben wurden.

Schließlich kann bei der erfindungsgemäßen Ultraschallsensor vorgesehen sein,
- dass der Ultraschallsensor dazu eingerichtet ist, innerhalb der ersten Phase von dem Rechnersystem einen ausführbaren Code zu empfangen, der durch den Ultraschallsensor (405) ausgeführt werden kann,
- wobei der ausführbare Code bevorzugt mehrere Programmsequenzen aufweist, die durch den Ultraschallsensor nacheinander ausgeführt werden können, und
- wobei der ausführbare Code bevorzugt mindestens eine Verzweigung aufweist, wobei mindestens eine Verzweigung in Form einer if-Anweisung, einer if-else-Anweisung, einer switch-Anweisung, einer Abfrage einer Mehrfachbedingung, einer for-Schleife, einer while-Schleife oder einer Sprunganweisung ausgeführt ist.

Zudem wird zur Lösung der vorstehend genannten Aufgabe ein Rechnersystem für die Steuerung eines Ultraschallsensors vorgeschlagen, wobei das Rechnersystem dazu eingerichtet ist,
- mit einem Ultraschallsensor mittels eines UART-Protokolls über eine UART-Datenschnittstelle des Ultraschallsensors zu kommunizieren, und
- ein Verfahren für die Kommunikation mit dem Ultraschallsensor mittels des UART-Protokolls durchzuführen, und
- die Kommunikation mit dem Ultraschallsensor in zeitlich aufeinanderfolgenden und zeitlich nicht überlappenden Ultraschallmesszyklen durchzuführen,
- wobei der jeweilige aktuelle Ultraschallmesszyklus mindestens drei zeitlich einander nachfolgenden Phasen aufweist, also eine erste Phase, eine zweite Phase und eine dritte Phase,
- den Ultraschallmesszyklus zu Beginn der ersten Phase des Ultraschallmesszyklus, zu starten, und
- in der ersten Phase zumindest ein Kommando an den Ultraschallsensor zu senden, wobei in dem Kommando Informationen darüber gespeichert sind, welche Art von Messung der Ultraschallsensor in einem Ultraschallmesszyklus, in der zweiten Phase des aktuellen Ultraschallmesszyklus, durchführen soll, und
- in der ersten Phase mit dem Ultraschallsensor mittels des UART-Protokolls zu kommunizieren und in der zweiten Phase unter Verwendung eines vom UART-Protokoll verschiedenen Kommunikationsprotokolls mit dem Ultraschallsensor zu kommunizieren, und
- die zweite Phase nach einem vordefinierten Zeitpunkt und/oder bei Vorliegen einer vordefinierten Bedingung zu beenden und die dritte Phase des Ultraschallmesszyklus zu beginnen, und
- in der dritten Phase des Ultraschallmesszyklus mittels UART-Protokoll Daten von dem Ultraschallsensor zu empfangen.

Das erfindungsgemäße Rechnersystem kann bevorzugt mit der vorstehend im Zusammenhang mit dem Ultraschallsensor beschriebene Funktionalität versehen sein.

Ferner wird zur Lösung der eingangs beschriebenen Aufgabe ein System für die Durchführung einer Ultraschallmessung umfassend den vorstehend beschriebenen Ultraschallsensor und das vorstehend beschriebene Rechnersystem vorgeschlagen.

Darüber hinaus wir mit der vorliegenden Erfindung ein Fahrzeug vorgeschlagen, das einen der vorstehend beschriebenen Ultraschallsensoren. Dabei kann das Fahrzeug zusätzlich auch das vorstehend beschriebene Rechnersystem aufweisen. Alternativ kann es vorgesehen sein, dass das Rechnersystem nicht als eine integrale Komponente des Fahrzeuges ausgebildet ist, sondern als externe Komponente ausgeführt ist. Diese externe Alternative bietet eine erhöhte Flexibilität bei der Aktualisierung der Steuerungssoftware sowie bei der Aufrüstung der Rechnerleistung. Beispielsweise kann es vorgesehen sein, dass der Ultraschallsensor drahtgebunden mit einem externen Rechnersystem kommunizieren kann. Alternativ kann es vorgesehen sein, dass das Fahrzeug bzw. der Ultraschallsensor über eine drahtlose Schnittstelle mit einem externen Rechnersystem, welches als Remote-Server ausgebildet ist, kommunizieren kann. So können die Daten zwischen dem Ultraschallsensor und dem externen Remote-Server ausgetauscht, welcher beispielsweise die für die Messung erforderlichen Rechenoperationen durchführen kann. So wird die benötigte Rechenleistung aus dem Fahrzeug ausgelagert, wodurch eine deutlich erhöhte Rechenleistung zur Verfügung gestellt werden kann. Zudem erlaubt die Alternative mit dem externen Rechnersystem eine vereinfachte Aktualisierung der Steuersoftware, da hierfür kein Austausch von Daten mit jedem zu aktualisierenden Fahrzeug erforderlich ist, sondern die Aktualisierung stattdessen zentral auf dem Remote-Server erfolgt.

Des Weiteren wird zur Lösung der eingangs beschriebenen Aufgabe ein Verfahren zur Durchführung einer Messung unter Verwendung eines Ultraschallsensors vorgeschlagen, wobei der Ultraschallsensor eine UART-Datenschnittstelle für die Kommunikation mit einem Rechnersystem mittels eines UART-Protokolls aufweist, und das Verfahren die nachfolgenden Schritte aufweist:
- Durchführung von Ultraschallmessungen innerhalb von zeitlich aufeinanderfolgenden und nicht überlappenden Ultraschallmesszyklen mittels des Ultraschallsensors,
- wobei der jeweils aktuelle Ultraschallmesszyklus mindesten drei zeitlich einander nachfolgende Phasen aufweist, also eine erste Phase, eine zweite Phase und eine dritte Phase und,
- Starten eines Ultraschallmesszyklus zu Beginn der ersten Phase des Ultraschallmesszyklus, und
- Empfangen zumindest eines Kommandos in der ersten Phase von dem Rechnersystem durch den Ultraschallsensor, wobei in dem Kommando Informationen darüber gespeichert sind, welche Art von Messung der Ultraschallsensor in einem Ultraschallmesszyklus, in der zweiten Phase des aktuellen Ultraschallmesszyklus, durchführen soll, und
- Aussenden eines Ultraschallburst oder eines Ultraschallsignals durch den Ultraschallsensor zu Beginn der zweiten Phase, wobei die Eigenschaften des Ultraschallbursts bzw. des Ultraschallsignals von einem von dem Rechnersystem innerhalb der ersten Phase empfangenen Kommando abhängen, und
- Kommunikation des Ultraschallsensor mit dem Rechnersystem mittels UART-Protokoll in der ersten Phase sowie unter Verwendung eines vom UART-Protokoll verschiedenen Kommunikationsprotokolls in der zweiten Phase, und
- Setzen eines Signals der UART-Schnittstelle des Ultraschallsensors auf einen ersten logischen Wert, wenn der Ultraschallsensor während der zweiten Phase ein Echo detektiert, und
- Setzen eines Signals der UART-Schnittstelle des Ultraschallsensors auf einen zweiten logischen Wert, wenn der Ultraschallsensor während der zweiten Phase kein Echo detektiert, wobei sich der erste logische Wert vom zweiten logischen Wert unterscheidet, und
- Beenden der zweiten Phase und Starten der dritten Phase des Ultraschallmesszyklus nach einem vordefinierten Zeitpunkt und/oder bei Vorliegen einer vordefinierten Bedingung, und
- Übertragung von Daten von dem Ultraschallsensor an das Rechnersystem in der dritten Phase des Ultraschallmesszyklus mittels UART-Protokoll.

Das erfindungsgemäße Verfahren kann insbesondere als ein computerimplementiertes Verfahren ausgeführt sein, wobei Teile des entsprechenden Computerprogramms in einer Speichereinheit gespeichert sein können. Alternativ kann es auch vorgesehen sein, dass das erfindungsgemäße Verfahren zumindest teilweise hardware-implementiert ausgeführt ist. Dabei können insbesondere logische Schaltkreise verwendet werden, welche für die Durchführung von zumindest einzelnen Verfahrensschritte konfiguriert sind.

Ferner wird zur Lösung der Aufgabe ein Verfahren zur Steuerung eines Ultraschallsensors unter Verwendung eines Rechnersystems vorgeschlagen, wobei das Rechnersystem eine UART-Datenschnittstelle für die Kommunikation mit einem Ultraschallsensor mittels eines UART-Protokolls aufweist, und das Verfahren die nachfolgenden Schritte aufweist:
- Steuerung des Ultraschallsensor innerhalb von zeitlich aufeinanderfolgenden und zeitlich nicht überlappenden Ultraschallmesszyklen,
- Einteilen des jeweils aktuellen Ultraschallmesszyklus in mindesten drei zeitlich einander nachfolgende Phasen, das heißt in eine erste Phase, eine zweite Phase und eine dritte Phase,
- Starten des Ultraschallmesszyklus zu Beginn der ersten Phase des Ultraschallmesszyklus,
- Senden mindestens eines Kommandos von dem Rechnersystem an den Ultraschallsensor in der ersten Phase, wobei in dem Kommando Informationen darüber gespeichert sind, welche Art von Messung der Ultraschallsensorin einem Ultraschallmesszyklus, in der zweiten Phase des aktuellen Ultraschallmesszyklus, durchführen soll,
- Empfangen von Messdaten durch das Rechnersystem von dem Ultraschallsensor in der zweiten Phase,
- wobei die Kommunikation des Rechnersystem mit dem Ultraschallsensor in der ersten Phase mittels UART-Protokoll erfolgt und in der zweiten Phase unter Verwendung eines vom UART-Protokoll verschiedenen Kommunikationsprotokolls erfolgt, und
- Beenden der zweiten Phase nach einem vordefinierten Zeitpunkt und/oder bei Vorliegen einer vordefinierten Bedingung und Starten der dritten Phase des Ultraschallmesszyklus,
- Empfangen von Daten durch das Rechnersystem von dem Ultraschallsensor in der dritten Phase des Ultraschallmesszyklus mittels UART-Protokoll.

Zudem wird zur Lösung der Aufgabe ein Verfahren für die Durchführung einer Ultraschallmessung unter Verwendung eines Ultraschallsensors und eines Rechnersystem vorgeschlagen, wobei der Ultraschallsensor und das Rechnersystem eine UART-Schnittstelle aufweisen und dazu ausgelegt sind, miteinander mittels UART-Protokoll zu kommunizieren, und wobei das Verfahren die nachfolgenden Schritte aufweist:
- Durchführung von Ultraschallmessungen innerhalb von zeitlich aufeinanderfolgenden und nicht überlappenden Ultraschallmesszyklen mittels des Ultraschallsensors,
- wobei der jeweils aktuelle Ultraschallmesszyklus mindesten drei zeitlich einander nachfolgende Phasen aufweist, also eine erste Phase, eine zweite Phase und eine dritte Phase und,
- Starten eines Ultraschallmesszyklus zu Beginn der ersten Phase des Ultraschallmesszyklus, und
- Senden zumindest eines Kommandos in der ersten Phase von dem Rechnersystem an den Ultraschallsensor, wobei in dem Kommando Informationen darüber gespeichert sind, welche Art von Messung der Ultraschallsensor in einem Ultraschallmesszyklus, in der zweiten Phase des aktuellen Ultraschallmesszyklus, durchführen soll, und
- Aussenden eines Ultraschallbursts oder eines Ultraschallsignals durch den Ultraschallsensor zu Beginn der zweiten Phase, wobei die Eigenschaften des Ultraschallbursts bzw. des Ultraschallsignals von einem von dem Rechnersystem innerhalb der ersten Phase empfangenen Kommando abhängen, und
- Kommunikation des Ultraschallsensor mit dem Rechnersystem mittels UART-Protokoll in der ersten Phase sowie unter Verwendung eines vom UART-Protokoll verschiedenen Kommunikationsprotokolls in der zweiten Phase, und
- Setzen eines Signals der UART-Schnittstelle des Ultraschallsensors auf einen ersten logischen Wert, wenn der Ultraschallsensor während der zweiten Phase ein Echo detektiert, und
- Setzen eines Signals der UART-Schnittstell des Ultraschallsensors auf einen zweiten logischen Wert, wenn der Ultraschallsensor während der zweiten Phase kein Echo detektiert, wobei sich der erste logische Wert vom zweiten logischen Wert unterscheidet, und
- Beenden der zweiten Phase und Starten der dritten Phase des Ultraschallmesszyklus nach einem vordefinierten Zeitpunkt und/oder bei Vorliegen einer vordefinierten Bedingung, und
- Übertragung von Daten von dem Ultraschallsensor an das Rechnersystem in der dritten Phase des Ultraschallmesszyklus mittels UART-Protokoll.

Schließlich wird zur Lösung der Aufgabe ein Computerprogrammprodukt vorgeschlagen, das Computeranweisungen aufweist, die von einer Recheneinheit ausführbar sind, wobei die Computeranweisungen bewirken, dass die Recheneinheit die Schritte eines der vorstehend beschriebenen Verfahren durchführt, wenn sie durch die Recheneinheit ausgeführt werden. Eine Grundidee der hier vorgestellten technischen Lehre ist es, dass der Ultraschallsender mittels einer konventionellen UART-Schnittstelle mit dem Rechnersystem (nachfolgend auch als übergeordnetes Rechnersystem bezeichnet) kommuniziert.

Innerhalb einer Ultraschallmesszyklus unterbrechen der Ultraschallsensor und das übergeordnete Rechnersystem die Datenkommunikation vom Ultraschallsender zum übergeordneten Rechnersystem und wechseln für die Dauer der Ultraschallmessphase innerhalb derer die eigentliche Messzeit liegt, in der der Ultraschallsensor Reflexionen des ausgesendeten Ultraschallbursts und/oder des ausgesendeten Ultraschallsignals empfängt, in ein spezielles Protokoll zur schnellen Signalisierung von Reflexionen (Echos), um keine zusätzliche Reaktionsverzögerung zu verursachen.

Grundidee der hier vorgestellten technischen Lehre ist die Erweiterung der aktuellen Eingabe-/Ausgabekommunikation, insbesondere durch einen Signal-Modus innerhalb der UART-Kommunikation im UART-Modus. Des Weiteren sieht die hier offenbarte technische Lehre spezielle Signalisierungspulse und eine spezielle, neue Echokodierung (Längenmodulation) vor. Eine Absicherung der übertragenen Daten kann das Ultraschallsensorsystem umfassen das übergeordnete Rechnersystem und den Ultraschallsensor sowie einen Eindrahtdatenbus bzw. einen Zweidrahtdatenbus mit Sende- und Empfangsleitung gemäß der hier vorgestellten technischen Lehre beispielsweise über Parity-Bits und/oder CRC-Datenbits und -Bytes oder dergleichen vornehmen.

Schließlich ermöglicht die hier vorgestellte technische Lehre die Verwendung von erweiterten Messprofilen umso die Effizienz der Kommunikation zu verbessern und die Systemperformance zu erhöhen. D.h. die hier vorgestellte technische Lehre schlägt vor, dass das übergeordnete Rechnersystem dem Ultraschallsensor nicht mehr alle Parameter der durchzuführenden Messung unmittelbar vor der Messung überträgt, sondern zuvor vorbestimmte Parameterkonfigurationen festzulegen und mit einem Index zu versehen und die entsprechenden Parameterkonfigurationen durch Übertragung des Index in einer Kommandophase aufzurufen. Diese Parameterkonfigurationen bzw. Messprofile können sich beispielsweise im nicht-flüchtigen Speicher des Ultraschallsensors gespeichert sein. Nach dem Start der Steuervorrichtung des Ultraschallsensors kann die Steuervorrichtung des Ultraschallsensors dies Parameterkonfigurationen in den flüchtigen Speicher laden. Diese Parameterkonfigurationen können sich dann somit auch im flüchtigen Speicher des Ultraschallsensors befinden. Das übergeordnete Rechnersystem muss dann aber die Parameterkonfigurationen bei jedem Start des Ultraschallsensors vom übergeordneten Rechnersystem an den Ultraschallsensor übertragen. Die Steuervorrichtung des Ultraschallsensors greift während des Betriebs des Ultraschallsensors dann auf diese Daten im nicht-flüchtigen Speicher bzw. im flüchtigen Speicher des Ultraschallsensors zu, um damit die Parameter für die Ultraschallmessungen entsprechend den abgespeicherten Messprofilen einzustellen.

Die Grundidee der hier vorgestellten Erfindung ist es somit, dass der Ultraschallsensor und das übergeordnete Rechnersystem mittels einer konventionellen UART-Schnittstelle miteinander kommunizieren. Bevorzugt umfasst ein UART-Datenpaket ein Startbit, die Daten und ein Stopp-Bit und ggf. ein Parity-Bit.

Hierdurch kann die Datenkommunikation zwischen Ultraschallsensor und übergeordnetem Rechnersystem vereinfacht werden.

Während der Ultraschallmessphase, die sich in die Aussendephase des Ultraschallsignals bzw. Ultraschallbursts, der Ausschwingphase des Ultraschalltransducers und die Empfangsphase weiter untergliedert, verlässt nun der Ultraschallsensor das UART-Protokoll und signalisiert direkt den Empfang eines Echos durch den Ultraschalltransducer. Bevorzugt verlässt der Ultraschallsender nach einer vorgegebenen Zeit wieder diese Ultraschallmessphase und nimmt die Kommunikation entsprechend dem UART-Protokoll mit dem übergeordneten Rechnersystem wieder auf.

Bevorzugt führt der vorschlagsgemäße Ultraschallsensor Ultraschallmesszyklen zeitlich nacheinander und zeitlich nicht überlappend durch. Die Ultraschallmesszyklen gliedern sich jeweils im Wesentlichen in mindestens drei Phasen. Nicht jeder Ultraschallmesszyklus muss allerdings diese drei Phasen aufweisen. Unter im Folgenden beispielhaft erwähnten Bedingungen können Phasen der drei Phasen der Ultraschallmesszyklen bei der Ausführung der Ultraschallmesszyklen insbesondere zeitweise fehlen.

### Beispielhafte erste Phase I (im Folgenden auch als Kommandophase bezeichnet)

Der Beginn der ersten Phase ist im Sinne des hier vorgelegten Dokuments ist typischerweise gleich dem Beginn des Ultraschallmesszyklus im Sinne des hier vorgelegten Dokuments. Die erste Phase umfasst typischerweise die Übermittlung der Information vom übergeordneten Rechnersystem zum Ultraschallsensor welche Art von Ultraschallmessung der Ultraschallsensor in einer der nachfolgenden Ultraschallmessphasen durchführen soll. Im Rahmen der vorliegenden Erfindung wird diese Information auch als Kommando bezeichnet. Typischerweise umfasst das Kommando auch ein Startsignal für die zeitlich nachfolgende Ultraschallmessphase. Bevorzugt ist festgelegt oder eingestellt oder programmiert, in welchem zeitlichen Abstand nach dem Eingang des Startsignals der Ultraschallsensor mit der Ultraschallmessphase beginnt. Bevorzugt umfasst das Kommando zumindest zeitweise und/oder in einigen Fällen Informationen darüber, mit welchen Eigenschaften der Ultraschallsensor einen Ultraschallburst und/oder ein Ultraschallsignal in einer der nachfolgenden Ultraschallmessphasen erzeugen soll. Solche Eigenschaften können beispielsweise die Kodierung, der Chirp (ja/nein), Chirp-Richtung, Chirp-Geschwindigkeit, Anzahl der Pulse des Ultraschallbursts etc. sein. Ein Kommando kann aber auch die Aussendung mehrerer Ultraschallbursts hintereinander zum Inhalt haben, die sich ggf. unterscheiden können.

### Beispielhafte zweite Phase II (im Folgenden auch als Ultraschallmessphase bezeichnet)

Die Ultraschallmessphase eines Ultraschallmesszyklus umfasst die Durchführung der eigentlichen Messung und die vorzugsweise System-Takt oder UART-Takt synchrone Übermittlung der Detektion des Eintreffens von Echos am Ultraschallsensor. Der Ultraschallsensor benutzt dabei bevorzugt als Maß für das Eintreffen eines Echos das Überschreiten der Schwellwertkurve durch den Werteverlauf des Hüllkurvensignals des Empfangssignals des Ultraschalltransducers bzw. Ultraschallempfängers in eine erste Richtung. Der Ultraschallsensor benutzt dabei bevorzugt als Maß für das Ende des Eintreffens eines Echos das Unterschreiten der Schwellwertkurve durch den Werteverlauf des Hüllkurvensignals des Empfangssignals des Ultraschalltransducers bzw. Ultraschallempfängers in zweite Richtung, die von der ersten Richtung verschieden ist. Es handelt sich also bevorzugt um eine Echo-Detektion, die der Ultraschallsensor bevorzugt synchron zum System-Takt des Ultraschallsensors bzw. synchron zum UART-Takt an das übergeordnete Rechnersystem signalisiert.

### Beispielhafte dritte Phase III (im Folgenden auch als dritte Phase des Ultraschallmesszyklus bezeichnet)

Zu Beginn der dritten Phase nimmt der Ultraschallsensor wieder die UART-Kommunikation auf. In der dritten Phase übermittelt der Ultraschallsensor die Art der vom Ultraschallsensor erkannten Signalobjekte und/oder deren Parameter, im Folgenden als Signalobjektparameter bezeichnet, an die übergeordnete Rechnereinheit. Bei diesen Signalobjekten kann es sich beispielsweise um die oben erläuterten Echos handeln. Bevorzugt überträgt der Ultraschallsensor in dieser dritten Phase also die Information, dass er ein Echo erkannt hat und wiederum bevorzugt zu welchem Zeitpunkt dieses Echo nach dem Beginn der Ultraschallmessphase aufgetreten ist wiederum bevorzugt, wie groß das Signal dieses Echos war, und wiederum bevorzugt, mit welcher Wahrscheinlichkeit es sich tatsächlich um ein Echo gehandelt hat, und wiederum bevorzugt, das wievielte Echo es war. Der Ultraschallsensor überträgt also beispielsweise den Echozeitpunkt und einen sogenannten Confidence-Wert für dieses Echo. Der Wahrscheinlichkeitswert braucht dabei kein Wahrscheinlichkeitswert im rein mathematischen Sinne sein. Es soll nur ein Parameter sein, der der übergeordneten Rechnereinheit erlaubt, zwischen Signalen zu unterscheiden, die sicher Echos sind und solchen, die keine Echos sind. Bevorzugt überträgt der Ultraschallsensor bis zu vier Echos. Natürlich ist es denkbar, mehr oder weniger Echos zu übertragen. Bevorzugt überträgt der Ultraschallsensor in der dritten Phase die Daten der Echos in der Reihenfolge des Empfangs durch den Ultraschallsensor. Natürlich ist es denkbar die Daten der Echos in umgekehrter Reihenfolge zu übertragen. Auch ist es denkbar die Daten der Echos in beliebiger Reihenfolge mit einem Zeitstempel des Empfangs oder der Nummer des Empfangs zu übertragen. Des Weiteren überträgt der Ultraschallsensor in dieser dritten Phase des Ultraschallmesszyklus bevorzugt Diagnosedaten an die übergeordnete Rechnereinheit. Diese Diagnosedaten können z.B. Hardware-Fehler von Schaltungsteilen der Auswerteschaltung im Innern des Ultraschallsensors und andere Diagnose-Fehler sein. In der dritten Phase des Ultraschallmesszyklus kann der Ultraschallsensor darüber hinaus weitere Daten wie Statusinformationen, Testergebnisse, Gerätenummern, Busknotenadressen, Verschlüsselungsdaten etc. übertragen. Wenn dieses Dokument eine Datenübertragung vom Ultraschallsensor zum übergeordneten Rechnersystem beschreibt, so kann das u.a. immer so verstanden werden, dass beispielsweise die Steuervorrichtung des Ultraschallsensors Daten über den internen Datenbus des Ultraschallsensors aus einem Vorrichtungsteil des Ultraschallsensors ausliest und über die Datenschnittstelle des Ultraschallsensors direkt oder nach Verarbeitung über den externen Datenbus an das übergeordnete Rechnersystem sendet. Wenn dieses Dokument eine Datenübertragung vom übergeordneten Rechnersystem zum Ultraschallsensor beschreibt, so kann das u.a. immer so verstanden werden, dass beispielsweise das übergeordnete Rechnersystem über den externen Datenbus und über die Datenschnittstelle des Ultraschallsensors und über einen internen Datenbus des Ultraschallsensors Daten an die Steuervorrichtung des Ultraschallsensors und/oder an einen einem Vorrichtungsteil des Ultraschallsensors sendet. Es ist denkbar, dass die Steuervorrichtung des Ultraschallsensors solche Daten nach Erhalt vom übergeordneten Rechnersystem direkt oder indirekt nach Verarbeitung durch die Steuervorrichtung des Ultraschallsensors über den internen Datenbus des Ultraschallsensors an andere Vorrichtungsteile des Ultraschallsensors weitergibt. Hierdurch kann das übergeordnete Rechnersystem den Ultraschallsensor überwachen und steuern und die Messergebnisse des Ultraschallsensors auslesen.

Die hier vorgestellte technische Lehre befasst sich somit mit einem Ultraschallsensor, der mit einem übergeordneten Rechnersystem mittels eines UART-Protokolls über eine UART-Datenschnittstelle des Ultraschallsensors Daten und Kommandos austauscht. Dabei führt der Ultraschallsensor ein Verfahren für die Kommunikation mit dem übergeordneten Rechnersystem mittels des UART-Protokolls durch. Der Ultraschallsensor führt das Ultraschallmessverfahren insbesondere zur Abstandsmessung im Umfeld eines Fahrzeugs, in zeitlich aufeinanderfolgenden und zeitlich nicht überlappenden Ultraschallmesszyklen durch. Der Ultraschallsensor führt den jeweiligen aktuellen Ultraschallmesszyklus in mindesten drei zeitlich einander nachfolgenden zeitlichen Phasen und zeitlich nicht überlappenden Phasen durch. Der Ultraschallsensor startet den Ultraschallmesszyklus zu Beginn der ersten zeitlichen Phase des Ultraschallmesszyklus. Die hier vorgelegte Schrift bezeichnet diese erste Phase des Ultraschallmesszyklus auch als Kommandophase bezeichnet. Nicht alle Ultraschallmesszyklen umfassen eine Kommandophase.

Im Sinne der hier vorgelegten Schrift gelten auch Ultraschallmesszyklen ohne eine Kommandophase als dreiphasig, wobei die Kommandophase dann die zeitliche Länge Os hat. Es ist denkbar, dass eine Kommandophase für mehrere nachfolgende Ultraschallmesszyklen gültig sein kann. Daher ist es denkbar, dass für diese nachfolgenden Ultraschallmesszyklen die Kommandophase entfallen kann. Bevorzugt ist die Anzahl solcher nachfolgender Ultraschallmesszyklen ohne Kommandophase exakt vorgegeben, sodass der Ultraschallsensor nachdem er diese nachfolgenden Ultraschallmesszyklen durchlaufen hat, bevorzugt wieder eine Kommandophase erwartet. Wäre das nicht der Fall, so könnte der Fall eintreten, dass der Ultraschallsensor nicht mehr steuerbar wäre.

Im Sinne der hier vorgelegten Schrift sind solche nachfolgenden weiteren Ultraschallmesszyklen ohne eigene Kommandophase ebenfalls zumindest dreiphasig, da die zugehörige Kommandophase eines solchen nachfolgenden Ultraschallmesszyklus die Kommandophase eines vorausgehenden Ultraschallmesszyklus ist.

Bevorzugt empfängt der Ultraschallsensor in der Kommandophase ein Kommando von dem übergeordneten Rechnersystem mittels des UART-Protokolls über eine UART-Schnittstelle.

Bevorzugt gibt das Kommando u.a. an, welche Art von Messung der Ultraschallsensor in einem Ultraschallmesszyklus, insbesondere in der der Kommandophase zeitlich nachfolgenden Ultraschallmessphase des aktuellen Ultraschallmesszyklus, durchführen soll.

Bevorzugt sendet der Ultraschallsensor einen Ultraschallburst oder ein Ultraschallsignal zu Beginn der zweiten Phase, im Folgenden als Ultraschallmessphase bezeichnet, aus. Damit endet die Kommandophase. Der Ultraschallsender empfängt in der Ultraschallmessphase keine Daten über die UART-Datenschnittstelle. Stattdessen benutzt der Ultraschallsender in der Ultraschallmessphase die Treiberstufe der UART-Datenschnittstelle zur Signalisierung der Detektion des Empfangs von Echos an das übergeordnete Rechnersystem. Die UART-Schnittstelle des Ultraschallsensors arbeitet in der Ultraschallmessphase also vorschlaggemäß ausdrücklich nicht im UART-Modus mit einer Datenübertragung im UART-Protokoll, sondern in einem vom UART-Modus abweichenden neuen Signalisierungsmodus, der ein spezielles Datenprotokoll zur besonders zeitnahen Signalisierung von erfassten Ereignissen, insbesondere Echos, vom Ultraschallsensor zur übergeordneten Rechnersystem umfasst. Hierdurch erhält das übergeordnete Rechnersystem zeitnah und kurzfristig Informationen über potenziell gefährliche Hindernisse im Umfeld des Fahrzeugs und kann schnell reagieren. Nur dadurch ist die Erfüllung von Sicherheitsanforderungen gemäß der ISO 26262 möglich. Typischerweise erfolgen Flankenwechsel der Datenleitung der der Ultraschallmessphase synchron in einem im Wesentlichen festen Phasenverhältnis zum UART-Takt. Genauer: Die Flankenwechsel erfolgen bevorzugt synchron zur Verarbeitung der Empfangssignale des Ultraschalltransducers. Für die Ansteuerung des Ultraschalltransducers bildet der Ultraschallsensor bevorzugt ein internes Sendetaktsignal mit einer Sendefrequenz des Ultraschalltransducers. Bevorzugt bildet der Ultraschallsensor hierzu ein Signal zur Taktung der Datenleitung, das mit dem Sendetaktsignal zur Erzeugung des Sendesignals zur Ansteuerung des Ultraschalltransducers bevorzugt in einem festen Phasenverhältnis steht. Bevorzugt sind die Flankenwechsel des Signals zur Taktung der Datenleitung in der Ultraschallmessphase flankensynchron zu den Flanken des Sendetaktsignals. Das Signal zur Taktung der Datenleitung, der UART-Takt, kann eine bevorzugt ganzzahlig vielfache Frequenz des Sendetaktsignals aufweisen. Das Signal zur Taktung der Datenleitung, der UART-Takt, kann aber auch eine kleinere Frequenz als die Frequenz des Sendetaktsignals aufweisen. In letzterem Fall ist die Frequenz des Sendetaktsignals bevorzugt ein ganzzahliges Vielfaches der Frequenz des Signals zur Taktung der Datenleitung, des UART-Takts.

Immer wenn der Ultraschallsensor einen neuen Wert der Hüllkurve berechnet hat, vergleicht bevorzugt der Ultraschallsensor diesen Wert der Hüllkurve mit dem aktuell gültigen Wert der Schwellwertkurve und entschiedet, ob ein Flankenwechsel der Datenleitung stattfindet oder nicht. In dem Fall kann der Ultraschallsensor das Über- und/oder Unterschreiten des Werteverlaufs der Hüllkurve bezogen auf die Schwellwertkurve signalisieren. Statt der Signalisierung des Über- und/oder Unterschreitens der Schwellwertkurve kann der Ultraschallsensor aber auch prüfen, ob ein lokales zeitliches Maximum der Hüllkurve oberhalb der aktuellen Schwellwertkurve vorliegt. Ggf. prüft der Ultraschallsensor, wenn der Ultraschallsensor einen neuen Wert der Hüllkurve berechnet hat, hierzu ob ein Maximum der Hüllkurve vorliegt und ob der zugehörige Maximalwert der Hüllkurve über der Schwellwertkurve liegt. Ein Problem der Maximumsdetektion ist eine Zeitverzögerung zum Ersten durch die Zeit zwischen dem Überschreiten der Schwellwertkurve durch den zeitlichen Verlauf der Hüllkurve und dem Eintritt des Maximums und zum Zweiten durch die Tatsache, dass für das Erkennen des Maximums der Abstieg der Hüllkurve bereits sicher begonnen haben muss. D.h. die Maximumsdetektion führt ggf. zu einer nicht mehr akzeptablen Verzögerung. Die Maximumsdetektion hat aber wesentliche Vorteile hinsichtlich Präzision etc. Es ist daher sinnvoll, wenn das übergeordnete Rechnersystem für eine optimale Erkennung den Ultraschallsensor mittels entsprechender Kommandos in der Kommandophase veranlasst, zwischen beiden Signalisierungen von Zeit zu Zeit zu wechseln.

Die Eigenschaften des Ultraschallbursts bzw. des Ultraschallsignals, das der Ultraschallsensor zu Beginn der Ultraschallmessphase bevorzugt aussendet, hängen typischerweise von einem zeitlich vorausgehenden und/oder dem unmittelbar zeitlich vorausgehenden Kommando ab, das bzw. die der Ultraschallsensor in einer zeitlich vorausgehenden und/oder der unmittelbar zeitlich vorausgehenden Kommandophase empfangen hat. Beispielsweise kann das Kommando, das der Ultraschallsensor zuvor empfangen hat, genau festlegen, welche Art von Ultraschallburst oder Ultraschallsignal der Ultraschallsender in der unmittelbar nachfolgenden Ultraschallmessphase aussenden soll. Es ist aber auch denkbar, dass das Kommando nur einen Teil der denkbaren Parameter des in der Ultraschallmessphase auszusendenden Ultraschallbursts bzw. Ultraschallsignals festlegt. Bevorzugt übernimmt der Ultraschallsensor dann diese nicht geänderten Parameter des Ultraschallbursts bzw. Ultraschallsignals auf einem vorausgehenden Ultraschallmesszyklus oder aus dem unmittelbar vorausgehenden Ultraschallmesszyklus. Beispielsweise ist es denkbar, dass das Kommando die Chip-Richtung umdreht und somit nur die Funktion von Unterer Eckfrequenz und Startfrequenz des Ultraschallbursts bzw. des Ultraschallsignals vertauscht, die Frequenzwerte aber unverändert lässt. Dementsprechend ist es denkbar, dass ein Kommando Parameter des Ultraschallbursts bzw. des Ultraschallsignals für mehrere Ultraschallmesszyklen festlegt. Solche Parameter können beispielsweise die Startfrequenz des Ultraschallbursts bzw. die Endfrequenz des Ultraschallbursts sein.

Der Ultraschallsensor unterbricht typischerweise die Datenkommunikation vom Ultraschallsensor zum übergeordneten Rechnersystem im UART-Modus mit dem UART-Protokoll für die Dauer der Ultraschallmessphase und wechselt in einen Modus der Datenkommunikation, den das hier vorgelegte Dokument im Folgenden als Signalisierungsmodus bezeichnet, bei dem der Ultraschallsensor über die Datenleitung direkt durch Signalpulse das Auftreten vorbestimmter Ereignisse zeitnah während der Ultraschallmessphase signalisiert. Der Ultraschallsensor überträgt dementsprechend in der Ultraschallmessphase keine Informationen außer diesen Pulsen an das übergeordnete Rechnersystem. Insbesondere führt der Ultraschallsensor in der Ultraschallmessphase keine Datenkommunikation vom Ultraschallsensor zum übergeordneten Rechnersystem entsprechend dem UART-Protokoll durch. Stattdessen führt der Ultraschallsensor die Datenkommunikation vom Ultraschallsensor zum übergeordneten Rechnersystem in der Ultraschallmessphase entsprechend einem speziellen Signalisierungsprotokoll durch. Der Ultraschallsensor verfügt bevorzugt über einen Systemtaktgeber zur Erzeugung eines Systemtakts, der ein oder mehrere digitale Vorrichtungsteilschaltungen des Ultraschallsensors mit einem oder mehreren Takten eines Taktsystems des Ultraschallsensors versorgt.

Der Ultraschallsensor kann auch über einen UART-Taktgeber zur Erzeugung eines UART-Takts verfügen, der ein oder mehrere digitale Vorrichtungsteilschaltungen der UART-Schnittstelle des Ultraschallsensors mit einem oder mehreren Taktsignalen eines Taktsystems der UART-Schnittstelle des Ultraschallsensors versorgt. Bevorzugt ist der Systemtakt des Systemtaktgebers so stabil, dass der Phasenunterschied zwischen dem Systemtakt und dem Synchronisationstakt, den das übergeordnete Rechnersystem in der Kommandophase zur Erzeugung des Synchronisationskommandos verwendet weniger als 40% der halben Systemtaktperiode, besser bevorzugt weniger als 20% der halben Systemtaktperiode, besser weniger als 10% der halben Systemtaktperiode beträgt.

Statt der seriellen UART-Datenübertragung legt der Ultraschallsensor das Signal des Datenbusses der UART-Schnittstelle des Ultraschallsensors auf einen ersten logischen Wert während der Ultraschallmessphase, wenn der Ultraschallsensor kein Echo empfängt.

Statt der seriellen UART-Datenübertragung legt der Ultraschallsensor das Signal des Datenbusses der UART-Schnittstelle des Ultraschallsensors auf einen zweiten logischen Wert während der Ultraschallmessphase, wenn der Ultraschallsensor ein Echo empfängt, wobei der zweite logische Wert bevorzugt vom ersten logischen Wert verschieden ist.

Der Ultraschallsensor kann beispielsweise die Ultraschallmessphase nach einem vorbestimmten Zeitpunkt und/oder bei Vorliegen vorbestimmter Bedingungen beenden. Bevorzugt umfasst hierzu der Ultraschallsensor über einen Zeitgeber, um die bereits verstrichene Zeit der Ultraschallmessphase zu erfassen. Ist eine vorbestimmte Zeit seit dem Start der Ultraschallmessphase oder eine funktionsäquivalente Zeit mit einem anderen Referenzpunkt vergangen, so beendet der Ultraschallsensor bevorzugt die Ultraschallmessphase. Damit beginnt der Ultraschallsensor dann die dritte Phase des Ultraschallmesszyklus.

Der Ultraschallsensor beginnt wieder mit dem Ende der Ultraschallmessphase und/oder mit dem Beginn der dritten Phase der Ultraschallmessphase die Kommunikation zwischen dem Ultraschallsensor und dem übergeordneten Rechnersystem entsprechend dem UART-Protokoll. Somit beginnt der Ultraschallsensor mit dem Erreichen des Endes der Ultraschallmessphase bevorzugt wieder mit der Übertragung von Daten vom Ultraschallsensor zur übergeordneten Rechnereinheit mittels UART-Protokoll.

Der Ultraschallsensor ist somit dazu eingerichtet, Daten in der dritten Phase des Ultraschallmesszyklus vom Ultraschallsensor zum übergeordneten Rechnersystem zu übertragen.

Dies hat den Vorteil, dass das übergeordnete Rechnersystem den Ultraschallsensor sehr schnell in der Kommandophase konfigurieren kann und in der dritten Phase des Ultraschallmesszyklus eine erhöhte Menge an Messdaten schnell dem übergeordneten Rechnersystem zur Verfügung stellen kann. Dies ist von besonderer Bedeutung für sicherheitsrelevante Systeme, die ein rechtzeitige Reaktion von Sicherheitssystemen eines Fahrzeugs sicherstellen soll.

In eine erster Variante des in dieser Schrift vorgestellten Ultraschallsensors können beispielsweise die Daten, die der Ultraschallsensor in der dritten Phase des Ultraschallmesszyklus vom Ultraschallsensor zum übergeordneten Rechnersystem übertragen kann, ein oder mehrere der folgenden Daten umfassen:
1. Statusinformationen, die Messwerte physikalischer Parameter des Ultraschallsensors wiedergeben, wobei der Ultraschallsensor hier bevorzugt Messwerte von Spannungswerten von Leitungen innerhalb des Ultraschallsensors gegenüber einem Bezugspotenzial und/oder Messwerte von Stromwerten innerhalb von Leitungen innerhalb des Ultraschallsensors als Daten an das übergeordnete Rechnersystem übermittelt;
2. Statusinformationen, die logische Werte logischer Schaltnetzwerke innerhalb des Ultraschallsensors wiedergeben;
3. Statusinformationen, die Ergebnisse von Selbsttests des Ultraschallsensors wiedergeben;
4. Statusinformationen, die Messwerte der Ultraschallübertragungsstrecke des Ultraschallsensors wiedergeben, in die der Ultraschallsensor hineinsendet und/oder aus der er Ultraschallsignale empfängt;
5. Statusinformationen, die angeben, welche Art von Ultraschallburst und/oder Ultraschallsignal der Ultraschallsensor in der unmittelbar vorausgehenden Ultraschallmessphase ausgesendet haben will;
6. Statusinformationen, die Werte des Ultraschallbursts und/oder Ultraschallsignals des Ultraschallsensors angeben, den der Ultraschallsensor in der unmittelbar vorausgehenden Ultraschallmessphase ausgesendet haben will;
7. Informationen, die Werte des Ultraschallbursts und/oder Ultraschallsignals des angeben, den der Ultraschallsensor in der unmittelbar vorausgehenden Ultraschallmessphase empfangen haben will;
8. Echoinformationen, die Messwerte der in der Ultraschallmessphase empfangenen Echos wiedergeben, wobei diese Messwerte insbesondere die Nummer des Echos und/oder den Zeitpunkt des Empfangs des Echos und/oder einen Vertrauenswert für die Wahrscheinlichkeit, dass das Echo tatsächlich ein Echo eines Objekts in der Ultraschallübertragungsstrecke des Ultraschallsensors ist, in die der Ultraschallsensor hineinsendet und/oder aus der er Ultraschallsignale empfängt;
9. Kommandoinformationen, die angeben, welche Kommandos bzw. welches Kommando der Ultraschallsensor in einer der vorausgehenden Kommandophasen und/oder in der unmittelbar vorausgehenden Kommandophase empfangen hat;
10. Kommandoinformationen, die angeben, welche Kommandos bzw. welches Kommando der Ultraschallsensor in einer der vorausgehenden Kommandophasen und/oder in der unmittelbar vorausgehenden Kommandophase empfangen hat und die bestimmt haben, welche Art von Ultraschallburst bzw. Ultraschallsignal der Ultraschallsensor ausgesendet hat;
11. Prüfinformationen der in der dritten Phase des Ultraschallmesszyklus übertragenen Daten, insbesondere CRC-Daten oder dergleichen, wobei das übergeordnete Rechnersystem diese Prüfinformationen prüfen kann, um den ordnungsgemäßen Empfang der Daten zu prüfen, die der Ultraschallsensor an das übergeordnete Rechnersystem in der dritten Phase des Ultraschallmesszyklus überträgt;
12. Prüfinformationen der in der Ultraschallmessphase signalisierten Informationen, wobei das übergeordnete Rechnersystem diese Prüfinformationen prüfen kann, um den ordnungsgemäßen Empfang der in der Ultraschallmessphase signalisierten Informationen zu prüfen;
13. Prüfinformationen der in der Kommandophase signalisierten Kommandos, wobei das übergeordnete Rechnersystem diese Prüfinformationen prüfen kann, um den ordnungsgemäßen Empfang der in der in der Kommandophase signalisierten Kommandos durch den Ultraschallsensor zu prüfen;
14. Prüfinformationen der in der Kommandophase signalisierten Kommandos, die angeben, ob der Ultraschallsensor bei der Übertragung eines oder mehrerer Kommandos in der Kommandophase einen Fehler erkannt hat;
15. Prüfinformationen, die die Ergebnisse von Selbsttests oder Tests des Ultraschallsensors wiedergeben;
16. Längeninformationen, die angeben oder die es ermöglichen zu berechnen, wie viele Daten der Ultraschallsensor in der dritten Phase des Ultraschallmesszyklus vom Ultraschallsensor zum übergeordneten Rechnersystem übertragenen wird.
17. Die Statusinformationen, die der Ultraschallsensor in der dritten Phase des Ultraschallmesszyklus an das übergeordnete Rechnersystem übermittelt und die bevorzugt Messwerte physikalischer Parameter und/oder analoger Signale innerhalb und im Umfeld des Ultraschallsensors wiedergeben, umfassen bevorzugt interne, Spannungswerten von Leitungen innerhalb des Ultraschallsensors gegenüber einem Bezugspotenzial, beispielsweise einer Masseleitung, und/oder Messwerte von Stromwerten innerhalb von Leitungen innerhalb des Ultraschallsensors. Diese Werte sollten sich typischerweise innerhalb vorbestimmter Werteintervallen bewegen, sodass das übergeordnete Rechnersystem diese beispielsweise als Diagnosewerte und/oder als Steuerungsparameter für eine Korrektur von Ultraschallsensorbetriebsparametern verwenden kann. Ein beispielhafter Wert, den das übergeordnete Rechnersystem auf diese Weise in Erfahrung bringen kann, kann beispielsweise eine Temperatur eines Vorrichtungsteils des Ultraschallsensors sein.
18. Statusinformationen, die logische Werte logischer Schaltnetzwerke innerhalb des Ultraschallsensors wiedergeben, können zum Beispiel Informationen umfassen, die Vorrichtungsteile des Ultraschallsensors für die übergeordnete Rechnereinheit bereitstellen. Solche Informationen können beispielsweise Ergebnisse von Selbsttests, Fehler-Flags etc. umfassen.
19. Statusinformationen, die Ergebnisse von Selbsttests des Ultraschallsensors wiedergeben. Hierbei kann es sich beispielsweise um Registerwerte von BIST-Vorrichtungen (BIST= Englisch Build-In-Self-Test = eingebaute Selbsttestvorrichtung) des Ultraschallsensors oder von Teilvorrichtungen des Ultraschallsensors handeln. Auch kann es sich um Messwerte analoger Werte von Spannungswerten von Schaltungsknoten innerhalb des Ultraschallsensors und/oder von Stromwerten der elektrischen Ströme elektrischer Leitungen innerhalb des Ultraschallsensors und/oder von Messwerten anderer physikalischer Parameter handeln. Solche anderen physikalischen Parameter können beispielsweise Temperaturmesswerte von Orten innerhalb des Ultraschallsensors oder von außerhalb des Ultraschallsensors insbesondere aus dessen Umfeld sein. Auch können solche anderen physikalischen Parameter beispielsweise erfasste mechanische Parameter von Vorrichtungsteilen des Ultraschallsensors sein. Hier kommen beispielsweise Messwerte des Schwingungsverhaltens und/oder des Dämpfungsverhaltens der Schwingkörper des Ultraschallsensors in Frage. Außerdem können beispielweise solche Messwerte Laufzeitwerte von Ultraschallsignalen von anderen Ultraschallsensoren zu diesem Ultraschallsensor und/oder die ermittelten Parameter solcher Ultraschallsignale zwischen Ultraschallsystemen innerhalb eines Ultraschallsystems mit mehreren Ultraschallsensoren sein, deren Teil der Ultraschallsensor und das übergeordnete Rechnersystem sind. Die Vorrichtungsteile, also beispielsweise ein oder mehrere Ultraschallsensoren und das übergeordnete Rechnersystem, eines solchen Ultraschallsystems sind bevorzugt zumindest teilweise über einen oder mehrere Datenverbindungen miteinander verbunden.
20. Statusinformationen, die Messwerte der Ultraschallübertragungsstrecke des Ultraschallsensors wiedergeben, in die der Ultraschallsensor hineinsendet und/oder aus der er Ultraschallsignale empfängt. Bevorzugt charakterisiert der Ultraschallsensor im Betrieb die Übertragungsstrecke vom Ultraschallsensor zu einem Objekt und zurück. Im einfachsten Fall kann es sich bei diesen Daten um die Daten eines Objekts handeln. Es kann sich aber auch um Daten handeln, die beispielsweise angeben, wie sich ein beispielsweise zuvor detektiertes Echo wahrscheinlich bis zur nächsten Messung verändern wird bzw. um Daten, die eine solche Vorhersage ermöglichen oder unterstützen.
21. Statusinformationen, die angeben, welche Art von Ultraschallburst und/oder Ultraschallsignal der Ultraschallsensor in einer vorausgehenden Ultraschallmessphase ausgesendet haben will. Hier übergibt der Ultraschallsensor typischerweise die Daten des ausgesendeten Ultraschallbursts oder Ultraschallsignals bzw. einen oder mehrere Parameter der Parameter, mit denen die Teilvorrichtung des Ultraschallsensors bei der Aussendung eines zeitlich vorausgehenden Ultraschallbursts bzw. Ultraschallsignals konfiguriert war. Dies ermöglicht es dem übergeordneten Rechnersystem die Korrektheit der Konfiguration des Ultraschallsensors und der relevanten Teilvorrichtungen des Ultraschallsensors zu überprüfen.
22. Statusinformationen, die angeben, welche Art von Ultraschallburst und/oder Ultraschallsignal der Ultraschallsensor in der unmittelbar vorausgehenden Ultraschallmessphase ausgesendet haben will. Hier übergibt der Ultraschallsensor typischerweise die Daten des unmittelbar zuvor ausgesendeten Ultraschallbursts oder Ultraschallsignals bzw. einen oder mehrere Parameter der Parameter, mit denen die Teilvorrichtung des Ultraschallsensors bei der Aussendung eines zeitlich unmittelbar vorausgehenden Ultraschallbursts bzw. Ultraschallsignals konfiguriert war. Dies ermöglicht es dem übergeordneten Rechnersystem die Korrektheit der Konfiguration des Ultraschallsensors und der relevanten Teilvorrichtungen des Ultraschallsensors zu überprüfen.
23. Informationen, die Werte des Ultraschallbursts und/oder Ultraschallsignals angeben, den der Ultraschallsensor in der unmittelbar vorausgehenden Ultraschallmessphase empfangen haben will. Hierbei kann es sich beispielsweise
   a. um den Wert einer detektierten zeitlichen Verzögerung eines empfangenen Ultraschallbursts und/oder eines Ultraschallsignals gegenüber einem Referenzzeitpunkt innerhalb der Ultraschallmessphase und/oder
   b. um den Wert einer empfangenen Maximalamplitude des empfangenen Ultraschallbursts und/oder des empfangenen Ultraschallsignals und/oder
   c. um einem ermittelten Wert einer Bewertung des empfangenen Ultraschallbursts und/oder des empfangenen Ultraschallsignals (Confidence-Level), und/oder
   d. um einen Wert, der angibt, ob der empfangene Ultraschallburst und/oder das empfangene Ultraschallsignal eine Kodierung aufwies, und/oder
   e. um einen Wert, der angibt, ob der empfangene Ultraschallburst und/oder das empfangene Ultraschallsignal einen Chirp aufwies, und/oder
   f. um einen Wert, der angibt, ob der empfangene Ultraschallburst und/oder das empfangene Ultraschallsignal einen Chirp einer bestimmten Chirp-Richtung aufwies, und/oder
   g. um einen Wert, der angibt, ob der empfangene Ultraschallburst und/oder das empfangene Ultraschallsignal mit einem zuvor in einem zeitlich vorausgehenden Ultraschallmesszyklus empfangenen Ultraschallburst und/oder einem zuvor in einem zeitlich vorausgehenden Ultraschallmesszyklus empfangenen Ultraschallsignal korreliert ist, wobei dies bei sich bewegenden Objekten im Umfeld des Ultraschallsensors beispielsweise die Echos eines solchen sich bewegenden Objekts über mehrere Ultraschallmesszyklen hinweg verketten kann.
24. Echoinformationen, die Messwerte der in der Ultraschallmessphase empfangenen Echos wiedergeben, wobei diese Messwerte insbesondere die Nummer des Echos innerhalb des aktuellen Ultraschallmesszyklus und/oder insbesondere die Nummer des Echos innerhalb einer vorbestimmten Anzahl von Ultraschallmesszyklen und/oder insbesondere die Nummer des Echos seit der Inbetriebnahme des Ultraschallmesszyklus und/oder den Zeitpunkt des Empfangs des Echos und/oder die maximale Amplitude des Echos und/oder einen Vertrauenswert für die Wahrscheinlichkeit, dass das Echo tatsächlich ein Echo eines Objekts in der Ultraschallübertragungsstrecke des Ultraschallsensors ist, in die der Ultraschallsensor hineinsendet und/oder aus der der Ultraschallsensor Ultraschallsignale empfängt. Dies hat den Vorteil, dass der Ultraschallsensor hier dem übergeordneten Rechnersystem weitere Zusatzinformationen zur Verfügung stellt, die es dem übergeordneten Rechnersystem ermöglichen, die empfangenen Echos sicher zu bewerten.
25. Kommandoinformationen, die angeben, welche Kommandos bzw. welches Kommando der Ultraschallsensor in einer der vorausgehenden Kommandophasen und/oder in der unmittelbar vorausgehenden Kommandophase empfangen hat. Dies ermöglicht es dem übergeordneten Rechnersystem, zu überprüfen, ob der Ultraschallsensor die übergebenen Kommandos richtig erkannt und ausgeführt hat. Beispielsweise kann der Ultraschalsensor hier auch Abweichungen von den Vorgaben, beispielsweise aufgrund eines irgendwie gearteten, aber notwendigen Notlaufs des Ultraschallsensors an das übergeordnete Rechnersystem signalisieren.
26. Kommandoinformationen, die angeben, welche Kommandos bzw. welches Kommando der Ultraschallsensor in einer der vorausgehenden Kommandophasen und/oder in der unmittelbar vorausgehenden Kommandophase empfangen hat und die bestimmt haben, welche Art von Ultraschallburst bzw. Ultraschallsignal der Ultraschallsensor ausgesendet hat. Dies ermöglicht es dem übergeordneten Rechnersystem ebenfalls, zu überprüfen, ob der Ultraschallsensor die übergebenen Kommandos richtig erkannt und ausgeführt hat. Beispielsweise kann der Ultraschalsensor hier auch hier wieder Abweichungen von den Vorgaben, beispielsweise aufgrund eines irgendwie gearteten, aber notwendigen Notlaufs des Ultraschallsensors an das übergeordnete Rechnersystem signalisieren.;
27. Prüfinformationen der in der dritten Phase des Ultraschallmesszyklus übertragenen Daten, insbesondere CRC-Daten (CRC=Englisch: Cyclic Redundancy Check= Zyklische Redundanzprüfung) oder dergleichen, wobei das übergeordnete Rechnersystem diese Prüfinformationen prüfen kann, um den ordnungsgemäßen Empfang der Daten zu prüfen, die der Ultraschallsensor an das übergeordnete Rechnersystem in der dritten Phase des Ultraschallmesszyklus überträgt. Weitere Informationen finden sich beispielsweise unter https://de.wikipedia.org/wiki/Zyklische_Redundanzpr%C3%BCfung. Lt. Wikipedia (Download 22.07.2022) ist die zyklische Redundanzprüfung (englisch cyclic redundancy check, daher meist CRC) ist ein *_{"}Verfahren zur Bestimmung eines Prüfwerts für Daten, um Fehler bei der Übertragung oder Speicherung erkennen zu können. Im Idealfall kann das Verfahren sogar die empfangenen Daten selbständig korrigieren, um eine erneute Übertragung zu vermeiden.".*
28. Prüfinformationen der in der Ultraschallmessphase signalisierten Informationen, wobei das übergeordnete Rechnersystem diese Prüfinformationen prüfen kann, um den ordnungsgemäßen Empfang der in der Ultraschallmessphase signalisierten Informationen zu prüfen. Sofern das übergeordnete Rechnersystem und der Ultraschallsensor geeignete Prüfinformationen verwenden, kann das übergeordnete Rechnersystem diese nutzen, um ggf. eine fehlerhafte Signalisierung der Informationen in der Ultraschallmessphase vom Ultraschallsensor zum übergeordneten Rechnersystem zu erkennen und ggf. sofern noch möglich korrigieren. Da der Ultraschallsensor die Informationen in der Ultraschallmessphase getaktet synchron zum Systemtakt oder dem UART-Takt oder dem Sendetakt des Sendetaktsignals überträgt, können beispielsweise die so in der Ultraschallmessphase über den Datenbus übertragenen Bits als ein langes Datenwort betrachtet werden. Der Ultraschallsensor kann für dieses extrem lange Datenwort der Signalisierung der Übertragung der Informationen in der Ultraschallmessphase oder für Teile desselben eine erste Prüfinformation - beispielsweise ein Parity-Bit oder ein CRC-Statuswort oder dergleichen - berechnen und an das übergeordnete Rechnersystem übertragen. In der Folge kann das übergeordnete Rechnersystem eine fehlerhafte Informationssignalisierung in der Ultraschallmessphase erkennen. Hierzu berechnet vorzugsweise das übergeordnete Rechnersystem bevorzugt eine rechnersystemseitige, zweite Prüfinformation in analoger Weise aus den durch das übergeordnete Rechnersystem vom Ultraschallsensor in der Ultraschallmessphase empfangenen Daten und vergleicht diese zweite Prüfinformation mit der ersten Prüfinformation, die das übergeordnete Rechnersystem vom Ultraschallsensor erhalten hat. Bei einer Nichtübereinstimmung der ersten Prüfinformation mit der zweiten Prüfinformation kann beispielsweise das übergeordnete Rechnersystem die in der Ultraschallmessphase vom Ultraschallsensor empfangenen Informationenverwerfen oder in zumindest unschädlicher Weise oder zumindest in weniger schädlicher Weise verwenden.
29. Prüfinformationen der in der Kommandophase signalisierten Kommandos, wobei das übergeordnete Rechnersystem diese Prüfinformationen prüfen kann, um den ordnungsgemäßen Empfang der in der in der Kommandophase signalisierten Kommandos durch den Ultraschallsensor zu prüfen. Beispielsweise kann der Ultraschallsensor in der Kommandophase die Prüfinformation des empfangenen Kommandos ermitteln und hier an das übergeordnete Rechnersystem zurückspiegeln.
30. Prüfinformationen der in der Kommandophase signalisierten Kommandos, die angeben, ob der Ultraschallsensor bei der Übertragung eines oder mehrerer Kommandos in der Kommandophase einen Fehler erkannt hat. Dies ist insbesondere dann möglich, wenn das übergeordnete Rechnersystem dem Ultraschallsensor ein oder mehrere Kommandos mit einer ersten Prüfinformation, beispielsweise einem Parity-Bit und/oder CRC-Prüfdaten übermittelt. Bevorzugt ermittelt der Ultraschallsensor auf Basis des empfangenen Kommandos bzw. der empfangenen Kommandos eine zweite Prüfinformation und prüft diese gegen die erste Prüfinformation. Hierdurch kann der Ultraschallsensor ein fehlerhaftes Kommando erkennen und ein Fehlkonfiguration des Ultraschallsensors mitten im Betrieb vermeiden. Durch die Rückmeldung an das übergeordnete Rechnersystem versetzt der Ultraschallsensor das übergeordnete Rechnersystem in die Lage, im Falle der fehlerhaften Übermittlung eines Kommandos an den Ultraschallsensor Gegenmaßnahmen zu ergreifen, beispielsweise das nicht erfolgreich übermittelte Kommando erneut an den Ultraschallsensor zu senden.;
31. Längeninformationen, die angeben oder die es ermöglichen zu berechnen, wie viele Daten der Ultraschallsensor in der dritten Phase des Ultraschallmesszyklus vom Ultraschallsensor zum übergeordneten Rechnersystem übertragenen wird.

In einer zweiten Variante des hier vorgestellten Ultraschallsensors erzeugt der Ultraschallsensor typischerweise intern innerhalb des Ultraschallsensors ein Empfangssignal eines Ultraschalltransducers des Ultraschallsensors bzw. eines Ultraschallempfängers des Ultraschallsensors. Der Ultraschallsensor bildet dieses Signal bevorzugt in Abhängigkeit von einem akustischen Ultraschallsignal, das der Ultraschallsensor empfängt bzw. empfangen hat.

Ein Problem ist, dass die UART-Schnittstelle Des Ultraschallsensors einen UART-Takt benötigt, der frequenz- und phasenstabil auf den Takt eingeregelt ist, den das übergeordnete Rechnersystem für seine UART-Schnittstelle verwendet.

Hierzu schlägt das hier vorgelegte Dokument zum Ersten vor, dass der Ultraschallsensor ein Synchronisationssignal zur Synchronisation der UART-Taktfrequenz eines Teilnehmers der UART-Kommunikation über die UART-Datenschnittstelle übermittelt. Hierdurch kann der Ultraschallsensor den UART-Taktgenerator des übergeordneten Rechnersystems und damit den UART-Takt der UART-Schnittstelle des übergeordneten Rechnersystems mit dem UART-Takt der UART-Schnittstelle des Ultraschallsensors synchronisieren. Beispielsweise kann die UART-Schnittstelle des Ultraschallsensors einen Synchronisationsimpuls oder eine Folge aufeinander alternierend folgender Einsen und Nullen (Folgen 01010101.... oder 10101010...) senden. Beispielsweise kann die UART-Schnittstelle des übergeordneten Rechnersystems ein solches Synchronisationssignal erkennen und dem UART-Taktgenerator des übergeordneten Rechnersystems ein korrespondierendes Ist-Signal für die Frequenz und/oder die Phase zur Verfügung stellen, woraufhin der UART-Taktgenerator des übergeordneten Rechnersystems den UART-Takt des übergeordneten Rechnersystems nachregelt, sodass letztlich dann der UART-Takt des übergeordneten Rechnersystems synchron und im Wesentlichen frequenzgleich zum UART-Takt bzw. Systemtakt des Ultraschallsensors arbeitet.

Hierzu schlägt das hier vorgelegte Dokument zum Zweiten vor, dass das übergeordnete Rechnersystem ein Synchronisationssignal zur Synchronisation der UART-Taktfrequenz eines Teilnehmers der UART-Kommunikation über die UART-Datenschnittstelle übermittelt. Hierdurch kann das übergeordnete Rechnersystems den UART-Taktgenerator des Ultraschallsensors und damit den UART-Takt der UART-Schnittstelle des Ultraschallsensors mit dem UART-Takt der UART-Schnittstelle des übergeordneten Rechnersystems synchronisieren. Beispielsweise kann die UART-Schnittstelle des übergeordneten Rechnersystems einen Synchronisationsimpuls oder eine Folge aufeinander alternierend folgender Einsen und Nullen (Folgen 01010101.... oder 10101010...) senden. Beispielsweise kann die UART-Schnittstelle des Ultraschallsensor ein solches Synchronisationssignal erkennen und dem UATT-Taktgenerator des Ultraschallsensors ein korrespondierendes Ist-Signal für die Frequenz und/oder die Phase zur Verfügung stellen, woraufhin der UART-Taktgenerator des Ultraschallsensors den UART-Takt des Ultraschallsensors nachregelt, sodass letztlich dann der UART-Takt des Ultraschallsensors synchron und im Wesentlichen frequenzgleich zum UART-Takt bzw. Systemtakt des übergeordneten Rechnersystems arbeitet.

In einer dritten Variante der hier vorgestellten Vorrichtung weist der der Ultraschallsensor einen Systemtakt und/oder einen UART-Systemtakt der UART-Datenschnittstelle auf. In dieser dritten Variante ändert der Ultraschallsensor Parameter des Systemtakts und/oder des UART-Systemtakts in Abhängigkeit von einem dem Ultraschallsensor typischerweise durch das übergeordnete Rechnersystem übermittelten Synchronisationssignal zur Synchronisation der UART-Taktfrequenz.

In einer vierten Variante kann der Ultraschallsensor eines oder mehrere Kommandos in der Kommandophase empfangen. Der Ultraschallsensor prüft bevorzugt ein solches, empfangenes Kommando bzw. eine empfangene Kombination mehrerer empfangener Kommandos auf Zulässigkeit. Bevorzugt führt der Ultraschallsensor eines oder mehrere empfangene und zulässige Kommandos bevorzugt innerhalb der Ultraschallmessphase oder der nachfolgenden dritten Phase innerhalb des Ultraschallmesszyklus, zumindest aber innerhalbe einer oder mehrerer der nachfolgenden Ultraschallmessphasen aus. Ein solches Kommando kann eines oder mehrere der folgenden Kommandos und/oder Unterkommandos umfassen.

Bei einem Kommando und/oder Unterkommando, das der Ultraschallsensor empfängt, kann es sich beispielsweise um eine Synchronisationsinformation zur Synchronisation eines Systemtakts des Ultraschallsensors und/oder eines UART-Takts der UART-Datenschnittstelle des Ultraschallsensors beispielsweise mit dem UART-Takt und/oder einem Systemtakt des übergeordneten Rechnersystems handeln.

Bei einem Kommando und/oder Unterkommando, das der Ultraschallsensor empfängt, kann es sich beispielsweise um eine Längeninformation handeln, die angibt welche Länge das nachfolgende Kommando bzw. der Rest des Kommandos hat und/oder wie viele Kommandodaten das nachfolgende Kommando bzw. der Rest des Kommandos umfasst. Das übergeordnete Rechnersystem kann diese Länge beispielsweise je nach Implementierung in Bit, Byte, Datenworten, Anzahl Kommandos und dergleichen an den Ultraschallsensor übermitteln. Bei der Länge des Kommandos das übergeordnete Rechnersystem an den Ultraschallsensor an den Ultraschallsensor in der Kommandophase beispielsweise als Unterkommando übermittelt, kann es sich um die Länge des Kommandos die Länge des Rests des Kommandos und/oder um die Länge mehrerer Kommandos und/oder die Länge von Unterkommandos des Kommandos und/oder die Länge einer Gruppe von Unterkommandos des Kommandos handeln.

Bei einem Kommando und/oder Unterkommando, das der Ultraschallsensor empfängt, kann es sich beispielsweise um eine Prüfinformation, insbesondere ein Prüfbit und/oder einen Prüfwert, wie insbesondere eine CRC-Check-Summe, des Kommandos und/oder mehrerer Kommandos und/oder von Unterkommandos des Kommandos und/oder einer Gruppe von Unterkommandos des Kommandos handeln.

Bei einem Kommando und/oder Unterkommando, das der Ultraschallsensor empfängt, kann es sich beispielsweise um eine die Anzahl der Unterkommandos, die das gesamte Kommando bilden, handeln. Dies ermöglicht es dem Ultraschallsensor, zu überprüfen, ob er die richtige Anzahl an Kommandos bzw. Unterkommandos erkannt hat. Stellt der Ultraschallsensor beispielsweise fest, dass er nicht die korrekte Anzahl an Kommandos bzw. Unterkommandos erkannt hat, so kann er beispielsweise alle Kommandos einer solchen Kommando- oder Unterkommandofolge verwerfen.

Bei einem Kommando und/oder Unterkommando, das der Ultraschallsensor empfängt, kann es sich beispielsweise um ein Kommando bzw. Unterkommando handeln, dass dem Ultraschallsensor signalisiert, dass der Ultraschallsensor die Ultraschallmessung in der Ultraschallmessphase in der Art, wie der Ultraschallsensors sie bei der letzten Messung in der letzten Ultraschallmessphase des letzten Ultraschallmesszyklus durchgeführt hat, wiederholt durchführen soll. Dies reduziert die notwendige Busbandbreite.

Bei einem Kommando und/oder Unterkommando, das der Ultraschallsensor empfängt, kann es sich beispielsweise um ein Kommando bzw. Unterkommando handeln, dass der Ultraschallsensor eine Messung in der Ultraschallmessphase in der Art, wie der Ultraschallsensors sie bei einer vorausgegangenen Messung in einer vorausgegangenen Ultraschallmessphase eines vorausgegangenen Ultraschallmesszyklus durchgeführt hat, wiederholt durchführen soll.

Bei einem Kommando und/oder Unterkommando, das der Ultraschallsensor empfängt, kann es sich beispielsweise um ein Kommando bzw. Unterkommando handeln, dass der Ultraschallsensor die Messung in einer nachfolgenden Ultraschallmessphase entsprechend einer vorgegeben und dem Ultraschallsensor bekannten Form durchführen soll. Beispielsweise kann der Ultraschallsensor über eine Messmethode, typischerweise mehr als eine Messmethode mit vorgegebenen Parametern für die Messung in der Ultraschallmessphase verfügen, die der Ultraschallsensor verwenden kann. Durch das vorstehende Kommando wählt der Ultraschallsensor dann bevorzugt die ihm bekannte Messmethode entsprechend dem empfangenen Kommando aus und führt diese Messmethode dann in einer nachfolgenden Ultraschallmessphase durch.

Bei einem Kommando und/oder Unterkommando, das der Ultraschallsensor empfängt, kann es sich beispielsweise um ein Kommando bzw. Unterkommando handeln, das dem Ultraschallsensor signalisiert, dass der Ultraschallsensor die Messung in der unmittelbar dieser Kommandophase nachfolgenden Ultraschallmessphase entsprechend einer dieser vorgegeben und dem Ultraschallsensor bekannten Formen bzw. Methoden durchführen soll. Solche Methoden und/oder Formen können beispielsweise die Art des abgestrahlten Ultraschallbursts bzw. abgestrahlten Ultraschallsignals (Frequenz, kodiert vs. unkodiert, Art der Kodierung, Chirp, Chirp-Richtung, Maximalfrequenz, Minimalfrequenz, Mittenfrequenz Amplitude etc.) und/oder die Art der Messdatenaufbereitung (Speicherung, Filterung, Verarbeitung durch Mustererkennung, Verarbeitung durch KI-Programme etc.) und/oder die Zwischenspeicherung von Zwischenresultaten und/oder die Messungen in einer Folge von Ultraschallmesszyklen und/oder das Auslassen von Phasen innerhalb von Ultraschallmesszyklen einer Folge von Ultraschallmesszyklen betreffen.

Bei einem Kommando und/oder Unterkommando, das der Ultraschallsensor empfängt, kann es sich beispielsweise um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der einen Chirp entsprechend einer zuvor durchgeführten Chirp-Richtung in einem zuvor durchgeführten Ultraschallmesszyklus zeigen soll. Hierdurch ist die erneute Übertragung der Parameter des Ultraschallbursts bzw. des Ultraschallsignals nicht mehr nötig. Bei einem Kommando und/oder Unterkommando, das der Ultraschallsensor empfängt, kann es sich daher beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der einen Chirp entsprechend dem zuletzt unmittelbar zuvor durchgeführten Chirp-Richtung im unmittelbar zuvor durchgeführten Ultraschallmesszyklus zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der einen Chirp entgegen einer zuvor durchgeführten Chirp-Richtung in einem zuvor durchgeführten Ultraschallmesszyklus zeigen soll. Eine im Sinne dieser Schrift gleichwertige Anforderung wäre ein Kommando und/oder ein Unterkommando, das der Ultraschallsensor empfängt, bei dem es sich beispielsweise um ein Kommando bzw. Unterkommando handeln kann, das dem Ultraschallsensor signalisiert, dass der Ultraschallsensor die Messungen in nachfolgenden Ultraschallmessphasen aufeinander folgender Ultraschallmesszyklen mit einem jeweiligen Ultraschallburst jeweils ausführen soll, der einen Chirp entgegen der unmittelbar zuvor durchgeführten Chirp-Richtung in dem unmittelbar zuvor durchgeführten Ultraschallmesszyklus zeigen soll. D.h. Die Chirp-Richtung alterniert dann von Ultraschallmesszyklus zu Ultraschallmesszyklus. Bei einem Kommando und/oder Unterkommando, das der Ultraschallsensor empfängt, kann es sich somit beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der einen Chirp entgegen der zuletzt unmittelbar zuvor durchgeführten Chirp-Richtung im unmittelbar zuvor durchgeführten Ultraschallmesszyklus zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der einen Chirp-Down zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der einen Chirp-down zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der einen Chirp-Up zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der einen Chirp-Up zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der eine vorbestimmte Frequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der eine vorbestimmte Frequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der eine vorbestimmte oder übermittelte Startfrequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der eine vorbestimmte oder übermittelte Startfrequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der eine vorbestimmte oder übermittelte Endfrequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der eine vorbestimmte oder übermittelte Endfrequenz zeigen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer nachfolgenden Ultraschallmessphase mit einem Ultraschallburst ausführen soll, der eine vorbestimmte Anzahl an Ultraschallpulsen aufweisen soll.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in der unmittelbar nachfolgenden Ultraschallmessphase mit einem Ultraschallburst ausführen soll, der eine vorbestimmte Anzahl an Ultraschallpulsen aufweisen soll.

Mit einigen der vorstehenden Kommandos kann das übergeordnete Rechnersystem die ausgesendeten Ultraschallbursts bzw. Ultraschallsignale und weitere Parameter kontrollieren.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Messung in einer oder mehreren nachfolgenden Ultraschallmessphasen mit mehreren aufeinanderfolgenden Ultraschallburst ausführen soll, die jeder für sich eine vorbestimmte Anzahl an Ultraschallpulsen aufweisen sollen.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass in n nachfolgenden Ultraschallmesszyklen des Ultrasachallsensors der Ultraschallsensor die Kommandophase übersprungen soll, wobei n eine ganze positive Zahl größer gleich 0 ist. Dies kann beispielsweise dann hilfreich sein, wenn hintereinander der Ultraschallsensor mehrere Ultraschallmesszyklen mit jeweils unterschiedlichen Ultraschallbursts in der Ultraschallmessphase ausführen soll, wobei sich beispielsweise diese Ultraschallbursts durch die Anzahl ihrer Ultraschallpulse und/oder durch ihre Dauer unterscheiden können.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass ein oder mehrere der vorstehenden Unterkommandos inhaltlich und/oder in ihrer Wirkung umfasst. D.h. dass das hier vorgelegte Dokument auch Sequenzen verschiedener und/oder gleicher Kommandos in einer einzelnen Kommandophase als ein Kommando auffasst. Auch ist es denkbar, ein Datenwort für mehrere Kommandos zu verwenden, bei dem beispielsweise einzelnen Bits bereits ein Kommando darstellen können. In dem Fall kann es sinnvoll sein, wenn die verschiedenen Bits des Datenwortes eines Kommandos je nach logischem Wert verschiedene Kommandos darstellen.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die Ultraschallmessphase nicht ausführen soll, sondern, dass der Ultraschallsensor die Ultraschallmessphase überspringen soll. Dieses Kommando kann beispielsweise sinnvoll sein, wenn das übergeordnete Rechnersystem keine Messung durchführen möchte, sondern nur interne Status- und/oder Messdaten oder sonstige Informationen aus dem Inneren des Ultraschallsensors abrufen möchte.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die dritte Phase des Ultraschallmesszyklus nicht ausführen soll. Dies kann beispielsweise dann sinnvoll sein, wenn der Ultraschallsensor die Messdaten mehrerer Ultraschallmesszyklen zu neuen Daten kombiniert, die das übergeordnete Rechnersystem dann aus dem Ultraschallsensor abruft.

Bei einem Kommando und/oder Unterkommando, das der Ultraschallsensor empfängt, kann es sich aber beispielsweise auch um ein Kommando bzw. Unterkommando handeln, das dem Ultraschallsensor signalisiert, dass der Ultraschallsensor die UART-Kommunikation für einen vorbestimmten Zeitraum und/oder bis zum Auftreten eines Rückschaltsignals in der Datenkommunikation auf ein Kommunikationsprotokoll für die Kommunikation zwischen einem Ultraschallsensor und dem übergeordneten Rechnersystem aus dem Stand der Technik umzustellen und ggf. die UART-Kommunikation entsprechend dem UART-Protokoll für diesen Zeitraum bzw. bis zum Auftreten eines Rückschaltsignals zu unterbrechen.

Dies ermöglicht es, zwischenzeitlich andere Kommunikationsprotokolle zu benutzen, die zumindest temporär für die aktuelle Messaufgabe ggf. geeigneter sein können.

Bevorzugt umfasst der Ultraschallsensor einen Zeitgeber der die UART-Kommunikation nach Ablauf des vorbestimmten Zeitraums in der Datenkommunikation von dem Kommunikationsprotokoll für die Kommunikation zwischen einem Ultraschallsensor und dem übergeordneten Rechnersystem aus dem Stand der Technik wieder zurück auf die hier vorgestellte UART-Kommunikation zurückstellt und ggf. die UART-Schnittstelle des Ultraschallsensors veranlasst, die UART-Kommunikation entsprechend dem UART-Protokoll nach Ablauf dieses Zeitraums wieder aufzunehmen.

Bevorzugt umfasst der Ultraschallsensor eine Kontrollvorrichtung, in Form einer Kontrolllogik, die die UART-Kommunikation bei Vorliegen bestimmter Bedingungen, wie beispielsweise das Ende des Ultraschallmesszyklus in der Datenkommunikation von dem Kommunikationsprotokoll für die Kommunikation zwischen einem Ultraschallsensor und dem übergeordneten Rechnersystem aus dem Stand der Technik wieder zurück auf die hier vorgestellte UART-Kommunikation zurückstellt und ggf. die UART-Schnittstelle des Ultraschallsensors veranlasst, die UART-Kommunikation entsprechend dem UART-Protokoll nach Ablauf dieses Zeitraums wieder aufzunehmen.

Bevorzugt sendet der Ultraschallsensor den Ultraschallburst bzw. das Ultraschallsignal zu Beginn der Ultraschallmessphase entsprechend einem zuvor empfangenen Kommando und/oder Unterkommando aus.

Bevorzugt empfängt dann der Ultraschallsensor ein reflektiertes Ultraschallsignal bzw. einen reflektierten Ultraschallburst als Empfangssignal in der Ultraschallmessphase.

Typischerweise erzeugt der Ultraschallsensor in der Ultraschallmessphase ein Hüllkurvensignal aus dem Empfangssignal.

Bevorzugt erfasst und vermisst der Ultraschallsensor das Hüllkurvensignal in der Ultraschallmessphase nach der Aussendung des Ultraschallbursts bzw. Ultraschallsignals zu und ermittelt typischerweise auf diese Weise eine Messwertfolge. Der Ultraschallsensor und/oder das übergeordnete Rechnersystem werten bevorzugt diese Messwertfolge aus.

Beispielsweise kann der Ultraschallsensor mittels spezieller Vorrichtungsteile dazu eingerichtet sein, aus der Messwertfolge ein oder mehrerer Symbole für ein oder mehrere erkannte Signalobjekte mit jeweils zugehörigen Signalobjektparametern im Hüllkurvensignal zu ermitteln. Dies erlaubt eine sehr kompakte Übertragung der Daten von dem Ultraschallsensor zum übergeordneten Rechnersystem.

Beispielsweise kann der Ultraschallsensor dazu eingerichtet sein, solche Symbole für erkannte Signalobjekte und/oder die Parameter dieser Signalobjekte in der dritten Phase des Ultraschallmesszyklus an das übergeordnete Rechnersystem zu übermitteln.

In einer weiteren Variante des hier vorgestellten Vorschlags sendet der Ultraschallsensor den besagten Ultraschallburst bzw. das besagte Ultraschallsignal zu Beginn der Ultraschallmessphase entsprechend einem zuvor empfangenen Kommando aus.

Typischerweise empfängt der Ultraschallsensor ein reflektiertes Ultraschallsignal bzw. einen reflektierten Ultraschallburst als Empfangssignal in der Ultraschallmessphase.

Bevorzugt bildet der Ultraschallsensor ein Hüllkurvensignal aus dem Empfangssignal des Ultraschalltransducers des Ultraschallsensors in der Ultraschallmessphase.

Bevorzugt vermisst der Ultraschallsensor das Hüllkurvensignal in der Ultraschallmessphase nach der Aussendung des Ultraschallbursts bzw. Ultraschallsignals und ermittelt Messwerte des Hüllkurvensignals in der Ultraschallmessphase bzw. eine entsprechende Messwertfolge.

Bevorzugt signalisiert der Ultraschallsensor an das übergeordnete Rechnersystem das Eintreffen eines Echos beim Ultraschallsensor an das übergeordnete Rechnersystem in der Ultraschallmessphase, wenn der Werteverlauf des Hüllkurvensignals des Ultraschallsensors den Momentanwert einer Schwellwertkurve des Ultraschallsensors in eine erste Richtung kreuzt. Dies bedeutet, dass der Ultraschallsensor bevorzugt das Eintreffen eines Echos beim Ultraschallsensor an das übergeordnete Rechnersystem in der Ultraschallmessphase mit der nächsten steigenden und/oder fallenden Flanke des UART-Taktes und/oder des Takts der Signalverarbeitung und/oder des Sendetakts und/oder des Systemtakts, wenn der Werteverlauf des Hüllkurvensignals des Ultraschallsensors den Momentanwert einer Schwellwertkurve des Ultraschallsensors in eine erste Richtung zwischen der vorausgehenden steigenden und/oder fallenden Flanke und dieser steigenden und/oder fallenden Flanke kreuzt bzw. gekreuzt hat.

Bevorzugt signalisiert der Ultraschallsensor an das übergeordnete Rechnersystem das zeitliche Ende des Eintreffens eines Echos beim Ultraschallsensor in der Ultraschallmessphase mit der nächsten steigenden und/oder fallenden Flanke des UART-Taktes und/oder des Takts der Signalverarbeitung und/oder des Sendetakts und/oder des Systemtakts, wenn der Werteverlauf des Hüllkurvensignals den Momentanwert einer Schwellwertkurve in eine der ersten Richtung entgegengesetzte zweite Richtung kreuzt.

Bevorzugt signalisiert der Ultraschallsensor an das übergeordnete Rechnersystem das Eintreffen von Echos beim Ultraschallsensor an das übergeordnete Rechnersystem in Ultraschallmessphase synchron zu einem Systemtakt des Ultraschallsensors und/oder synchron zu einem UART-Systemtakt der UART-Datenschnittstelle.

Bevorzugt signalisiert der Ultraschallsensor an das übergeordnete Rechnersystem Diagnosedaten wie z.B. HW-Fehler deiner mikroelektronischen Schaltung oder anderer Vorrichtungsteile des Ultraschallsensors und andere Diagnose-Fehler des Ultraschallsensors an das übergeordnete Rechnersystem in der dritten Phase des Ultraschallmesszyklus.

Bevorzugt signalisiert der Ultraschallsensor an das übergeordnete Rechnersystem ermittelte Werte von bis zu vier Echos (Echo-Höhe, zeitliche Echo-Position) als Daten in der dritten Phase des Ultraschallmesszyklus vom Ultraschallsensor an das übergeordnete Rechnersystem.

Wie beschrieben ermöglicht das zusätzliche Synchronisationskommando die Synchronisation des lokalen Taktgebers, des Systemtakts bzw. des UART-Takts untereinander.

Mittels des Umschaltkommandos kann das übergeordnete Rechnersystem das Protokoll geeignet umschalten, was bei bestimmten Nutzungssituationen von Vorteil sein kann. Beispielsweise setzt die UART-Übertragung eine Übertragung gemäß der Folge Datenbit -> Datenbit - > Datenbit -> Datenbit ->... voraus. Aus dem Stand der Technik sind Datenprotokolle mit der Reihenfolge 0->Datum->1->0->Datum->1 bekannt. Beispielsweise ist es denkbar, dass das übergeordnete Rechnersystem den Ultraschallsensor per Kommando in der Kommandophase zwischen diesen Datenprotokoll-Modi hin- und herschalten kann. Im Zuge der Ausarbeitung des hier vorgelegten Vorschlags wurde aber klar, dass die Möglichkeit für ein solches Umschalten in der Regel nicht vorteilhaft ist.

Die Funktion der in jedem Bit erzeugten Flanken der Methode aus dem Stand der Technik ist, dass der Ultraschallsensor mit Hilfe dieser Flanken eine Erfassung der Phasenlage und der Frequenz des Signals der Kommandodaten, die das übergeordnete Rechnersystem dem Ultraschallsensor in der Kommandophase übermittelt, leicht durchführen kann und dann Frequenz und Phasenlage des UART-Takts der UART-Schnittstelle des Ultraschallsensors nachführen kann. Das Signal der Kommandophase umfasst dann also quasi seine Trägerfrequenz.

Da das übergeordnete Rechnersystem den UART-Taktgeber mittels eines Kommandos in einer Kommandophase eines Ultraschallmesszyklus synchronisiert und da der Ultraschalltaktgeber eine ausreichende Stabilität der Frequenz und Phasenlage des UART-Takts der UART-Schnittstelle des Ultraschallsensors aufweisen soll, kann das jeweilige Ultraschallsensorsystem 400, 800 auf diese permanente Übertragung von Flanken verzichten.

Die Konsequenz ist eine erhöhte Datenrate, da die starr festgeschriebenen 0-Bits und 1-Bits überflüssig werden. Der Ultraschallsensor kann also mehr Information bei gleicher zeitlicher Länge eines Ultraschallmesszyklus an das übergeordnete Rechnersystem übertragen.

Bei gleicher zeitlicher Länge der Kommandophase kann das übergeordnete Rechnersystem mehr Kommandos in der Kommandophase an den Ultraschallsensor übertragen. Auch die Anzahl möglicher Inhalte der in der Kommandophase übertragenen Kommandos steigert sich dadurch. Das übergeordnete Rechnersystem kann mehr verschiedene Betriebsmodi an den Ultraschallsensor signalisieren.

Im UART-Modus umfassen die Datenpakete, die das übergeordnete Rechnersystem an den Ultraschallsensor in der Kommandophase sendet, bevorzugt ein Startbit, die Daten und ein Stopp-Bit sowie ggf. ein Parity-Bit.

Bevorzugt kann das übergeordnete Rechnersystem den Ultraschallsensor mittels Kommandos in der Kommandophase über die Anschlüsse der UART-Schnittstelle zwischen einem UART-Modus, der der hier dargelegten Übertragungsmethode entspricht, und einem State-of-The-Art-Modus hin- und herschalten, wobei der State-of-The-Art-Modus einer Datenschnittstelle entspricht, wie sie aus dem Stand der Technik bekannt ist.

Die hier in diesem Dokument offengelegte technische Lehre beschreibt also eine UART-Datenleitung, in deren Signalverlauf der Ultraschallsensor zeitweise die Übertragung von Echosignalen einfügt, wobei während dieser Phase die UART Datenübertragung unterbleibt.

### Vorteile der Erfindung

Die vorliegende Erfindung bietet einen Ultraschallsensor, der insbesondere eine effiziente und sichere Übertragung erfasster Daten in kurzer Zeit erlaubt. Zudem erlaubt der erfindungsgemäße Ultraschallsensor eine flexible Kommunikation mit dem Rechnersystem innerhalb der zweiten Phase, wobei eine Modulation der Pulsdauer zum Einsatz kommen kann, um dem Rechnersystem zusätzliche Informationen zu dem detektierten Echo bereitstellen zu können. Ferner erlaubt es die vorliegende Erfindung, Befehle bzw. Kommandos an den Ultraschallsensor zu übertragen, die Informationen über das durchzuführende Messverfahren umfassen, sowie zusätzliche Daten an das Rechnersystem zu übermitteln, die insbesondere eine verbesserte Validierung der Messdaten durch das Rechnersystem ermöglichen.

Die vorliegenden Erfindung bietet somit eine Erweiterung der aus dem Stand der Technik bekannten UART-Kommunikation, um so die Effizienz der Kommunikation zwischen einem Ultraschallsensor und dem Rechnersystem zu verbessern, ohne dabei die Systemkosten zu erhöhen. Der in diesem Dokument vorgestellte UART-Modus ermöglicht eine Datenübertragungsgeschwindigkeit zwischen dem Ultraschallsensor und dem übergeordneten Rechnersystem, die um den Faktor 2-3 gegenüber der Datenübertragungsrate aus dem Stand der Technik erhöht ist bei gleicher Kommunikationsgeschwindigkeit.

### Liste der Figuren

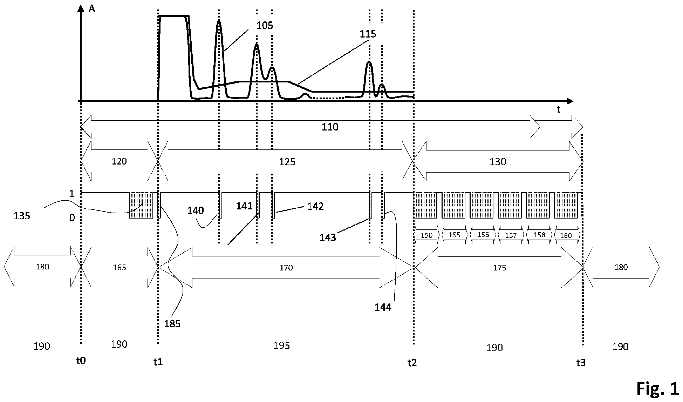

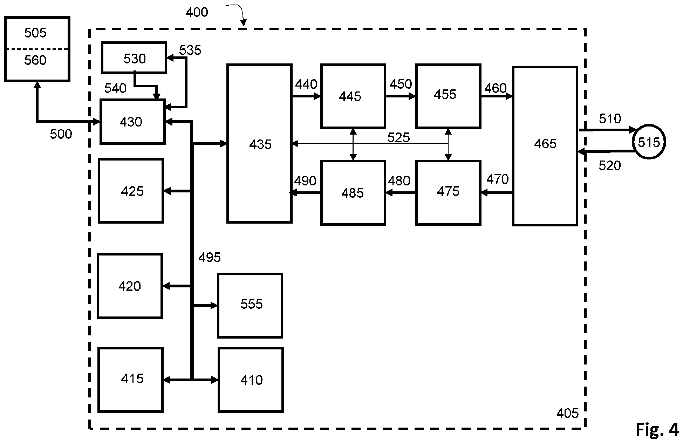

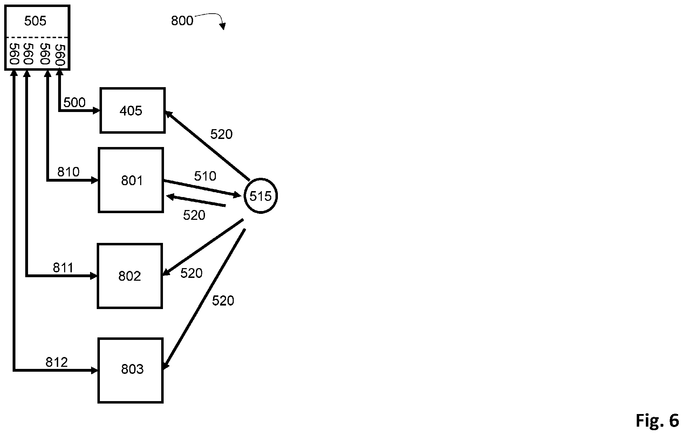

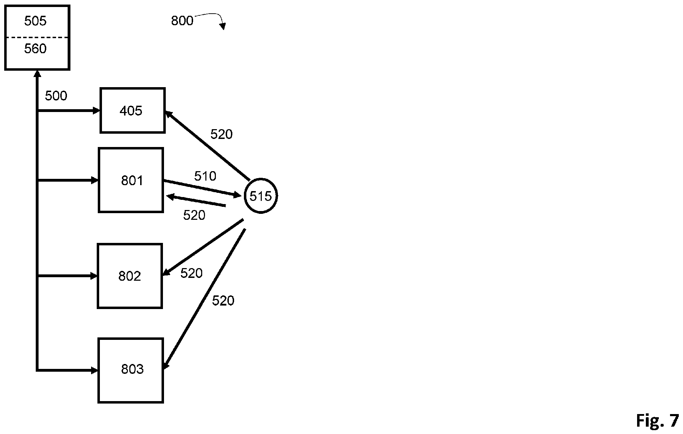

Figur 1
   zeigt die verschiedenen Phasen eines Ultraschallmesszyklus 110 eines Ultraschallsensors 405 und die Kommunikation des Ultraschallsensors 405 und des übergeordneten Rechnersystems 505 über die gemeinsame UART-Schnittstelle während dieses Ultraschallmesszyklus 110.
Figur 2
   zeigt einen ähnlichen Inhalt wie Figur 1, wobei nun das Ultraschalltransducer-Treibersignal 600 eingezeichnet ist.
Figur 3
   schlägt eine neue Kodierung vor, die die die Pulslänge, z.B. in Abhängigkeit der Echoamplitude des jeweiligen Echos moduliert.
Figur 4
   zeigt schematisch ein vorschlagsgemäßes vereinfachtes Ultraschallsystem 400 mit dem Ultraschallsensor 405.
Figur 5
   entspricht weitestgehend der Figur 4 mit dem Unterschied, dass der Datenbus 500 nicht als Eindrahtdatenbus ausgeprägt ist, sondern als Zweidrahtdatenbus.
Figur 6
   zeigt ein Ultraschallsystem 800 mit mehreren Ultraschallsensoren (405, 801 bis 803).
Figur 7
   entspricht der Figur 6, wobei in dem Beispiel der Figur 7 alle diese Ultraschallsensoren (405, 801 bis 803) mittels einer sternförmigen Datenverbindung in der oben beschriebenen Weise mit dem übergeordneten Rechnersystem 505 über eine modifizierte UART-Schnittstelle 560 über einen gemeinsamen Datenbus 500 kommunizieren.

### Beschreibung der Figuren

Figur 1
Figur 1 zeigt die verschiedenen Phasen eines Ultraschallmesszyklus 110 eines Ultraschallsensors 405 und die Kommunikation des Ultraschallsensors 405 und des übergeordneten Rechnersystems 505 über die gemeinsame UART-Schnittstelle während dieses Ultraschallmesszyklus 110.

### Kommunikation über eine getrennte Sende- und Empfangsleitung (545, 550)

Der hier dargestellte Ultraschallmesszyklus 110 beginnt zu einem Zeitpunkt t0 mit der Kommandophase 120. In der Kommandophase 120 überträgt das übergeordnete Rechnersystem 505 ein oder mehrere Kommandos 135 mittels eines UART-Protokolls über die UART-Schnittstellen 560 des übergeordneten Rechnersystems 505 und die UART-Schnittstelle 430 des Ultraschallsensors 405 an den Ultraschallsensor 405. Hinsichtlich der beispielhaften, möglichen Kommandos 135 verweist die Beschreibung dieser Figur auf die obige Beschreibung solcher beispielhaften Kommandos.

Die zeitliche Länge der Kommandophase 120 hängt typischerweise von den übersendeten Kommandos ab. Daher beobachtet die UART-Schnittstelle 430 des Ultraschallsensors 405 auch den Inhalt der Kommandos 135 und prognostiziert das wahrscheinliche Ende der Kommandophase 120. Bevorzugt umfassen die Kommandos 135 an ihrem zeitlichen Ende ein Flag oder ein in seiner Funktion vergleichbares Symbol, das angibt ob noch zumindest ein weiteres Kommando folgt. Es ist natürlich denkbar, dass ein Kommando angeben kann, wie viele Kommandos noch folgen und/oder wie viele Kommando Bits noch folgen und/oder wie viele Kommandobytes noch folgen und/oder wie viele Kommandodatenwörter noch folgen. Neben dieser zeitlichen Steuerung ist es auch denkbar, dass das übergeordnete Rechnersystem 505 mittels eines speziellen Kommandos 135 in der Kommandophase 120 die Kommandophase 120 beendet und damit die Ultraschallmessphase 125 startet. Dieser Start der Ultraschallmessphase 125 kann verzögert zu einem solchen Kommando 136 zur Beendigung der Kommandophase 120 erfolgen. Ein Kommando 135 kann ein oder mehrere Kommandobits umfassen und/oder ein oder mehrere Kommandobytes umfassen und/oder ein oder mehrere Kommandodatenwörter umfassen und oder mehrere Kommandos und /oder Unterkommandos umfassen. Sobald die Kommandos 135 vollständig empfangen sind, endet vorzugsweise die Kommandophase 120. Sofern das gewählte Protokoll es vorsieht, kann auch die zeitliche Länge der Kommandophase 120 in einer Zeiteinheit - z.B. Sekunden - oder in Kommandobits oder dergleichen vorgegeben sein. Im Zweifel kann je UART-Takt des UART-takts 540 der UART-Schnittstelle 430 des Ultraschallsensors 405 beispielsweise ein Bit angenommen werden.

Mit dem Beginn der Ultraschallmessphase 125 wechselt die UART-Schnittstelle 430 des Ultraschallsensors 405 vom UART-Modus 190 in den Signal-Modus 195. Im UART-Modus 190 kommuniziert die UART-Schnittstelle 430 des Ultraschallsensors 405 mittels des UART-Protokolls mit der UART-Schnittstelle 560 des übergeordneten Rechnersystems 505. Bevorzugt startet der Ultraschallsensor 405 in einem definierten zeitlichen Zusammenhang mit dem Beginn 185 der Ultraschallmessphase 125 einen Zeitzähler 555.

In dem Beispiel der Figur 1 liegt der Empfangsanschluss RX der UART-Schnittstelle 430 des Ultraschallsensors 405, wenn das übergeordnete Rechnersystem 505 mittels seines Sendausgangs TX seiner UART-Schnittstelle 560 keine Daten an den Empfangseingang RX der UART-Schnittstelle 430 des Ultraschallsensors 405 sendet, auf einer logischen 1. Bevorzugt beginnt eine Datenübertragung der UART-Schnittstelle 560 des übergeordneten Rechnersystems 505 an die UART-Schnittstelle 430 des Ultraschallsensors 405 mit einem Startbit. Hierzu zieht der Sendeausgang TX der UART-Schnittstelle 560 des übergeordneten Rechnersystems 505 die Empfangsleitung 545 zwischen dem Sendeausgang TX der UART-Schnittstelle 560 des übergeordneten Rechnersystems 505 und dem Empfangseingang RX der UART-Schnittstelle 430 des Ultraschallsensors 405 auf den logischen Pegel 0 für die Dauer eines Datenbits des UART-Takts des UART-Takts der UART-Schnittstelle 560 des übergeordneten Rechnersystems 505. Unmittelbar anschließend folgt typischerweise die Übertragung von acht Datenbits synchron zum besagten UART-Takt. Unmittelbar daran anschließend überträgt die UART-Schnittstelle 560 des übergeordneten Rechnersystems 505 ein Parity-Bit für die übermittelten Daten an die UART-Schnittstelle 430 des Ultraschallsensors 405. Der Ultraschallsensor 405 berechnet ein zweites Parity-Bit auf Basis der empfangenen Datenbist und vergleicht dieses zweite Parity-Bit mit dem von dem übergeordneten Rechnersystem 505 empfangenen Parity-Bit. Sofern die beiden Parity-Bits nicht in dem erwarteten Verhältnis (Gleichheit oder Inversion) zueinanderstehen, schließt der Ultraschallsensor 405 auf einen Fehler. Typischerweise übermittelt das übergeordnete Rechnersystem 505 noch ein Stopp-Bit, das typischerweise eine logische 1 ist.

In der Kommandophase 120 kann das übergeordnete Rechnersystem 505 auch mehr als ein Datum an den Ultraschallsensor 405 übertragen.

Mit dem Ende der Kommandophase 120 und dem Beginn der Ultraschallmessphase 125 arbeitet der Sendeausgang TX der UART-Schnittstelle 430 des Ultraschallsensors 405 vorschlagsgemäß für die Dauer der Ultraschallmessphase 125 nicht mehr als UART-Sendeausgang TX. Mit dem Ende der Kommandophase 120 und dem Beginn der Ultraschallmessphase 125 arbeitet der Empfangseingang RX der UART-Schnittstelle 560 des übergeordneten Rechnersystems 505 für die Dauer der Ultraschallmessphase 125 nicht mehr als UART-Empfangseingang RX.

Es ist vorteilhaft, wenn mit dem Ende der Kommandophase 120 und dem Beginn der Ultraschallmessphase 125 der Empfangseingang RX der UART-Schnittstelle 430 des Ultraschallsensors 405 vorschlagsgemäß für die Dauer der Ultraschallmessphase 125 weiterhin als UART-Empfangseingang arbeitet. Es ist ebenso vorteilhaft, wenn mit dem Ende der Kommandophase 120 und dem Beginn der Ultraschallmessphase 125 der Sendeausgang TX der UART-Schnittstelle 560 des übergeordneten Rechnersystems 505 vorschlagsgemäß für die Dauer der Ultraschallmessphase 125 weiterhin als UART-Sendeausgang arbeitet. Hierdurch kann das übergeordnete Rechnersystem 505 dem Ultraschallsensor 405 weiterhin Befehle senden. Bevorzugt gibt in der Ultraschallmessphase 126 die UART-Schnittstelle 430 des Ultraschallsensors 405 mit dem Systemtakt des Ultraschallsensors 405 und/oder mit dem UART-Takt 540 der UART-Schnittstelle 430 des Ultraschallsensors 405 Signalisierungen 185 über den Sendeausgang TX der UART-Schnittstelle 430 des Ultraschallsensors 405 aus, die typischerweise den Start t1 der Ultraschallmessphase 125 an den Empfangseingang RX der UART-Schnittstelle 560 des übergeordneten Rechnersystems 505 signalisieren. Bevorzugt gibt in der Ultraschallmessphase 126 die UART-Schnittstelle 430 des Ultraschallsensors 405 mit dem Systemtakt des Ultraschallsensors 405 und/oder mit dem UART-Takt 540 der UART-Schnittstelle 430 des Ultraschallsensors 405 Signalisierungen (140, 1421, 142, 143, 144) über den Sendeausgang TX der UART-Schnittstelle 430 des Ultraschallsensors 405 aus, die typischerweise das Eintreffen von Echos in Form reflektierter Ultraschallbursts 520 und/oder reflektierter Ultraschallsignale 520 an den Empfangseingang RX des übergeordneten Rechnersystems 505 signalisieren. Hierzu zieht der Sendeausgang TX der UART-Schnittstelle 430 des Ultraschallsensors 405 als "Startsignal" 185 zu Beginn der Ultraschalmessphase 125 für die Dauer eines oder weniger Perioden des Systemtakts des Ultraschallsensors bzw. für die Dauer eines oder weniger Perioden des UART-Takts 540 der UART-Schnittstelle 430 den logischen Pegel der Leitung 550 zwischen dem Sendeausgang TX der UART-Schnittstelle 430 des Ultraschallsenders 405 und dem Empfangseingang RX der UART-Schnittstelle 560 des übergeordneten Rechnersystems 505 auf eine logische "0". Hierdurch signalisiert der Ultraschallsender 405 dem übergeordneten Rechnersystem 505, dass die Ultraschallmessphase 125 begonnen hat.

Typischerweise beginnt der Ultraschallsensor 405 zeitgleich oder in einer festen zeitlichen Beziehung zu dieser Signalisierung 185 mit der Aussendung eines Ultraschallbursts oder eines Ultraschallsignals 510 in den Freiraum vor dem Ultraschallsensor 405. Objekte 515 im Umfeld des Ultraschallsensors 405 reflektieren diesen Ultraschallburst bzw. das ausgesendete Ultraschallsignal 510.

Es ist auch denkbar, dass der Ultraschallsensor 405 keinen Ultraschallburst bzw. kein Ultraschallsignal 510 aussendet, weil ein anderer Ultraschallsensor 801 eines Ultraschallsensorsystems 800, dessen Teil das übergeordnete Rechnersystem 505 und der Ultraschallsensor 405 sind, diesen Ultraschallburst bzw. das Ultraschallsignal 510 aussenden. Bevorzugt startet das übergeordnete Rechnersystem 505 die Ultraschallmessphase 125 mittels eines gleichzeitigen Kommandos 135 an alle Ultraschallsensoren (405, 801 bis 803) seines Ultraschallmesssystems 800 bei allen an der Messung teilnehmenden Ultraschallsensoren (405, 801 bis 803) die Ultraschallmessphase 125 gleichzeitig, wobei bevorzugt nur ein Ultraschallsensor 801 der Ultraschallsensoren (405, 801 bis 803) des Ultraschallmesssystems 800 einen Ultraschallburst bzw. ein Ultraschallsignal 510 aussendet. Wir nehmen zur Vereinfachung an, dass alle Ultraschallsensoren (405, 801 bis 803) seines Ultraschallmesssystems 800 dem Ultraschallsystem 405 konstruktiv im Wesentlichen entsprechen ohne die Offenbarung hierauf zu beschränken.

Die Ultraschallmessphase 125 gliedert sich typischerweise zeitlich nacheinander in eine Aussendephase, eine Ausschwingphase (zusammen 610) und eine Empfangsphase - auch Messphase 615 genannt.

In der Aussendephase sendet der aussendende Ultraschallsensor 801 den Ultraschallburst bzw. das Ultraschallsignal 520 in den Freiraum in der Umgebung des aussendenden Ultraschallsensors 801. Für den aussendenden Ultraschallsensor 801 folgt dann die Ausschwingphase in der das mechanische Schwingelement des aussenden Ultraschallsensors 801 ausschwingt und in der der aussendende Ultraschallsensor 801 das Schwingelement des aussendenden Ultraschallsensors 801 typischerweise abbremst. Erst dann folgt die Empfangsphase 615 bis zum Ende der Ultraschallmessphase 125 in der der Ultraschallsensor 405 die Reflexionen des Ultraschallbursts bzw. des Ultraschallsignals 510 als Echos in einem reflektierten Ultraschallsignal 520 empfängt.

Die nicht aussendenden Ultraschallsensoren (405, 802, 803) durchlaufen in der Ultraschallmessphase 125 typischerweise keine Sendephase und keine Ausschwingphase (zusammen 610), sondern nur eine Empfangsphase 125.

Bevorzugt ignoriert der aussende Ultraschallsensor 801 das Empfangssignal 470, solange sein Schwingelement noch nicht ausgeschwungen ist und er sich in der Sendephase oder Ausschwingphase (zusammen 610) befindet.

Die Ultraschallsensoren (405, 801 bis 803) des Ultraschallsystems 800 bilden aus den jeweiligen Empfangssignalen 470 ihrer Ultraschallempfänger bzw. Ultraschalltransducer e465 in jeweiliges Hüllkurvensignal 105, das typischerweise den zeitlichen Verlauf der Amplitude des empfangenen Ultraschallsignals 520 wiederspiegelt. Eine I/Q Aufspaltung des jeweiligen Empfangssignals 470 ist im Empfangspfad eines jeden Ultraschallsensors 405 denkbar und typischerweise sinnvoll.

Die Ultraschallsensoren (405, 801 bis 803) des Ultraschallsystems 800 vergleichen in der Empfangsphase 615 der Ultraschallmessphase 125 bevorzugt die Amplitude ihres jeweiligen Hüllkurvensignals 105 mit dem Momentanwert einer vorgegebenen und/oder berechneten und/oder eingestellten jeweiligen Schwellwertkurve 115 des jeweiligen Ultraschallsensors der Ultraschallsensoren (405, 801 bis 803) des Ultraschallsystems 800.

Überschreitet der Momentanwert des jeweiligen Hüllkurvensignals 105 den aktuellen Wert der jeweiligen Schwellwertkurve 115, so zieht der Sendeausgang TX der UART-Schnittstelle 430 des Ultraschallsensors 405 mit der nächsten Flanke und/oder der nächsten steigenden Flanke und/oder der nächsten fallenden Flanke des System-Takts bzw. des UART-Takts 540 den Sendeausgang TX der UART-Schnittstelle 430 des Ultraschallsensors 405 auf eine logische "0". Unterschreitet der Momentanwert des Hüllkurvensignals 105 den aktuellen Wert der Schwellwertkurve 115, so zieht der Sendeausgang TX der UART-Schnittstelle 430 des Ultraschallsensors 405 mit der nächsten Flanke und/oder der nächsten steigenden Flanke und/oder der nächsten fallenden Flanke des System-Takts bzw. des UART-Takts den Sendeausgang TX der UART-Schnittstelle 430 des Ultraschallsensors 405 auf eine logische "1".

Statt dieser Schwellwertkurven 115 gesteuerten Signalisierung ist auch die Signalisierung von Maxima im Hüllkurvensignal 105 denkbar. Hierfür filtert der Ultraschallsensor 405 bevorzugt mittels des Analogteils 475 des Ultraschallempfangspfads des Ultraschallsensors 405 und/oder mittels des Digitalteils 485 des Ultraschallempfangspfads des Ultraschallsensors 405 sein Hüllkurvensignal 105, bevorzugt, um Rauschen und andere Artefakte zu entfernen. Stellt der Ultraschallsensor 405 nun ein Maximum im zeitlichen Werteverlauf seines Hüllkurvensignals 105 fest, so zieht der Sendeausgang TX der UART-Schnittstelle 430 des Ultraschallsensors 405 mit der nächsten Flanke und/oder der nächsten steigenden Flanke und/oder der nächsten fallenden Flanke des System-Takts bzw. des UART-Takts 540 den Sendeausgang TX der UART-Schnittstelle 430 des Ultraschallsensors 405 für eine vordefinierte und/oder eingestellte und/oder programmierte Zeit auf eine logische "0". Die vordefinierte Zeit kann beispielsweise die zeitliche Dauer eines Systemtakts des Ultraschallsensors 405 und/oder die zeitliche Dauer eines UART-Takts 540 und/oder die zeitliche Dauer einer vorgegebenen Anzahl von Systemtakten des Ultraschallsensors 405 und/oder eine die zeitliche Dauer einer vorgegebenen Anzahl von UART-Takten des UART-Takts 540 der UART-Schnittstelle 430 des Ultraschallsensors 405 sein. Die hier vorgelegte Schrift bezeichnet diese vordefinierte Zeit im Folgenden auch als Signalisierungsdauer.

Figur 1 zeigt die Detektion und Signalisierung eines ersten Echos 140 am Beispiel einer Maximumsdetektion eines Maximums im Werteverlauf des Hüllkurvensignals 105 des Ultraschallsensors 405. Bevorzugt speichert der Ultraschallsensor 405 einen ersten Zählerstand des Zeitzählers 555 des Ultraschallsensors 405 als erste Echo-Zeitmarke des ersten Echos 140 ab. Bevorzugt speichert der Ultraschallsensor 405 einen ersten Hüllkurvenamplitudenwert der Hüllkurvenamplitude 105 als erste Echo-Amplitude des ersten Echos 140 zwischen.

Figur 1 zeigt die Detektion und Signalisierung eines zweiten Echos 141 am Beispiel einer Maximumsdetektion eines Maximums im Werteverlauf des Hüllkurvensignals 105 des Ultraschallsensors 405. Bevorzugt speichert der Ultraschallsensor 405 einen zweiten Zählerstand des Zeitzählers 555 des Ultraschallsensors 405 als zweite Echo-Zeitmarke des zweiten Echos 141 ab. Bevorzugt speichert der Ultraschallsensor 405 einen zweiten Hüllkurvenamplitudenwert der Hüllkurvenamplitude 105 als zweite Echo-Amplitude des zweiten Echos 141 zwischen.

Figur 1 zeigt die Detektion und Signalisierung eines dritten Echos als "Echo3-Signal" am Beispiel einer Maximumsdetektion eines Maximums im Werteverlauf des Hüllkurvensignals 105 des Ultraschallsensors 405. Bevorzugt speichert der Ultraschallsensor 405 einen dritten Zählerstand des Zeitzählers 555 des Ultraschallsensors 405 als dritten Echo-Zeitmarke des dritten Echos 142 ab. Bevorzugt speichert der Ultraschallsensor 405 einen dritten Hüllkurvenamplitudenwert der Hüllkurvenamplitude 105 als dritte Echo-Amplitude des dritten Echos 142 zwischen.

Figur 1 zeigt die Detektion und Signalisierung eines vierten Echos als "Echo4-Signal" am Beispiel einer Maximumsdetektion eines Maximums im Werteverlauf des Hüllkurvensignals 105 des Ultraschallsensors 405. Bevorzugt speichert der Ultraschallsensor 405 einen vierten Zählerstand des Zeitzählers 555 des Ultraschallsensors 405 als vierten Echo-Zeitmarke des vierten Echos 143 ab. Bevorzugt speichert der Ultraschallsensor 405 einen vierten Hüllkurvenamplitudenwert der Hüllkurvenamplitude 105 als vierte Echo-Amplitude des vierten Echos 143 zwischen.

Figur 1 zeigt die Detektion und Signalisierung eines fünften Echos 144 am Beispiel einer Maximumsdetektion eines Maximums im Werteverlauf des Hüllkurvensignals 105 des Ultraschallsensors 405. Sofern sinnvoll, speichert der Ultraschallsensor 405 einen fünften Zählerstand des Zeitzählers 555 des Ultraschallsensors als fünftes Echo-Zeitmarke des fünften Echos 144 ab. Sofern sinnvoll, speichert der Ultraschallsensor 405 einen fünften Hüllkurvenamplitudenwert der Hüllkurvenamplitude 105 als fünfte Echo-Amplitude des fünften Echos 144 zwischen.

Es hat sich gezeigt, dass für viele Anwendungsfälle die Abspeicherung der Messwert der ersten vier Echos (140 bis 143) ausreichend ist.

Bevorzugt ist die zeitliche Dauer der Ultraschallmessphase 125 konstruktiv oder durch Einstellung oder durch Programmierung oder mittels eines Kommandos 135 der Kommandophase 120 festgelegt.

Auch kann der Ultraschallsensor 405 auf ein Ende der Ultraschallmessphase 125 schleißen, wenn er für eine vorbestimmte und/oder eingestellte und/oder programmierte Zeitdauer kein Echo mehr festgestellt hat. Der Ultraschallsensor 405 kann unter anderem den Zeitzähler 555 und/oder einen anderen Zeitzähler für die Bestimmung dieser Zeitdauer nutzen.

Bevorzugt stellt das übergeordnete Rechnersystem 505 durch geeignete Kommandos 135 in der Kommandophase 120 sicher, dass alle Ultraschallsensoren (405, 801 bis 803) die Ultraschallmessphase 125 vor Beginn des nächsten, zeitlich nachfolgenden Ultraschallmesszyklus 110 verlassen haben.

Mit dem Ende der Ultraschallmessphase 125 beginnt für den Ultraschallsensor 405 bevorzugt die dritte Phase 130 des Ultraschallmesszyklus 110. In der dritten Phase 130 des Ultraschallmesszyklus 110 überträgt der Ultraschallsensor 405 über den Sendeanschluss TX seiner UART-Schnittstelle 430 Daten (150, 155 bis 158, 160) wie z.B. Auswertungsergebnisse und/oder Mess-, Kontroll- und/oder Diagnosedaten an den Empfangseingang RX der UART-Schnittstelle 560 des übergeordneten Rechnersystems 505. Bevorzugt sendet der Ultraschallsensor 405 als erstes eine Statusinformation 150 in Form eines oder mehrerer Statusbits oder Statusbytes.

Das hier vorgelegte Dokument schlägt vor, dass der Ultraschallsensor 405 über seine UART-Datenschnittstelle 430 danach die zuvor in der Ultraschallmessphase 125 zwischengespeicherten Messwerte der detektierten Echos (140, 141, 142, 143, 144) übersendet.

Das hier vorgelegte Dokument schlägt vor, dass der Ultraschallsensor 405 über seine UART-Datenschnittstelle 430 nach dem Ende der Ultraschallmessphase 125 die zuvor in der Ultraschallmessphase 125 zwischengespeicherten Messwerte der ersten vier detektierten Echos (140, 141, 142, 143) übersendet, da im Rahmen der Ausarbeitung der hier vorgelegten technischen Lehre erkannt wurde, dass die Auswertung dieser ersten vier Echos (140, 141, 142, 143) in der Regel für die meisten Anwendungen ausreichend ist.

Dazu kann der Ultraschallsensor 405 als nächstes die Anzahl der erfassten Echos (140 bis 144) an das übergeordnete Rechnersystem 505 übertragen, was dem übergeordneten Rechnersystem 505 ermöglich zu erkennen, wie viele Echo-Daten in dieser dritten Phase 130 des Ultraschallmesszyklus 110 folgen.

Wie oben beschrieben, startet typischerweise der Ultraschallsensor 405 mit der Übermittlung des Startsignals 185 vom Ultraschallsensor 405 an das übergeordnete Rechnersystem 505 den besagten Zeitzähler 555 des Ultraschallsensor 405, der beispielsweise den Systemtakt des Ultraschallsensors 405 oder einen daraus abgeleiteten Takt zählt. Somit steht dem Ultraschallsensor für jedes aufgetretene Ereignis in der Ultraschallmessphase 125 ein eineindeutiger Zeitstempel zur Verfügung, den der Ultraschallsensor 405 bevorzugt mit den Parametern des Ereignisses, zu denen typischerweise auch die Art des Ereignisses gehören kann, für die Übermittlung an das übergeordnete Rechnersystem 505 in der dritten Phase 130 des Ultraschallmesszyklus 110 zwischenspeichern kann. Eine Übertragung solche Zeitstempel ist nicht nötig, wenn das übergeordnete Rechnersystem in der Ultraschallmessphase die Zeit zwischen dem Startsignal 185 der Ultraschallmessphase oder dem Startsignal 625 der eigentlichen Messphase und dem Auftreten des Signalisierungspulses eines Echos (140 bis 144) erfasst, sich also den eigenen Zeitstempel erzeugt. Durch das Startsignal 185 und die sofortige Signalisierung eines Echos (140 bis 144) kann das übergeordnete Rechnersystem 505 darüber hinaus nicht nur einen eigenen Zeitstempel für jede Signalisierung eines Echos (140 bis 144) erzeugen, sondern auch so die früh auftretenden Echos bereits früh analysieren und verarbeiten, obwohl die Ultraschallmessphase 125 noch nicht zu Ende ist. Dies ist insbesondere in sicherheitsrelevanten Anwendungen von besonderer Wichtigkeit, da früh nach dem Start 185 eintreffende Echos 140 sehr nahen Objekten 515 entsprechen, die dementsprechend in der Regel gefährlicher sind und ggf. eine schnelle Reaktion erfordern.

Bevorzugt überträgt der Ultraschallsensor 405 über den Sendeanschluss TX seiner UART-Schnittstelle 430 in der dritten Phase 130 des Ultraschallmesszyklus 110 die Messwerte des zeitlich als erstes aufgetretenen Echos 140 an den Empfangsanschluss RX der UART-Schnittstelle 560 des übergeordneten Rechnersystems 505. Diese Messwerte des ersten Echos 140 können zum Beispiel der Zeitpunkt (=Zählerstand des Zeitzählers 555 des Ultraschallsensors405) sein, zu dem der Ultraschallsensor 405 ein erstmaliges Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein erstes Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als zweites aufgetretenen Echos 141 an den Empfangsanschluss RX der UART-Schnittstelle 560 des übergeordneten Rechnersystems 505. Diese Messwerte des zweiten Echos 141 können zum Beispiel der Zeitpunkt (=Zählerstand des Zeitzählers 555 des Ultraschallsensors 405) sein, zu dem der Ultraschallsensor 405 ein zweites Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein zweites Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als drittes aufgetretenen Echos 142 an den Empfangsanschluss RX der UART-Schnittstelle 560 des übergeordneten Rechnersystems 505. Diese Messwerte des dritten Echos 142 können zum Beispiel der Zeitpunkt (=Zählerstand des Zeitzählers 555 des Ultraschallsensors 405) sein, zu dem der Ultraschallsensor 405 ein drittes Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein drittes Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als viertes aufgetretenen Echos 143 an den Empfangsanschluss RX der UART-Schnittstelle 560 des übergeordneten Rechnersystems 505. Diese Messwerte des vierten Echos 143 können zum Beispiel der Zeitpunkt (=Zählerstand des Zeitzählers 555 des Ultraschallsensors405) sein, zu dem der Ultraschallsensor 405 ein viertes Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein viertes Auftreten eines Maximums des Hüllkurvensignals 105 oberhalb der Schwellwertkurve 115 in der Ultraschallmessphase 125 ermittelt hat.

Der Ultraschallsensor kann diese Übertragung für beliebig viele Echos zwar in analoger Weise fortsetzen, es hat sich aber gezeigt, dass die Übertragung weiterer Echos in der Regel keinen wesentlichen Informationsgewinn mehr bringt und nur zu einer Verlängerung der zeitlichen Dauer des Ultraschallmesszyklus 125 und der zeitlichen Dauer der dritten Phase 130 des Ultraschallmesszyklus 110 führt, was wiederum die Frequenz der aufeinanderfolgenden Ultraschallmessungen in Form aufeinander folgender Ultraschallmesszyklen 110 des Ultraschallsensors 405 senkt. Dies wiederum ist dann bei der Übertragung von zu vielen Echos nachteilig für die Sicherheit des Fahrzeugs und dessen Insassen.

Bevorzugt schließt eine Übertragung einer oder mehrerer Prüfinformationen 160, beispielsweise in Form einer Check-Summe, beispielsweise in Form eines oder mehrerer CRC-Bytes, die Datenübertragung vom Ultraschallsensor 405 über den Sendeanschluss TX der UART-Schnittstelle 430 des Ultraschallsensors 405 an den Empfangsanschluss RX der UART-Schnittstelle 560 des übergeordneten Rechnersystems 505 und damit die dritte Phase 130 des Ultraschallmesszyklus 110 ab.

Mit dem Abschluss der Übertragung der letzten Daten, also des letzten Bits endet frühestens somit die dritte Phase 130 des Ultraschallmesszyklus 110. Eine Möglichkeit zur Sicherstellung, dass das übergeordnete Rechnersystem 505 das Ende der dritten Phase 130 des Ultraschallmesszyklus 110 erkennt, kann sein, dass der Ultraschallsensor 405 zum Ersten am Beginn der Datenübertragung zu Beginn der dritten Phase 130 des Ultraschallmesszyklus 110 eine Information über die maximale zeitliche Länge der dritten Phase 130 des Ultraschallmesszyklus s110 an das übergeordnete Rechnersystem 505 endet und/oder zum Zweiten am Ende der Datenübertragung in der dritten Phase 130 des Ultraschallmesszyklus 110 einen Daten-Ende-Kode an das übergeordnete Rechnersystem 505 sendet, der es dem übergeordneten Rechnersystem 505 ermöglicht, das Ende der Datenübertragung zu erkennen oder zu berechnen. Bevorzugt sendet der Ultraschallsensor 405 einen solchen Daten-Ende-Kode nämlich vor den Prüfinformationen 160, die dem übergeordneten Rechnersystem 505 die Überprüfung des korrekten Empfangs der Daten in der dritten Phase 130 des Ultraschallmesszyklus 110 ermöglichen. Somit muss das übergeordnete Rechnersystem 505 diese Zeit noch bei der Berechnung des Endes des Ultraschallmesszyklus 110 ggf. noch berücksichtigen.

Nach dem Ende der dritten Phase 130 des Ultraschallmesszyklus 110 schaltet die UART-Schnittstelle 560 des übergeordneten Rechnersystems 505 bevorzugt wieder in einen Zustand entsprechend der Kommandophase 120 und/oder einen äquivalenten Zustand.

### Kommunikation über eine einzelne Datenleitung

Neben der Kommunikation über zwei Datenleitungen (545, 550) ist aber auch die Kommunikation über eine einzelne Datenleitung möglich.

Nach dem Einschalten oder Zurücksetzen des Ultraschallsensorsystems 400 befindet sich die UART-Datenschnittstelle 430 des Ultraschallsensors 405 im UART-Empfangszustand. Die UART-Datenschnittstelle 560 des übergeordneten Rechnersystems 505 befindet sich dann im UART-Sendezustand. Bevorzugt ist die UART-Schnittstelle 430 des Ultraschallsensors 405 so ausgelegt, dass eine logische 0 der UART-Datenschnittstelle 560 des übergeordneten Rechnersystems 505 eine logische 1, die die UART-Schnittstelle 430 des Ultraschallsensors 405 auf den Eindrahtdatenbus 500 legen will, überschreiben kann. Bevorzugt ist die UART-Schnittstelle 560 des übergeordneten Rechnersystems 505 so ausgelegt, dass eine logische 0 der UART-Datenschnittstelle 430 des Ultraschallsensors 405 eine logische 1, die die UART-Schnittstelle 560 des übergeordneten Rechnersystems 505 auf den Eindrahtdatenbus 500 legen will, überschreiben kann.

Bevorzugt beobachtet die UART-Schnittstelle 430 des Ultraschallsensors 405 die Daten auf dem Eindrahtdatenbus 500. Will die UART-Schnittstelle 430 des Ultraschallsensors 405 eine logische 1 auf den Eindrahtdatenbus 500 schreiben und stellt dann die UART-Schnittstelle 430 des Ultraschallsensors 405 eine 0 auf dem Eindrahtdatenbus 500 fest, so geht die UART-Datenschnittstelle 430 des Ultraschallsensors 403 typischerweise von einer Bus-Kollision aus. Bevorzugt wechselt die UART-Datenschnittstelle 430 des Ultraschallsensors 405 dann in den Empfangszustand der UART-Datenschnittstelle 430 des Ultraschallsensors 405.

In der Kommandophase befindet sich die UART-Schnittstelle 560 des übergeordneten Rechnersystems 505 typischerweise im Sendezustand der UART-Schnittstelle 560 des übergeordneten Rechnersystems 505.

In der Kommandophase befindet sich die UART-Schnittstelle 430 des Ultraschallsensors 405 typischerweise im Empfangszustand der UART-Schnittstelle 430 des Ultraschallsensors 405.

In der Ultraschallmessphase 125 befindet sich die UART-Schnittstelle 560 des übergeordneten Rechnersystems 505 typischerweise im Empfangszustand der UART-Schnittstelle 560 des übergeordneten Rechnersystems 505.

In der Ultraschallmessphase 125 befindet sich die UART-Schnittstelle 430 des Ultraschallsensors 405 typischerweise im Sendezustand der UART-Schnittstelle 430 des Ultraschallsensors 405.

In der dritten Phase 130 des Ultraschallmesszyklus 110 befindet sich die UART-Schnittstelle 560 des übergeordneten Rechnersystems 505 typischerweise im Empfangszustand der UART-Schnittstelle 560 des übergeordneten Rechnersystems 505.

In der dritten Phase 130 des Ultraschallmesszyklus 110 befindet sich die UART-Schnittstelle 430 des Ultraschallsensors 405 typischerweise im Sendezustand der UART-Schnittstelle 430 des Ultraschallsensors 405.

Daher muss das Ultraschallsensorsystem 400 sicherstellen, dass die UART-Schnittstelle 560 des übergeordneten Rechnersystems 505 beim Wechsel von der Kommandophase 120 in die Ultraschallmessphase 125 vom Sendezustand in den Empfangszustand wechselt.

Außerdem muss das Ultraschallsensorsystem 400 sicherstellen, dass die UART-Schnittstelle 430 des Ultraschallsensors 405 beim Wechsel von der Kommandophase 120 in die Ultraschallmessphase 125 vom Empfangszustand in den Sendezustand wechselt.

Des Weiteren muss das Ultraschallsensorsystem 400 sicherstellen, dass die UART-Schnittstelle 560 des übergeordneten Rechnersystems 505 beim Wechsel von der dritten Phase 130 des Ultraschallmesszyklus 110 in die Kommandophase 120 vom Empfangszustand in den Sendezustand wieder zurückwechselt.

Außerdem muss das Ultraschallsensorsystem 400 sicherstellen, dass die UART-Schnittstelle 430 des Ultraschallsensors 405 beim Wechsel von der dritten Phase 130 des Ultraschallmesszyklus 110 in die Kommandophase 120 vom Sendezustand in den Empfangszustand wechselt.

Hierzu schlägt das hier vorgelegte Dokument vor, dass das letzte Kommando 136 des übergeordneten Rechnersystems 505 an den Ultraschallsensor 405 zum zeitlichen Ende der Kommandophase 120 ein Kommando zum Wechsel in die Ultraschallmessphase 125 für den Ultraschallsensor 405 ist. Nach dem Empfang dieses Kommandos 136 wechselt der Ultraschallsensor 405 in die Ultraschallmessphase 125. Bevorzugt liegt zwischen dem Empfang des Kommandos 136 zum Zustandswechsel und Start der Ultraschallmessphase 125 einerseits und diesem Zustandswechsel andererseits eine Wartezeit, die vorgegeben, eingestellt oder programmiert sein kann. Die zeitliche Länge kann 0s betragen, was aber nicht bevorzugt ist. Bevorzugt steuert ein Zeitzähler 555 im Ultraschallsensor 405 diese Wartezeit. Bevorzugt gibt in der Ultraschallmessphase 125 die UART-Schnittstelle 430 des Ultraschallsensors 405 mit dem Systemtakt des Ultraschallsensors 405 und/oder mit dem UART-Takt 540 der UART-Schnittstelle 430 des Ultraschallsensors 405 Signalisierungen 185 über den Sendeausgang TX der UART-Schnittstelle 430 des Ultraschallsensors 405 auf den Eindrahtdatenbus 500 aus, die typischerweise den Start 185 der Ultraschallmessphase 125 an den Empfangseingang TX der UART-Schnittstelle 560 des übergeordneten Rechnersystems 505 signalisieren. Bevorzugt gibt in der Ultraschallmessphase 125 die UART-Schnittstelle 430 des Ultraschallsensors 405 mit dem Systemtakt des Ultraschallsensors 405 und/oder mit dem UART-Takt 540 der UART-Schnittstelle 430 des Ultraschallsensors 405 Signalisierungen (140 bis 144) über den Sendeausgang TX der UART-Schnittstelle 430 des Ultraschallsensors 405 auf den Eindrahtdatenbus 500 aus, die typischerweise das Eintreffen von Echos (140 bis 144) in Form reflektierter Ultraschallbursts und/oder reflektierter Ultraschallsignale 520 an den Empfangseingang TX der UART-Schnittstelle 560 des übergeordneten Rechnersystems 505 signalisieren. Hierzu zieht der Anschluss der UART-Schnittstelle 430 des Ultraschallsensors 405 den Eindrahtdatenbus 500 als "Startsignal" 185 zu Beginn der Ultraschalmessphase 125 für die Dauer eines oder weniger Perioden des Systemtakts des Ultraschallsensors 405 bzw. für die Dauer eines oder weniger Perioden des UART-Takts 540 der UART-Schnittstelle 430 den logischen Pegel des Eindrahtdatenbusses 500 zwischen dem Anschluss der UART-Schnittstelle 430 des Ultraschallsenders 405 und dem entsprechenden Anschluss der UART-Schnittstelle 560 des übergeordneten Rechnersystems 505 auf eine logische "0". Hierdurch signalisiert der Ultraschallsender 405 dem übergeordneten Rechnersystem 505, dass die Ultraschallmessphase 125 begonnen hat.

Für den Fall, dass die UART-Schnittstelle 430 des Ultraschallsensors 405 eine Buskollision nach dieser Signalisierung in der Ultraschallmessphase 125 zu irgendeinem Zeitpunkt feststellt, schlägt das hier vorgestellte Dokument vor, dass dann der Ultraschallsensor 405 die Ultraschallmessphase 125 verlässt und wieder in die Kommandophase 120 wechselt. In einem solchen Fehlerfall wechselt dann der Zustand der UART-Schnittstelle 430 des Ultraschallsensors 405 vorschlagsgemäß wieder in den Empfangszustand.

Über ihre UART-Schnittstelle 560 detektiert somit das übergeordnete Rechnersystem 505 den Beginn der Ultraschallmessphase 125 des Ultraschallsensors 405 und startet ggf. einen Zeitzähler des übergeordneten Rechnersystems 505, um Laufzeiten der Reflexionen des vom Ultraschallsensor 405 ausgesendeten Ultraschallbursts 510 bzw. des vom Ultraschallsensor 405 ausgesendeten Ultraschallsignals 510 zu erfassen.

Typischerweise beginnt der Ultraschallsensor 405, wenn keine Buskollision vorliegt, zeitgleich oder in einer festen zeitlichen Beziehung zu dieser Start-Signalisierung 185 der UART-Schnittstelle 430 des Ultraschallsensors 405 mit der Aussendung eines Ultraschallbursts oder eines Ultraschallsignals 510 in den Freiraum vor dem Ultraschallsensor 405. Objekte 515 im Umfeld des Ultraschallsensors 405 reflektieren diesen Ultraschallburst 510 bzw. das ausgesendete Ultraschallsignal 510 als reflektierten Ultraschallburst 520 bzw. reflektiertes Ultraschallsignal 520.

Es ist auch denkbar, dass der Ultraschallsensor 405 keinen Ultraschallburst bzw. kein Ultraschallsignal 510 aussendet, weil ein anderer Ultraschallsensor der Ultraschallsensoren (405, 801 bis 803) eines Ultraschallsensorsystems 800, dessen Teil das übergeordnete Rechnersystem 505 und der Ultraschallsensor 405 sind, diesen Ultraschallburst bzw. das Ultraschallsignal 510 aussenden. Bevorzugt startet das übergeordnete Rechnersystem 505 die Ultraschallmessphase 125 mittels eines gleichzeitigen Kommandos 136 an alle Ultraschallsensoren (405, 801 bis 803) seines Ultraschallmesssystems (800) bei allen an der Messung teilnehmenden Ultraschallsensoren 405, 801 bis 803) die Ultraschallmessphase 125 gleichzeitig, wobei bevorzugt nur einer der Ultraschallsensoren 801 des Ultraschallmesssystems 800 einen Ultraschallburst bzw. ein Ultraschallsignal 510 aussendet. Zur Vereinfachung nimmt das hier vorgelegte Dokument an, dass alle Ultraschallsensoren (405, 801 bis 803) des Ultraschallsensorsystems 800 in gleicher Weise konstruiert sind, ohne die hier offengelegte technische Lehre hierauf zu begrenzen.

Die Ultraschallmessphase 125 gliedert sich typischerweise zeitlich nacheinander in eine Sendephase, eine Ausschwingphase (zusammen 610) und eine Empfangsphase 615.

In der Aussendephase sendet der aussendende Ultraschallsensor 405 den Ultraschallburst bzw. das Ultraschallsignal 510 in den Freiraum in der Umgebung des aussendenden Ultraschallsensors 801. Für den aussendenden Ultraschallsensor 801 folgt dann die Ausschwingphase in der das mechanische Schwingelement ausschwingt und in der der aussendende Ultraschallsensor 801 das Schwingelement typischerweise abbremst. Erst dann folgt für den aussenden Ultraschallsensor 801 die Empfangsphase 615 bis zum Ende der Ultraschallmessphase 125 in der der aussendende Ultraschallsensor 801 die Reflexionen des Ultraschallbursts bzw. des Ultraschallsignals 520 als Echos empfängt.

Die nicht aussendenden Ultraschallsensoren (405, 802, 803) durchlaufen in der Ultraschallmessphase 125 typischerweise keine Sendephase und keine Ausschwingphase, sondern nur eine Empfangsphase 165.

Bevorzugt ignoriert der aussende Ultraschallsensor 801 das Empfangssignal 470, solange sein Schwingelement noch nicht ausgeschwungen ist und er sich in der Sendephase oder Ausschwingphase befindet.

Die Ultraschallsensoren (405, 801 bis 803) des Ultraschallsystems 800 bilden aus den jeweiligen Empfangssignalen 470 ihrer Ultraschallempfänger bzw. Ultraschalltransducer 465 ein jeweiliges Hüllkurvensignal 105, das typischerweise den zeitlichen Verlauf der jeweiligen Amplitude des jeweils empfangenen Ultraschallsignals 520 wiederspiegelt.

Die Ultraschallsensoren (405, 801 bis 803) vergleichen in der Empfangsphase 615 der Ultraschallmessphase 125 jeweils die jeweilige Amplitude ihres jeweiligen Hüllkurvensignals 105 mit dem Momentanwert einer vorgegebenen und/oder berechneten und/oder eingestellten jeweiligen Schwellwertkurve 115 des jeweiligen Ultraschallsensors der Ultraschallsensoren (405, 801 bis 803).

Überschreitet der Momentanwert des Hüllkurvensignals 105 den aktuellen Wert der Schwellwertkurve 115, so zieht der Anschluss der UART-Schnittstelle 430 des Ultraschallsensors 405 an den Eindrahtdatenbus 500 mit der nächsten Flanke und/oder der nächsten steigenden Flanke und/oder der nächsten fallenden Flanke des System-Takts bzw. des UART-Takts 540 des Ultraschallsensors 405 den Anschluss der UART-Schnittstelle 430 an den Eindrahtdatenbus 500 und damit den Eindrahtdatenbus 500 auf eine logische "0". Unterschreitet der Momentanwert des Hüllkurvensignals 105 den aktuellen Wert der Schwellwertkurve 115, so zieht der Ausgang der UART-Schnittstelle 430 des Ultraschallsensors 405 an den Eindrahtdatenbus 500 mit der nächsten Flanke und/oder der nächsten steigenden Flanke und/oder der nächsten fallenden Flanke des System-Takts bzw. des UART-Takts 540 den Anschluss der UART-Schnittstelle 430 an den Eindrahtdatenbus 500 und damit den Eindrahtdatenbus 500 auf eine logische "1", wenn kein anderer Busknoten den Eindrahtdatenbus 500 auf eine logische "0" zeiht.

Statt dieser Schwellwertkurven 115 gesteuerten Signalisierung ist auch die Signalisierung von Maxima denkbar. Hierfür filtert der Ultraschallsensor 405 sein Hüllkurvensignal 105, bevorzugt, um Rauschen und andere Artefakte zu entfernen. Stellt der Ultraschallsensor 405 nun ein Maximum im zeitlichen Werteverlauf seines Hüllkurvensignals 105 fest, so zieht der Anschluss der UART-Schnittstelle 430 des Ultraschallsensors 405 an den Eindrahtdatenbus 500 den Eindrahtdatenbus 500 mit der nächsten Flanke und/oder der nächsten steigenden Flanke und/oder der nächsten fallenden Flanke des System-Takts bzw. des UART-Takts 540 den Anschluss der UART-Schnittstelle 430 des Ultraschallsensors 405 an den Eindrahtdatenbus 500 und damit den Eindrahtdatenbus 500 für eine vordefinierte und/oder eingestellte und/oder programmierte Zeit auf eine logische "0". Die vordefinierte Zeit kann beispielsweise die zeitliche Dauer eines Systemtakts des Ultraschallsensors 405 und/oder die zeitliche Dauer eines UART-Takts 540 der UART-Schnittstelle 430 des Ultraschallsensors 405 und/oder die zeitliche Dauer einer vorgegebenen Anzahl von Systemtakten des Ultraschallsensors 405 und/oder eine die zeitliche Dauer einer vorgegebenen Anzahl von UART-Takten 540 der UART-Schnittstelle 430 des Ultraschallsensors 405 sein. Die hier vorgelegte Schrift bezeichnet diese vordefinierte Zeit im Folgenden auch als Signalisierungsdauer.

Figur 1 zeigt die Detektion und Signalisierung eines ersten Echos 140 am Beispiel einer Maximumsdetektion. Bevorzugt speichert der Ultraschallsensor 405 einen ersten Zählerstand des Zeitzählers 555 des Ultraschallsensors 405 als erste Echo-Zeitmarke des ersten Echos 140 ab. Bevorzugt speichert der Ultraschallsensor 405 einen ersten Hüllkurvenamplitudenwert der Hüllkurvenamplitude 101 als erste Echo-Amplitude des ersten Echos 140 zwischen.

Figur 1 zeigt die Detektion und Signalisierung eines zweiten Echos 141 am Beispiel einer Maximumsdetektion. Bevorzugt speichert der Ultraschallsensor 405 einen zweiten Zählerstand des Zeitzählers 555 des Ultraschallsensors 405 als zweite Echo-Zeitmarke des zweiten Echos 141 ab. Bevorzugt speichert der Ultraschallsensor 405 einen zweiten Hüllkurvenamplitudenwert der Hüllkurvenamplitude 105 als zweite Echo-Amplitude des zweiten Echos 141 zwischen.

Figur 1 zeigt die Detektion und Signalisierung eines dritten Echos 142 am Beispiel einer Maximumsdetektion. Bevorzugt speichert der Ultraschallsensor 405 einen dritten Zählerstand des Zeitzählers 555 des Ultraschallsensors 405 als dritten Echo-Zeitmarke des dritten Echos 142 ab. Bevorzugt speichert der Ultraschallsensor 405 einen dritten Hüllkurvenamplitudenwert der Hüllkurvenamplitude 105 als dritte Echo-Amplitude des dritten Echos 142 zwischen.

Figur 1 zeigt die Detektion und Signalisierung eines vierten Echos als 143 am Beispiel einer Maximumsdetektion. Bevorzugt speichert der Ultraschallsensor 405 einen vierten Zählerstand des Zeitzählers 555 des Ultraschallsensors als vierten Echo-Zeitmarke des dritten Echos 143 ab. Bevorzugt speichert der Ultraschallsensor 405 einen vierten Hüllkurvenamplitudenwert der Hüllkurvenamplitude 105 als vierte Echo-Amplitude des vierten Echos 143 zwischen.

Figur 1 zeigt die Detektion und Signalisierung eines fünften Echos 144 am Beispiel einer Maximumsdetektion. Sofern sinnvoll, speichert der Ultraschallsensor 405 einen fünften Zählerstand des Zeitzählers 555 des Ultraschallsensors als fünftes Echo-Zeitmarke des fünften Echos 144 ab. Sofern sinnvoll, speichert der Ultraschallsensor 405 einen fünften Hüllkurvenamplitudenwert der Hüllkurvenamplitude 105 als fünfte Echo-Amplitude des fünften Echos 144 zwischen.

Es hat sich gezeigt, dass für viele Anwendungsfälle die Abspeicherung der Messwert der ersten vier Echos (140 bis 143) ausreichend ist.

Bevorzugt ist die zeitliche Dauer der Ultraschallmessphase 125 konstruktiv oder durch Einstellung oder durch Programmierung oder mittels eines Kommandos 135 des übergeordneten Rechnersystems 505 aus der Kommandophase 120 festgelegt.

Auch kann der Ultraschallsensor 405 auf ein Ende der Ultraschallmessphase 125 schließen, wenn er für eine vorbestimmte und/oder eingestellte und/oder programmierte Zeitdauer kein Echo mehr festgestellt hat.

Bevorzugt stellt das übergeordnete Rechnersystem 505 durch geeignete Kommandos 136 in der Kommandophase 120 sicher, dass alle Ultraschallsensoren (405, 801 bis 803) die Ultraschallmessphase 125 vor Beginn des nächsten Ultraschallmesszyklus 125 verlassen haben.

Bevorzugt ist die UART-Schnittstelle 560 des übergeordneten Rechnersystems 505 in der Lage in besonderen Fällen, eine logische "1" auf den Eindrahtdatenbus 500 zu legen, die eine logische "0" der UART-Schnittstelle 430 eines Ultraschallsensors 405 überschreibt. Bevorzugt überprüfen die UART-Schnittstellen 430 der Ultraschallsensoren 405, ob jede auf den Bus 500 gelegte logische "0" auch dort als logische "0" erscheint. Stellen die UART-Schnittstellen 430 der Ultraschallsensoren 405 eine solche Buskollision fest, weil die UART-Schnittstelle 430 des Ultraschallsensors 405 auf dem Eindrahtdatenbus 500 eine logische "1" feststellt, obwohl sie eine logische "0" eingeschrieben und daher erwartet hat, so geht die UART-Schnittstelle 430 bevorzugt von einer Buskollision aus. Das hier vorgelegte Dokument schlägt vor, dass dann der Ultraschallsensor 405 wieder in die Kommandophase 120 wechselt und die UART-Schnittstelle 430 des Ultraschallsensors 405 wieder in den Empfangszustand wechselt. Die UART-Schnittstelle 560 des übergeordneten Rechnersystems 505 oder eine andere Teilvorrichtung des Ultraschallsensorsystems 400, 800 (z.B. ein Pull-Up-Buswiderstand) legen auf den Datenbus 500, wenn sie keine logische "0" auf dem Eindrahtdatenbus einprägen, eine logische "1" auf den Eindrahtdatenbus 500, die andere Busteilnehmer mit einer logischen "0" bei Bedarf überschreiben können. Nur in den besagten besonderen Fällen, wenn beispielsweise das übergeordnete Rechnersystem 505 die Zustände aller Busteilnehmer und Ultraschallsensoren (405, 801 bis 803) am Eindrahtdatenbus 500 zurücksetzen will, ist vorschlagsgemäß vorgesehen, dass dann das übergeordnete Rechnersystem 505 eine logische "1" einprägen kann, die die anderen Busteilnehmer und Ultraschallteilnehmer am Eindrahtdatenbus 500 mit ihren UART-Schnittstellen 430 nicht überschreiben können.

Das hiervorgestellte Verfahren ermöglicht eine schnelle Kommunikation und damit die Verwendung zusätzlicher Informationen zur Absicherung der Datenkommunikation zwischen dem Ultraschallsensor 405 und dem übergeordneten Rechnersystem 505. Zusätzliche Bits zur Absicherung der Kommunikationsgeschwindigkeit stehen daher zur Verfügung. Durch den zeitlichen Vorteil des UART-Modus 190 lassen sich weitere Bits hinzufügen, ohne dass dabei die Kommunikationszeit gegenüber Methoden aus dem Stand der Technik für die Kommunikation zwischen Ultraschallsensor 405 und übergeordnetem Rechnersystem 505 verlängert wird. Zudem wird die Kommunikation zwischen Ultraschallsensor 405 und übergeordnetem Rechnersystem 505 robuster bzw. der Ultraschallsensor 405 und das übergeordnete Rechnersystem 505 können Fehler während der Kommunikation können erkennen. Das übergeordnete Rechnersystem 505 und der Ultraschallsensor können solche Fehler daher auch besser behandeln und eindämmen.

Für das Startkommando oder das Kommando 136 zum Konfigurieren des Ultraschallsensors 405 bietet sich hier ein zusätzliches Parity-Bit zur Absicherung an.

Eine Möglichkeit für die beispielhafte Gestaltung eines beispielhaften Kommandos 135 der Kommandophase 120 ist die Verwendung eines Ein-Byte-kommandos, bei dem die 8 Bits des Ein-Byte-Kommandos 135 in 3 Bits für das Kommando (z.B. Start einer Messung oder Konfiguration des Ultraschallsensors 405) und weiteren 4 Bits für die Konfiguration des Kommandos (z.B. welches Messprofil) und einem Parity-Bit zur Absicherung aufgeteilt ist. Der Ultraschallsensor 405 überprüft das Parity-Bit des empfangenen Kommandos 135 und führt das Kommando 135 nur dann aus, wenn das Parity-Bit dem entsprechend den anderen empfangenen Bits des Kommandos 135 zu erwartenden Parity-Bit entspricht.

Die Status- und Echoinformationen (150, 155 bis 158, 160), sowie weitere Daten zur Sensor-Konfiguration lassen sich mittels CRC-Statusdaten 160 absichern.

Das hier vorgeschlagene Verfahren verwendet bevorzugt einen 8-Bit-CRC damit die CRC-Prüfsumme genau so lang ist, wie die einzelnen 8-Bit-UART-Datenpakete des UART-Datenprotokolls.

Mit dem Ende der Ultraschallmessphase 125 beginnt auch bei Verwendung eine Eindrahtdatenbusses 500 bevorzugt wieder die dritte Phase 130 des Ultraschallmesszyklus 110. In der dritten Phase 130 des Ultraschallmesszyklus 110 befindet sich typischerweise die UART-Schnittstelle 560 des übergeordneten Rechnersystems 555 im Empfangszustand und die UART-Schnittstelle 430 des Ultraschallsensors 405 im Sendezustand. Die UART-Schnittstelle 560 des übergeordneten Rechnersystems 505 und die UART-Schnittstelle 430 des Ultraschallsensors 405 tauschen typischerweise in der dritten Phase 130 des Ultraschallmesszyklus 110 die Daten zumindest zweitweise bevorzugt entsprechend dem UART-Protokoll aus.

In der dritten Phase 130 des Ultraschallmesszyklus 110 überträgt der Ultraschallsensor 405 über den Eindrahtdatenbusanschluss seiner UART-Schnittstelle 430 Auswertungsergebnisse und/oder Mess-, Kontroll- und/oder Diagnosedaten an den Eindrahtdatenbusanschluss der UART-Schnittstelle 560 des übergeordneten Rechnersystems 505 über den Eindrahtdatenbus 500 im UART-Protokoll. Bevorzugt sendet der Ultraschallsensor 405 über den Eindrahtdatenbus 500 als erstes eine Statusinformation 150 in Form eines oder mehrerer Statusbits oder Statusbytes.

Das hier vorgelegte Dokument schlägt vor, dass der Ultraschallsensor 405 über seine UART-Datenschnittstelle 430 danach die zuvor in der Ultraschallmessphase 125 zwischengespeicherten Messwerte der detektierten Echos (140 bis 144) übersendet. Das hier vorgelegte Dokument schlägt außerdem vor, dass der Ultraschallsensor 405 über seine UART-Datenschnittstelle 430 danach die zuvor in der Ultraschallmessphase 125 zwischengespeicherten Messwerte der ersten vier in der Ultraschallmessphase 125 detektierten Echos (140 bis 143) übersendet.

Dazu kann der Ultraschallsensor 405 als nächstes die Anzahl der erfassten Echos (140 bis 144) an das übergeordnete Rechnersystem 505 übertragen, was dem übergeordneten Rechnersystem 505 ermöglicht zu erkennen, wie viele Echo-Daten in der dritten Phase 130 des Ultraschallmesszyklus 110 folgen.

Wie oben beschrieben, startet typischerweise der Ultraschallsensor 405 mit der Übermittlung des Startsignals 185 vom Ultraschallsensor 405 an das übergeordnete Rechnersystem 505 den besagten Zeitzähler 555 des Ultraschallsensors 405, der beispielsweise den Systemtakt des Ultraschallsensors 405 oder einen daraus abgeleiteten Takt zählt. Somit steht dem Ultraschallsensor 405 für jedes aufgetretene Ereignis in der Ultraschallmessphase 125 ein eineindeutiger Zeitstempel zur Verfügung, den der Ultraschallsensor 405 bevorzugt mit den Parametern des Ereignisses, zu denen typischerweise auch die Art des Ereignisses gehören kann, für die Übermittlung an das übergeordnete Rechnersystem 505 in der dritten Phase 130 des Ultraschallmesszyklus 125 zwischenspeichern kann.

Bevorzugt überträgt der Ultraschallsensor 405 über den Sendeanschluss TX seiner UART-Schnittstelle 430 die Messwerte des zeitlich als erstes aufgetretenen Echos 140 an den Empfangsanschluss RX der UART-Schnittstelle 560 der übergeordneten Rechnersystems 505. Diese Messwerte des ersten Echos 140 können zum Beispiel der Zeitpunkt (=Zählerstand des Zeitzählers 555 des Ultraschallsensors 405) sein, zu dem der Ultraschallsensor 405 ein erstmaliges Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein erstes Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als zweites aufgetretenen Echos 141 an den Empfangsanschluss RX der UART-Schnittstelle 560 des übergeordneten Rechnersystems 505. Diese Messwerte des zweiten Echos 141 können zum Beispiel der Zeitpunkt (=Zählerstand des Zeitzählers 555 des Ultraschallsensors 405) sein, zu dem der Ultraschallsensor 405 ein zweites Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405 ) sein, zu dem der Ultraschallsensor 405 ein zweites Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als drittes aufgetretenen Echos 142 an den Empfangsanschluss RX der UART-Schnittstelle 560 des übergeordneten Rechnersystems 505. Diese Messwerte des dritten Echos 142 können zum Beispiel der Zeitpunkt (=Zählerstand des Zeitzählers 555 des Ultraschallsensors 405) sein, zu dem der Ultraschallsensor 405 ein drittes Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein drittes Auftreten eines Maximums des Hüllkurvensignals 105 oberhalb der Schwellwertkurve 115 in der Ultraschallmessphase 125 ermittelt hat.

Bevorzugt überträgt der Ultraschallsensor 405 über den Sendeanschluss TX seiner UART-Schnittstelle 430 anschließend die Messwerte des zeitlich als viertes aufgetretenen Echos 143 an den Empfangsanschluss RX der UART-Schnittstelle 560 des übergeordneten Rechnersystems 505. Diese Messwerte des vierten Echos 143 können zum Beispiel der Zeitpunkt (=Zählerstand des Zeitzählers 555 des Ultraschallsensors 405) sein, zu dem der Ultraschallsensor 405 ein viertes Überschreiten der Schwellwertkurve 115 durch das Hüllkurvensignal 105 in der Ultraschallmessphase 125 ermittelt hat und/oder der Zeitpunkt (=Zählerstand des Zeitzählers 555 des Ultraschallsensors 405) sein, zu dem der Ultraschallsensor 405 ein viertes Auftreten eines Maximums des Hüllkurvensignals 105 oberhalb der Schwellwertkurve 115 in der Ultraschallmessphase 125 ermittelt hat.

Eine Übertragung solcher Zeitstempel ist nicht nötig, wenn das übergeordnete Rechnersystem 505 in der Ultraschallmessphase 125 die Zeit zwischen dem Startsignal 185 der Ultraschallmessphase 125 oder dem Startsignal 625 der eigentlichen Messphase 615 und dem Auftreten des Signalisierungspulses eines Echos (140 bis 144) erfasst, sich also den eigenen Zeitstempel erzeugt. Durch das Startsignal 185 und die sofortige Signalisierung eines Echos (140 bis 144) kann das übergeordnete Rechnersystem 505 darüber hinaus nicht nur einen eigenen Zeitstempel für jede Signalisierung eines Echos (140 bis 144) erzeugen, sondern auch so die früh auftretenden Echos bereits früh analysieren und verarbeiten, obwohl die Ultraschallmessphase 125 noch nicht zu Ende ist. Dies ist insbesondere in sicherheitsrelevanten Anwendungen von besonderer Wichtigkeit, da früh nach dem Start 185 eintreffende Echos 140 sehr nahen Objekten 515 entsprechen, die dementsprechend in der Regel gefährlicher sind und ggf. eine schnelle Reaktion erfordern.

Der Ultraschallsensor 405 kann diese Übertragung kann für beliebig viele Echos zwar in analoger Weise fortsetzen, Es hat sich aber gezeigt, dass die Übertragung weiterer Echos in der Regel keinen wesentlichen Informationsgewinn mehr bringt und nur zu einer Verlängerung der zeitlichen Dauer des Ultraschallmesszyklus 125 und der zeitlichen Dauer der dritten Phase 130 des Ultraschallmesszyklus 110 führt, was wiederum die Frequenz der aufeinanderfolgenden Ultraschallmessungen in Form aufeinander folgender Ultraschallmesszyklen 110 des Ultraschallsensors 405 senkt. Dies wiederum ist dann bei der Übertragung von zu vielen Echos nachteilig für die Sicherheit des Fahrzeugs und dessen Insassen.

Übertragung einer oder mehrerer Prüfinformationen 160, beispielsweise in Form einer Check-Summe, beispielsweise in Form eines oder mehrerer CRC-Bytes, die Datenübertragung vom Ultraschallsensor 405 über den Anschluss der UART-Schnittstelle 430 des Ultraschallsensors 405 an den Anschluss der UART-Schnittstelle 560 des übergeordneten Rechnersystems 505 ab.

Mit dem Abschluss der Übertragung der letzten Daten, also des letzten Bits endet frühestens somit die dritte Phase 130 des Ultraschallmesszyklus 110. Eine Möglichkeit zur Sicherstellung, dass das übergeordnete Rechnersystem 505 das Ende der dritten Phase 130 des Ultraschallmesszyklus 110 erkennt, kann sein, dass der Ultraschallsensor 405 zum Ersten am Beginn der Datenübertragung zu Beginn der dritten Phase 130 des Ultraschallmesszyklus 110 eine Information über die maximale zeitliche Länge der dritten Phase 130 des Ultraschallmesszyklus 110 an das übergeordnete Rechnersystem 505 endet und/oder zum Zweiten am Ende der Datenübertragung in der dritten Phase 130 des Ultraschallmesszyklus 110 einen Daten-Ende-Kode an das übergeordnete Rechnersystem 505 sendet, der es dem übergeordneten Rechnersystem 505 ermöglicht, das Ende der Datenübertragung zu erkennen oder zu berechnen. Bevorzugt sendet der Ultraschallsensor 405 einen solchen Daten-Ende-Kode nämlich vor den Prüfinformationen 160, die dem übergeordneten Rechnersystem 505 die Überprüfung des korrekten Empfangs der Daten in der dritten Phase 130 des Ultraschallmesszyklus 110 ermöglichen. Somit muss das übergeordnete Rechnersystem 505 diese Zeit noch bei der Berechnung des Endes des Ultraschallmesszyklus 110 ggf. noch berücksichtigen.

Nach dem Ende der dritten Phase 130 des Ultraschallmesszyklus 110 schaltet die UART-Schnittstelle 560 des übergeordneten Rechnersystems 505 bevorzugt wieder in einen Zustand entsprechend der Kommandophase 120 und/oder einen äquivalenten Zustand.

### Figur 2

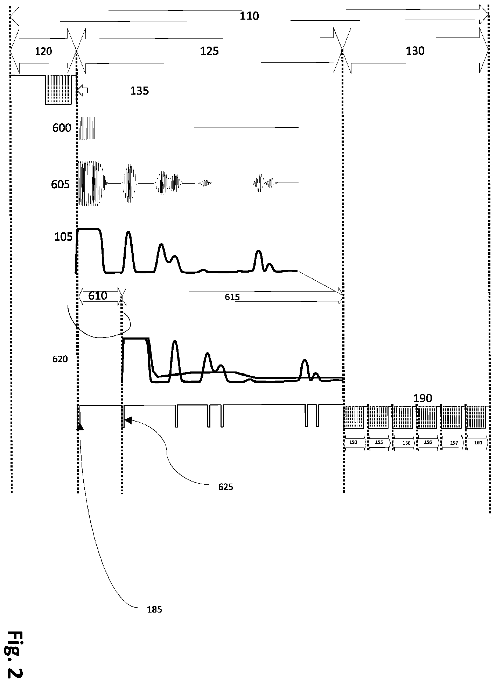

Figur 2 zeigt einen ähnlichen Inhalt wie Figur 1, wobei nun das Ultraschalltransducer-Treibersignal 600 eingezeichnet ist. Die Ultraschallsteuerung 435 des Ultraschallsensors 405 steuert den Ultraschalltransducer 465 bzw. den Ultraschallsender des Ultraschallsensors 405 in der Sendephase der Ultraschallmessphase 125 mit dem Ultraschalltransducer-Treibersignal 600 auf dem analogen Ultraschallsendesignal 460 zur Ansteuerung des Ultraschalltransducers 465 an. Die Ultraschallsteuerung 435 des Ultraschallsensors 405 bringt so mittels des Ultraschalltransducer-Treibersignals 600 das Schwingelement des Ultraschalltransducers465 bzw. des Ultraschallsenders zum Schwingen und zum Aussenden eines Ultraschallbursts bzw. eines Ultraschallsignals 510. Bevorzugt steuert die UART-Schnittstelle 430 die Steuervorrichtung 410 des Ultraschalltransducers 465 und/oder ermöglicht der Steuervorrichtung 410 des Ultraschallsensors 405 mit dem übergeordneten Rechnersystem 505 Daten über die UART-Schnittstelle 430 des Ultraschallsensors 405 auszutauschen.

Das Schwingelement des Ultraschalltransducers 465 bzw. Ultraschallempfängers des Ultraschallsensors 405 erzeugt dann das in Fig. 2 beispielhaft dargestellte Empfängersignal 605. Das Empfängersignal 605 hängt von den Echos der Objekte 515 im Umfeld des Ultraschallsensors 405 ab. Ein Hüllkurvenfilter des Ultraschallsensors 405 filtert das Empfängersignal 605 des Ultraschallsensors 405 zum Hüllkurvensignal 105 des Ultraschallsensors 405. Eine Auswertevorrichtung des Ultraschallsensors 405 detektiert in Abhängigkeit von einer Schwellwertkurve 115 Echos (140 bis 144) im Hüllkurvensignal 105 des Ultraschallsensors 405 und erzeugt eine Echo-Signalisierung (140 bis 144).

Bevorzugt ignoriert die Auswertevorrichtung des Ultraschallsensors 405 alle echo-ähnlichen bzw. echoartigen Signale im Hüllkurvensignal 105 des Ultraschallsensors 405, die in einem Zeitraum entsprechend einer "Verzögerung" 610 im Hüllkurvensignal 105 unmittelbar nach dem Beginn der Ultraschallmessphase 125 liegen. Das bedeutet, dass die eigentliche Messphase 615, in der der Ultraschallsensor 405 empfangene Echos (140 bis 144) an das übergeordnete Rechnersystem 505 signalisiert und Messdaten dieser Echos (140 bis 144) abspeichert, typischerweise zeitlich kürzer als die Ultraschallmessphase 125 ist.

In der Ultraschallmessphase können somit ein erster Puls 185, der dem übergeordneten Rechnersystem 505 den Beginn der Ultraschallmessphase 125 signalisiert, und ein zweiter Puls 625, der dem übergeordneten Rechner 505 den Beginn der eigentlichen Messphase 615 signalisiert, auftreten. Das übergeordnete Rechnersystem 505 kann diese beiden Pulse 185 und 625 zusammen auch zur Überwachung der internen Oszillatorfrequenz des Systemtakts des Ultraschallsensors 405 verwenden, da der zeitliche Abstand der beiden Pulse (185, 625) bekannt ist und sich nur mit der Oszillatorfrequenz des Oszillators des Ultraschallsensors 405, der den Systemtakt des Ultraschallsensors 405 erzeugt, verschiebt. Eine große Veränderung des zeitlichen Abstands dieser beiden Pulse 185 und 625 kann auf einen Fehler des Ultraschallsensors 405 hindeuten. Bevorzugt erfasst daher das übergeordnete Rechnersystem 505 den zeitlichen Abstand des ersten Pulses 185 vom zweiten Puls 625 mittels seines bereits erwähnten Zeitzählers. Liegt der Wert dieses zeitlichen Abstands nicht in einem Erwartungswertintervall für den Wert dieses zeitlichen Abstands, so schließt das übergeordnete Rechnersystem 505 bevorzugt auf einen Fehler des Ultraschallsensors 405. Bevorzugt reagiert das übergeordnete Rechnersystem 505 entsprechend. Eine solche Reaktion kann beispielsweise eine Abschaltung des Ultraschallsensors 405 sein oder der Start einer Selbstdiagnose des Ultraschallsensors 405 oder ähnliche Maßnahmen. Das Ultraschallsensorsystem 400, 800 kann eine kleine zeitliche Verschiebung dieser beiden Pulse (185, 625) zueinander zur Nachsynchronisierung der Datenschnittstelle 430 des Ultraschallsensors 405 nutzen. Beispielsweise kann das übergeordnete Rechnersystem 505 bei einer Abweichung mittels eines Synchronisationssignals als Kommando in der Kommandophase 135 eine solche Nachsynchronisation erzwingen, wenn die festgestellte Abweichung zu groß ist.

Eine beispielhafte Implementierungsidee der technischen Lehre des hier vorgelegten Dokuments sieht beispielsweise vor, dass das übergeordnete Rechnersystem 505 zum Starten der Messung ein beispielhaftes 8bit UART Datenpaket vom übergeordneten Rechnersystem 505 (auch als Bus-Master bezeichnet) zum Ultraschallsensor 405 schickt, welches das Kommando 135 (3bit) zum Starten der Messung und weitere Information (4bit) zum Messablauf beinhaltet. Zusätzlich wird es noch durch ein Parity-Bit abgesichert, siehe auch nächsten Punkt.

Nach der Ultraschallmessung in der Ultraschallmessphase 125 sendet vorschlagsgemäß der Ultraschallsensor 405 in der dritten Phase 130 des Ultraschallmesszyklus 110 mehrere UART-Datenpakete (jeweils alle 8bit lang) vom Ultraschallsensor 405 zum übergeordneten Rechnersystem 505. Das erste beispielhafte Paket kann beispielsweise Status-Informationen 150 zu Ultraschallsensor-Fehlern des Ultraschallsensors 405 umfassen, die nächsten 4 Paketen (505 bis 508) geben bevorzugt die Echohöhe (auf 8bit komprimiert) der ersten 4 erkannten Echos (140 bis 143) zurück. Abgesichert wird dann alles durch ein weiteres CRC-Paket 160. Alle Pakete sollten bevorzugt mittels Kommandos 135 in der Kommandophase 120 einzelnen zu- und abschaltbar sein, um die Kommunikationszeit je nach Bedarf so kurz wie möglich halten zu können.

### Figur 3

Bei den bisherigen Ultraschallkontrollschaltungen signalisiert immer ein konstant langer Puls (hier beispielhaft 50us) das Maximum eines Echos (140 bis 144) in der Ultraschallmessphase 125 auf dem Datenbus 500. Das hier vorgelegte Dokument schlägt hier eine neue Kodierung vor, die die die Pulslänge, z.B. in Abhängigkeit der Echoamplitude des jeweiligen Echos moduliert. Hier bestehen sicherlich noch weitere Möglichkeiten, der Pulslängen-Kodierung. Bei der Ausarbeitung des hier vorgelegten Vorschlags wurde nämlich erkannt, dass der Abstand der Echos in der Regel eine solche Pulslängenmodulierung zulässt. Dies ermöglicht einen anderen Informationsgehalt. Eine unterschiedliche Pulslängen-Kodierung mit mehreren Stufen ist beispielsweise denkbar.

Eine hier vorgestellte Idee ist es, die Höhe der gemessenen Echos mittels der Länge des Pulses zu kodieren und an das übergeordnete Rechnersystem 505 zu signalisieren.

Beispielsweise kann eine Kodierung so aussehen, das Echos, deren Amplituden den aktuellen Wert der Schwellwertkurve 115 übertreffen, aber nicht den doppelten aktuellen Wert des Schwellwertkurve 115 übertreffen mit einer Pulslänge einer ersten zeitlichen Länge, beispielsweise 50µs kodiert sind.

Beispielsweise kann eine Kodierung des Weiteren aussehen, das Echos, deren Amplituden den aktuellen doppelten Wert der Schwellwertkurve 115 übertreffen, aber nicht den dreifachen aktuellen Wert des Schwellwertkurve 115 übertreffen mit einer Pulslänge einer doppelten ersten zeitlichen Länge, beispielsweise 100µs kodiert sind und so weiter.

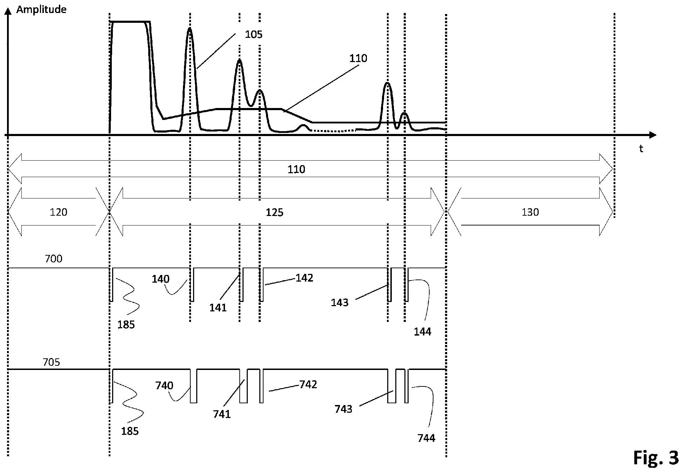

Auf diese Weise kann das übergeordnete Rechnersystem 505 schnell feststellen, ob das jeweilige Echo ein signifikantes Echo oder eher ein schwaches Echo war. (Vergleiche Figur 3 "neue Kodierung" 705 vs. "bisheriger Kodierung" 700).

Bevorzugt legt der Ultraschallsensor 405 die Messprofile die das übergeordnete Rechnersystem 505 dem Ultraschallsensor 405 in der Kommandophase 120 übermittelt, im nicht flüchtigen Speicher 415 des Ultraschallsensors 405 ab. Dies ermöglicht es, die aufwändige Datenübertragung der Konfigurationsdaten des jeweiligen Messprofils bei jedem Einschaltvorgang des Ultraschallsensors auf eine einmalige Übertragung beispielsweise am Bandende der Serienproduktion zu reduzieren.

### Figur 4

Figur 4 zeigt schematisch ein vorschlagsgemäßes vereinfachtes Ultraschallsystem 400 mit dem Ultraschallsensor 405. Bei der Steuervorrichtung 410 handelt es sich bevorzugt um einen Mikrorechner, beispielsweise einen ARM-Controller, der über den Datenbus 495 und ggf. weitere, zur besseren Übersicht nicht eingezeichnete Steuer- und Signalleitungen die Vorrichtungsteile des Ultraschallsensors 405 steuert und deren Zustand überwacht. Der Ultraschallsensor umfasst insbesondere bevorzugt einen nicht flüchtigen Speicher 415, einen flüchtiger Speicher 420 und weite Peripherieblöcke 425 der Steuervorrichtung 410 des Ultraschallsensors 405. Des Weiteren umfasst der Ultraschallsensor 405 die modifizierte UART-Schnittstelle 430, die das in dieser Schrift vorgestellte Verfahren ausführen kann. Dier Steuervorrichtung 410 des Ultraschallsensors 405 steuert bevorzugt die Ultraschallsteuerung 435 des Ultraschallsensors 405. Die Ultraschallsteuerung 435 erzeugt digitale Steuersignale 440 der Ultraschallsteuerung 435 zur Steuerung des Digitalteils 445 des Ultraschallsendepfads. Der Digitalteil 445 des Ultraschallsendepfads des Ultraschallsensors 405 erzeugt daraus das digitale Ultraschallsendesignal 450 und die Steuersignale 450 für den Analogteil 455 des Ultraschallsendepfads. Der Analogteil 455 des Ultraschallsendepfads des Ultraschallsensors 405 erzeugt daraus das analoge Ultraschallsendesignal 460 zur Ansteuerung des Ultraschalltransducers 465. Der Ultraschalltransducer 465 wandelt das analoge Ultraschallsendesignal 460 in das Ultraschallsignal 510 um, das er in sein Umfeld abstrahlt. Das Objekt 515 im Ultraschallübertragungskanal des Ultraschallsensors 405 reflektiert das Ultraschallsignal 510 als reflektiertes Ultraschallsignal 520. Der Ultraschalltransducer 465 empfängt das reflektierte Ultraschallsignal und wandelt es in ein analoges Ultraschallempfangssignal 470 des Ultraschalltransducers 465 um. Der Analogteil 475 des Ultraschallempfangspfads des Ultraschallsensors 405 erzeugt daraus das digitale Ultraschallempfangssignal 480 des Ultraschalltransducers 465. Der Digitalteil 485 des Ultraschallempfangspfads des Ultraschallsensors 405 extrahiert daraus Empfangs-, Klassifikations-, Status- und Testergebnisdaten 490 und stellt diese über die Ultraschallsteuerung 435 der Steuervorrichtung 410 über den interner Daten- und Steuerungsbus 495 des Ultraschallsensors 405 zur Verfügung. Über den externen Datenbus 500 erfolgt die in diesem Dokument diskutierte modifizierte UART-Datenkommunikation mit dem übergeordneten Rechnersystem 505. In dem Beispiel der Figur 4 ist der externe Datenbus 500 beispielhaft ein Eindrahtdatenbus 500. Mit dem übergeordneten Rechnersystem 505 über dessen UART-Schnittstelle 560 kommuniziert der vorschlagsgemäße Ultraschallsensor 405 in einem UART-Modus 190 und in einem Signalisierungsmodus 195.

Zwischen der Ultraschallsteuervorrichtung 435 und den Vorrichtungsteilen (445, 455, 475, 4859 DES Ultraschallempfangspfads signalisieren Steuersignale 425 zur Steuerung der steuerbaren Vorrichtungsteile (445, 455, 465, 475, 485) des Ultraschallempfangspfads (515, 520 465, 470, 475, 480, 485, 490) und des Ultraschallsendepfads (440, 445, 450, 455, 460, 465, 510, 515) und Statussignale dieser Vorrichtungsteile (445, 455, 465, 475, 485) zur Analyse und Überwachung des Zustands dieser Vorrichtungsteile (445, 455, 465, 475, 485) durch die Ultraschallsteuerung 435 der Ultraschallsteuervorrichtung den Zustand dieser Vorrichtungsteile und erlauben der Ultraschallsteuervorrichtung 435 die Steuerung dieser Vorrichtungsteile. Damit kann auch die Steuervorrichtung 410 diese Vorrichtungsteile steuern.

Darüber hinaus umfasst der Ultraschallsensor 405 einen UART-Taktgeber oder UART-Oszillator 530. Die UART-Datenschnittstelle 430 kann mittels Synchronisationsleitungen 435 den UART-Taktgebers oder UART-Oszillators 530 mit dem Takt und/oder der Frequenz und/oder der Phase eines Synchronisationssignals auf dem Datenbus 500 zur Synchronisation der UART-Taktfrequenz des Systemtakts des Ultraschallsensors 405 und/oder des UART-Systemtakts 540 des UART-Taktgebers oder UART-Oszillators 530 synchronisieren. Die UART-Schnittstelle 430 nutzt den dann so synchronisierten Systemtakt 540 des Ultraschallsensors 405 und/oder den UART-Systemtakt des UART-Taktgebers oder UART-Oszillators 530.

Der Ultraschallsensor 405 umfasst vorschlagsgemäß einen Zeitzähler 555, der beispielsweise die Ultraschallmessphase 125 nach Ablauf einer programmierten, oder eingestellten oder vorgegebenen Zeitdauer typischerweise wieder beendet und ggf. zur Bestimmung von Zeitstempeln für Echo-Daten in der Ultraschallmessphase 125 dient.

### Figur 5

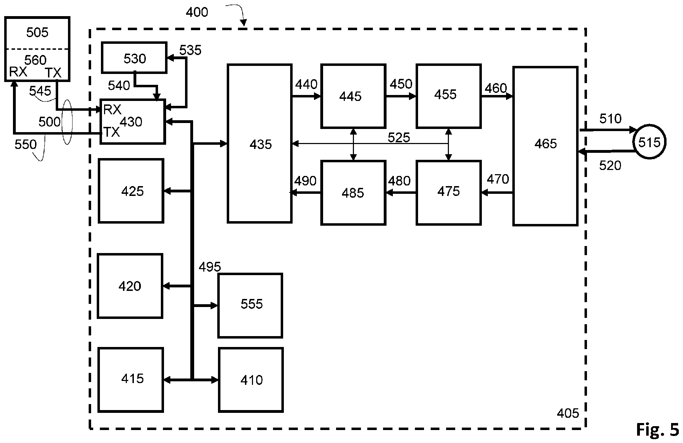

Die Figur 5 entspricht weitestgehend der Figur 4 mit dem Unterschied, dass der Datenbus 500 nicht als Eindrahtdatenbus ausgeprägt ist, sondern als Zweidrahtdatenbus. Dieser Zweidrahtdatenbus umfasst eine erste Datenleitung 545 zur Übertragung von Daten vom Ultraschallsensor 405 zum übergeordneten Rechnersystem 505. Die Datenübertragung über diese erste Datenleitung 545 mittels UART-Protokoll wird in der Ultraschallmessphase 125 unterbrochen und durch eine Signalisierung mittels des beschriebenen Signalisierungsprotokolls für die Dauer der Ultraschallmessphase 125 ersetzt, um die Echos (140, 141, 142, 143, 144) zeitnah ohne Verzögerung signalisieren zu können. Der Zweidrahtdatenbus umfasst eine zweite Datenleitung 550 zur Übertragung von Daten vom übergeordneten Rechnersystem 505 zum Ultraschallsensor 405. Die Datenübertragung über diese zweite Datenleitung 550 mittels UART-Protokoll wird in der Ultraschallmessphase 125 typischerweise nicht unterbrochen.

### Figur 6

Figur 6 zeigt ein Ultraschallsystem 800 mit mehreren Ultraschallsensoren (405, 801 bis 803). Zur Vereinfachung nimmt das hier vorgelegte Dokument an, dass diese Ultraschallsensoren in gleicher Art und Weise konstruiert sind ohne die technische Lehre dieses Dokuments darauf zu begrenzen.

In dem Beispiel der Figur 6 sendet ein anderer Ultraschallsensor 801 als der Ultraschallsensor 405 das Ultraschallsignal 510 aus, während alle Ultraschallsensoren (405, 801 bis 803) ein jeweiliges reflektiertes Ultraschallsignal 520 empfangen. In dem Beispiel der Figur 6 kommunizieren alle diese Ultraschallsensoren (405, 801 bis 803) mittels einer Punkt-zu-Punkt-Datenverbindung in der oben beschriebenen Weise mit dem übergeordneten Rechnersystem 505 über eine jeweilige modifizierte UART-Schnittstelle 560.

### Figur 7

Figur 7 entspricht der Figur 6, wobei in dem Beispiel der Figur 7 alle diese Ultraschallsensoren (405, 801 bis 803) mittels einer sternförmigen Datenverbindung in der oben beschriebenen Weise mit dem übergeordneten Rechnersystem 505 über eine modifizierte UART-Schnittstelle 560 über einen gemeinsamen Datenbus 500 kommunizieren. Damit dies möglich ist, ist es erforderlich, dass eine Buskollision vermieden wird. In der Regel ist eine solche Konfiguration nicht zweckmäßig, das in der Regel die gleichzeitige Signalisierung der Echos von allen Ultraschallsensoren gewünscht ist, was diese Konfiguration nicht leisten kann.

### Glossar

### UART

Der folgende Text ist ein Zitat der entsprechenden Wikipedia Seite (https://de.wikipedia.org/wiki/Universal_Asynchronous_Receiver_Transmitter): *"Universal Asynchronous Receiver Transmitter, kurz UART ist eine elektronische Schaltung, die zur Realisierung digitaler serieller Schnittstellen dient. Dabei kann es sich sowohl um ein eigenständiges elektronisches Bauelement (ein UART-Chip bzw. -Baustein) oder um einen Funktionsblock eines höherintegrierten Bauteils (z. B. eines Mikrocontrollers) handeln. Eine UART-Schnittstelle dient zum Senden und Empfangen von Daten über eine Datenleitung und bildet den Standard der seriellen Schnittstellen an PCs und Mikrocontrollern. Auch im industriellen Bereich ist die Schnittstelle mit verschiedenen Interfaces (z. B. RS-232 oder EIA-485 oder RS-485) sehr verbreitet. Die Daten werden als serieller digitaler Datenstrom mit einem fixen Rahmen übertragen, der aus einem Start-Bit, fünf bis maximal acht oder neun Datenbits (abhängig von der Anwendung), einem optionalen Parity-Bit zur Erkennung von Übertragungsfehlern und einem oder zwei Stopp-Bits besteht. Der Sender braucht dem Empfänger den Sendetakt nicht über eine eigene Steuerleitung mitzuteilen. Stattdessen berechnet der Empfänger den Takt des Senders aus dem Takt der Datenleitung und synchronisiert sich mit Hilfe der Start- und Stopp-Bits darauf. Gewöhnlich kann das Stopp-Bit auf das 1,5- oder 2-Fache der normalen Übertragungszeit eines Bits konfiguriert werden. Das wird als 1,5 bzw. 2 Stopp-Bits bezeichnet und muss sowohl beim Sender als auch beim Empfänger gleichmäßig eingestellt werden. Weil der Empfänger den Takt des Senders mit jedem empfangenen Byte neu berechnet und sich jedes Mal neu darauf synchronisiert, können auch große Unterschiede des Taktes zwischen Sender und Empfänger ausgeglichen werden. Auch kurzfristige Taktschwankungen werden so schnell wieder ausgeglichen. Deswegen nennt man diese Art der Datenübertragung "asynchron" und diese Art der Synchronisation "bytesynchron".*

Ein universeller asynchroner Empfänger-Sender im Sinne des hier vorliegenden Dokuments ist also typischerweise ein Computer-Hardware-Gerät für eine asynchrone serielle Kommunikation, bei dem das Datenformat und die Übertragungsgeschwindigkeit konfigurierbar sind. Es sendet die Datenbits nacheinander, vorzugsweise vom niedrigstwertigen zum höchstwertigen, bevorzugt eingerahmt von Start- und Stoppbits synchron in einer möglichst festen Phasenbeziehung zu einem UART-Takt, so dass der Kommunikationskanal ein präzises Timing ermöglicht. Die elektrischen Signalpegel werden typischerweise von einer Treiberschaltung außerhalb der UART-Logik gehandhabt. Zwei gängige Signalpegel sind beim RS-232 System, ein 12-Volt-System, und beim RS-485, ein 5-Volt-System. Frühe Fernschreibgeräte verwendeten auch Stromschleifen.

Ein UART ist in der Regel ein einzelner (oder ein Teil eines) integrierter Schaltkreis (IC), der für die serielle Kommunikation über einen seriellen Anschluss eines Computers oder Peripheriegeräts verwendet wird. Ein oder mehrere UART-Peripheriegeräte sind in der Regel in Mikrocontroller-Chips integriert. Spezialisierte UARTs werden für Automobile, Smart Cards und SIM-Karten verwendet.

In dem hier vorliegenden Fall steht die Verwendung für die Kommunikation zwischen einem übergeordneten Rechnersystem und einem Ultraschallsensor im Vordergrund.

Ein verwandtes Gerät, der universelle synchrone und asynchrone Empfänger-Sender (USART), unterstützt ebenfalls den synchronen Betrieb.

In der Regel verfügt eine UART-Schnittstelle über einen Sende-Ausgang, üblicherweise mit TX bezeichnet, und einen Empfangseingang, üblicherweise mit RX bezeichnet.

Wenn hier in dieser Schrift von UARTs die Rede ist, so sollen auch sogenannte USART-Schnittstellen davon mit umfasst sein. Der Leser möge dann UART durch USART ersetzen. Dies betrifft insbesondere die Ansprüche.

Ein universeller synchroner und asynchroner Empfänger-Sender (USART, programmierbare Kommunikationsschnittstelle oder PCI) ist im Sinne des hier vorgelegten Dokuments ein serielles Schnittstellengerät, das für die asynchrone oder synchrone Kommunikation programmiert werden kann.

Die synchronen Fähigkeiten des USART waren in erster Linie dazu gedacht, synchrone Protokolle wie das synchrone Sende-Empfangs-Verfahren (STR) von IBM, die binäre synchrone Kommunikation (BSC), die synchrone Datenverbindungssteuerung (SDLC) und die ISO-genormten HDLC-Protokolle (High-Level Data Link Control) zu unterstützen, die mit synchronen Sprachfrequenzmodems verwendet wurden. Diese Protokolle wurden entwickelt, um die Bandbreite optimal zu nutzen, als die Modems noch analoge Geräte waren. Damals konnte das schnellste asynchrone Sprachbandmodem mit Frequenzumtastung (FSK) höchstens eine Geschwindigkeit von 300 Bit/s erreichen, während synchrone Modems mit Phasenumtastung (PSK) Geschwindigkeiten von bis zu 9600 Bit/s erreichen konnten. Die synchrone Übertragung benötigte nur etwas mehr als 80 % der Bandbreite der heute üblichen asynchronen Übertragung, da Start- und Stoppbits überflüssig waren. Diese Modems sind veraltet und wurden durch Modems ersetzt, die asynchrone Daten in synchrone Formen umwandeln, aber ähnliche synchrone Telekommunikationsprotokolle überleben in zahlreichen blockorientierten Technologien wie dem weit verbreiteten IEEE 802.2 (Ethernet) Link-Level-Protokoll. USARTs sind manchmal noch in MCUs integriert. USARTs werden immer noch in Routern verwendet, die mit externen CSU/DSU-Geräten verbunden sind, und sie verwenden oft entweder die proprietäre HDLC-Implementierung von Cisco oder das IETF-Standard-Punkt-zu-Punkt-Protokoll (PPP) in HDLC-ähnlichem Framing, wie in RFC 1662 definiert.

### Der Betrieb eines USART steht in engem Zusammenhang mit den verschiedenen Protokollen.

USARTs im synchronen Modus übertragen Daten in Frames. Im Synchronbetrieb müssen die Zeichen rechtzeitig bereitgestellt werden, bis ein Rahmen vollständig ist. Tut der steuernde Prozessor dies nicht, handelt es sich um einen sogenannten "Underrun-Fehler", und die Übertragung des Rahmens wird abgebrochen.

USARTs, die als synchrone Geräte arbeiten, verwenden entweder den zeichenorientierten oder den bitorientierten Modus. Im zeichenorientierten Modus (STR und BSC) verließ sich das Gerät auf bestimmte Zeichen, um Rahmengrenzen zu definieren; im bitorientierten Modus (HDLC und SDLC) verließen sich frühere Geräte auf Signale der physikalischen Schicht, während spätere Geräte die Erkennung von Bitmustern durch die physikalische Schicht übernahmen.

Eine synchrone Leitung ist nie still; wenn das Modem sendet, fließen die Daten. Wenn die Bitübertragungsschicht anzeigt, dass das Modem aktiv ist, sendet ein USART einen stetigen Strom von Auffüllungen, entweder Zeichen oder Bits, je nach Gerät und Protokoll.

### Sonstige Bemerkungen

Die obige Beschreibung erhebt keinen Anspruch auf Vollständigkeit und beschränkt diese Offenbarung nicht auf die gezeigten Beispiele. Andere Variationen zu den offengelegten Beispielen können denjenigen, die über gewöhnliche Fachkenntnisse auf dem Gebiet verfügen, anhand der Zeichnungen, der Offenbarung und der Ansprüche verstehen und ausführen. Die deutschen unbestimmten Artikel "ein" oder "eine" und dessen Flexionen schließen eine Vielzahl nicht aus, während die Erwähnung einer bestimmten Anzahl von Elementen nicht die Möglichkeit ausschließt, dass mehr oder weniger Elemente vorhanden sind. Eine einzige Einheit kann die Funktionen mehrerer in der Offenbarung genannter Elemente erfüllen, und umgekehrt können mehrere Elemente die Funktion einer Einheit erfüllen.

In der vorausgehenden detaillierten Beschreibung wird auf die beigefügten Zeichnungen verwiesen. Die Beispiele in der Beschreibung und den Zeichnungen sollten als illustrativ betrachtet werden. Die Beispiele in der Beschreibung dieses Dokuments sind nicht als einschränkend für das beschriebene spezifische Beispiel oder Element zu betrachten.

### Bezugszeichenliste

- 105: Hüllkurvensignal
- 110: Ultraschallmesszyklus
- 115: Schwellwertkurve
- 120: Kommandophase, erste Phase des Ultraschallmesszyklus 115
- 125: Ultraschallmessphase (Echosignalisierung), zweite Phase des Ultraschallmesszyklus 115. In der Ultraschallmessphase signalisiert der Ultraschallsensor 405 das Auftreten eines Echos (140, 141, 142, 143, 144) unmittelbar an das übergeordnete Rechnersystem 505 über die UART-Schnittstelle 430 mittels eines Signalisierungsprotokolls, das von dem UART-Protokoll abweicht
- 130: dritte Phase des Ultraschallmesszyklus 115: Status- und Echo- Informationsphase
- 135: Kommandos
- 140: Echo1-Signal
- 141: Echo2-Signal
- 142: Echo3-Signal
- 143: Echo4-Signal
- 144: Echo5-Signal
- 150: Statusdaten
- 155: Daten des 1. Echos 140
- 156: Daten des 2. Echos 141
- 157: Daten des 3. Echos 142
- 158: Daten des 4. Echos 143
- 160: CRC- und/oder Prüfinformationen
- 165: das übergeordnete Rechnersystem 505 sendet Daten und Kommandos 120 mittels eines UART-Protokolls über den externen Datenbus 500 und die UART-Schnittstelle 430 des Ultraschallsensors 404 an die Steuervorrichtung 410 des Ultraschallsensors 405
- 170: der Ultraschallsensor 405 sendet mittels der UART-Schnittstelle 430 des Ultraschallsensors 405 Signale (140 bis 144) für empfangene Echos an das übergeordnete Rechnersystem 505 über den externen Datenbus 500, wobei die UART-Schnittstelle 430 kein UART-Protokoll verwendet, sondern die Datenleitung vom Ultraschallsensor 405 zum übergeordneten Rechnersystem 505 für typischerweise eine Taktperiode des UART-Takts von einem ersten logischen Zustand in einen zweiten logischen zustand zwingt, wenn der Ultraschallsensor 405 ein Echo erkennt hat
- 175: der Ultraschallsensor 405 sendet mittels der UART-Schnittstelle 430 des Ultraschallsensors 405 mittels eines UART-Protokolls Statusdaten und/oder Echodaten und/oder Klassifikationsdaten und/oder Ergebnisdaten von Selbsttests und/oder Prüfdaten etc. über den externen Datenbus 500 an das übergeordnete Rechnersystem 505
- 180: das übergeordnete Rechnersystem 505 sendet Daten und/oder Kommandos über den externen Datenbus 500 und die UART-Schnittstelle 430 des Ultraaschallsensors vorzugsweise mittels eines UART-Protokolls an die Steuervorrichtung 410 des Ultraschallsensors 405 oder eine ähnliche Einrichtung und/oder liest Daten aus dem Ultraschallsensor 405 mittels eines UART-Protokolls aus
- 185: Startsignal mit dem der Ultraschallsensor 405 über den Datenbus 500 ohne Nutzung des UART-Protokolls dem übergeordneten Rechnersystem 505 den Beginn der Ultraschallmessphase und den Beginn der Aussendung des Ultraschallsignals 510 signalisiert. Es kann sich beispielsweise um einen ersten Puls von beispielhaft 50µs Dauer handeln, der den Start der Messung in der Messphase 615 und den Zeitpunkt des ersten Filtermesspunkts für die Signalverarbeitungskette markiert
- 190: UART-Modus der Datenübertragung zwischen der UART-Schnittstelle 430 und dem übergeordneten Rechnersystem 505 über den externen Datenbus 500, die im UART-Modus das UART-Protokoll benutzt
- 195: Signalisierungs-Modus der Datenübertragung zwischen der UART-Schnittstelle 430 und dem übergeordneten Rechnersystem 505 über den externen Datenbus 500, die Signalisierungs-Modus beim Erkennen eines Echos durch den Ultraschallsensor 405 die Datenleitung des Datenbusses beispielsweise für eine UART-Taktperiode von einem ersten logischen Zustand auf einen zweiten logischen Zustand zieht
- 400: vereinfachtes Ultraschallsystem
- 405: Ultraschallsensor
- 410: Steuervorrichtung
- 415: nicht flüchtiger Speicher
- 420: flüchtiger Speicher
- 425: weite Peripherieblöcke, die Teil des Ultraschallsensors 405 und Teil des internen Rechnersystems des Ultraschallsensors 405 sind
- 430: UART-Schnittstelle (modifiziert)
- 435: Ultraschallsteuerung
- 440: Steuersignale der Ultraschallsteuerung zur Steuerung des Digitalteils des Ultraschallsendepfads
- 445: Digitalteil des Ultraschallsendepfads des Ultraschallsensors 405
- 450: digitales Ultraschallsendesignal und Steuersignale für den Analogteil 455 des Ultraschallsendepfads
- 455: Analogteil des Ultraschallsendepfads des Ultraschallsensors 405
- 460: analoges Ultraschallsendesignal zur Ansteuerung des Ultraschalltransducers 465
- 465: Ultraschalltransducer
- 470: analoges Ultraschallempfangssignal des Ultraschalltransducers 465
- 475: Analogteil des Ultraschallempfangspfads des Ultraschallsensors 405
- 480: digitales Ultraschallempfangssignal des Ultraschalltransducers 465
- 485: Digitalteil des Ultraschallempfangspfads des Ultraschallsensors 405
- 490: Empfangs-, Klassifikations-, Status- und Testergebnisdaten
- 495: interner Daten- und Steuerungsbus des Ultraschallsensors 405
- 500: externer Datenbus über den die in diesem Dokument diskutierte modifizierte UART-Datenkommunikation erfolgt
- 505: übergeordnetes Rechnersystem mit dem der Ultraschallsensor 405 über den Datenbus 500 kommuniziert
- 510: abgestrahltes Ultraschallsignal
- 515: Objekt oder Objekte, die das Ultraschallsignal reflektieren
- 520: reflektiertes Ultraschallsignal
- 525: Steuersignale zur Steuerung der steuerbaren Vorrichtungsteile (445, 455, 465, 475, 485) des Ultraschallempfangspfads (%15, 520 465, 470, 475, 480, 485, 490) und des Ultraschallsendepfads (440, 445, 450, 455, 460, 465, 510, 515) und Statussignale dieser Vorrichtungsteile (445, 455, 465, 475, 485) zur Analyse und Überwachung des Zustands dieser Vorrichtungsteile (445, 455, 465, 475, 485) durch die Ultraschallsteuerung 435
- 530: UART-Taktgeber oder UART-Oszillator
- 535: Synchronisationsleitungen zur Synchronisation des UART-Taktgebers oder UART-Oszillators 530 mit dem Takt und/oder der Frequenz und/oder der Phase eines Synchronisationssignals auf dem Datenbus 500 zur Synchronisation der UART-Taktfrequenz des Systemtakts des Ultraschallsensors 405 und/oder des UART-Systemtakts 540 des UART-Taktgebers oder UART-Oszillators 530
- 540: Systemtakt des Ultraschallsensors 405und/oder des UART-Systemtakt des UART-Taktgebers oder UART-Oszillators 530
- 545: Datenleitung zur Übertragung von Daten vom Ultraschallsensor 405 zum übergeordneten Rechnersystem 505. Die Datenübertragung über diese Datenleitung mittels UART-Protokoll wird in der Ultraschallmessphase 125 unterbrochen und durch eine Signalisierung mittels des beschriebenen Signalisierungsprotokolls für die Dauer der Ultraschallmessphase 125 ersetzt, um die Echos (140, 141, 142, 143, 144) zeitnah ohne Verzögerung signalisieren zu können
- 550: Datenleitung zur Übertragung von Daten vom übergeordneten Rechnersystem 505 zum Ultraschallsensor 405. Die Datenübertragung über diese Datenleitung mittels UART-Protokoll wird in der Ultraschallmessphase 125 typischerweise nicht unterbrochen
- 555: Zeitzähler 555, der die Ultraschallmessphase 125 nach Ablauf einer programmierten, oder eingestellten oder vorgegebenen Zeitdauer typischerweise wieder beendet
- 560: UART-Schnittstelle des übergeordneten Rechnersystems 505
- 600: Transducertreibersignal des analogen Ultraschallsendesignal 460 zur Ansteuerung des Ultraschalltransducers 465
- 605: Empfängersignal des analogen Ultraschallempfangssignal 470 des Ultraschalltransducers 465
- 610: zeitliche Verzögerung für die Sendephase und die Ausschwingphase des Schwingelements des Ultraschalltransducers 465
- 615: eigentliche Messzeit
- 620: Signalverarbeitung und Echo Erkennung
- 625: beispielhafter zweiter Puls von beispielsweise 50µs Dauer mit einem ersten Filtermesspunkt aus der Signalverarbeitungskette des Ultraschallsensors 405, der das Ende der Ausschwingphase und der Sendephase 610 an das übergeordnete Rechnersystem 505 signalisiert
- 700: bisherige Kodierung ohne Signalisierung der Echo-Höhe in der Ultraschallmessphase 125
- 705: modifizierte Kodierung. Bei der modifizierten Kodierung ist die Dauer einer Echo-Signalisierung, von der Höhe des Maximums eines Echo-Signals abhängig
- 740: zeitlich sehr lange erste Signalisierung des amplitudenmäßig sehr hohen ersten Echos
- 741: zeitlich sehr lange zweite Signalisierung des amplitudenmäßig sehr hohen zweiten Echos
- 742: zeitlich kürzere dritte Signalisierung des amplitudenmäßig kleineren dritten Echos
- 743: zeitlich sehr lange vierte Signalisierung des amplitudenmäßig sehr hohen vierten Echos
- 744: zeitlich kurze fünfte Signalisierung des amplitudenmäßig kleineren fünften Echos
- A: Amplitude
- t: Zeit
- t0: Startzeitpunkt des Ultraschallmesszyklus 115 und Beginn der Kommandophase 120, wobei in der anschließenden Kommandophase 120 das übergeordnete Rechnersystem 505 ein oder mehrere Kommandos 135 mittels eines UART-Protokolls über die UART-Schnittstellen 560 des übergeordneten Rechnersystems 505 und die UART-Schnittstelle 430 des Ultraschallsensors 405 an den Ultraschallsensor 405 sendet
- t1: Endzeitpunkt der Kommandophase 120 und Startzeitpunkt der Ultraschallmessphase 125. Typischerweise signalisiert ein Startsignal 185 den Beginn der Ultraschallmessphase 125 an das übergeordnete Rechnersystem 505 über den Datenbus 500. Beginnend mit diesem Startzeitpunkt der Ultraschallmessphase oder zumindest in einem festen zeitlichen Bezug nachfolgend zu diesem Startzeitpunkt sendet der Ultraschallsensor 405 typischerweise einen Ultraschallburst oder ein Ultraschallsignal aus. Bevorzugt startet der Ultraschallsensor 405 mit dem Startzeitpunkt 01 der Ultraschallmessphase 125 einen Zeitzähler 555, der die Ultraschallmessphase 125 nach Ablauf einer programmierten, oder eingestellten oder vorgegebenen Zeitdauer typischerweise wieder beendet
- t2: Endzeitpunkt der Ultraschalmessphase 125 und Starzeitpunkt der dritten Phase 130 des Ultraschallmesszyklus 110. Bevorzugt bestimmt der Zeitzähler 555 mittels des Ablaufs einer programmierten, oder eingestellten oder vorgegebenen Zeitdauer ab dem Startzeitpunkt t1 der Ultraschallmessphase 125 diesen Endzeitpunkt der Ultraschallmessphase 125 und den Startzeitpunkt der dritten Phase 130 des Ultraschallmesszyklus 110
- t3: Ende des Ultraschallmesszyklus 110. Das Ende des Ultraschallmesszyklus kann der Ultraschallsensor 405 dem übergeordneten Rechnersystem 505 beispielsweise mittels eines speziellen Endesignals als Datum der in der dritten Phase 130 des Ultraschallmesszyklus 110 übermittelten Daten übermitteln, wobei auf ein solches Endesignal bevorzugt noch eine vorbestimmte Menge an Daten, beispielsweise für Prüfinformationen wie CRC-Checks etc. folgen können. Statt einem Endesignal ist es auch denkbar, dass der Ultraschallsensor 405 der übergeordneten Rechnereinheit 505 zu Beginn der dritten Phase 130 des Ultraschallmesszyklus 110 eine Information über die Anzahl an Daten übermittelt, die der Ultraschallsensor 405 noch oder insgesamt in dieser dritten Phase 130 des Ultraschallmesszyklus 110 überträgt, sodass das übergeordnete Rechnersystem 505 das Ende des Ultraschallmesszyklus 110 berechnen kann

## Patentansprüche

1. Ultraschallsensor (405), wobei der Ultraschallsensor (405) dazu eingerichtet ist,
- mit einem Rechnersystem (505) mittels eines UART-Protokolls über eine UART-Datenschnittstelle (430) des Ultraschallsensors (405) zu kommunizieren, und
- ein Verfahren für die Kommunikation mit dem Rechnersystem (505) mittels des UART-Protokolls durchzuführen, und
- das Verfahren in zeitlich aufeinanderfolgenden und zeitlich nicht überlappenden Ultraschallmesszyklen (110) durchzuführen und
- den jeweiligen aktuellen Ultraschallmesszyklus (110) in mindestens drei zeitlich einander nachfolgenden Phasen, das heißt in einer ersten Phase (120), einer zweiten Phase (125) und einer dritten Phase (130) durchzuführen und,
- den Ultraschallmesszyklus (110) zu Beginn der ersten Phase (120) des Ultraschallmesszyklus (110), zu starten, und
- in der ersten Phase (120) zumindest ein Kommando (135) von dem Rechnersystem (505) zu empfangen, in dem Informationen darüber gespeichert sind, welche Art von Messung der Ultraschallsensor (405) in einem Ultraschallmesszyklus (110), in der zweiten Phase (125) des aktuellen Ultraschallmesszyklus (110), durchführen soll, und
- einen Ultraschallburst oder ein Ultraschallsignal (510) zu Beginn der zweiten Phase (125), auszusenden, wobei die Eigenschaften des Ultraschallbursts bzw. des Ultraschallsignals (510) von einem von dem Rechnersystem (505) innerhalb der ersten Phase (120) empfangenen Kommando (135) abhängen, und
- in der ersten Phase (125) mit dem Rechnersystem (505) mittels UART-Protokoll zu kommunizieren und in der zweiten Phase unter Verwendung eines vom UART-Protokoll verschiedenen Kommunikationsprotokolls zu kommunizieren, und
- das Signal der UART-Datenschnittstelle (430) des Ultraschallsensors (405) während der zweiten Phase (125) auf einen ersten logischen Wert zu legen, wenn der Ultraschallsensor (405) ein Echo detektiert, und das Signal der UART-Datenschnittstelle (430) während der zweiten Phase (125) auf einen zweiten logischen Wert zu legen, wenn der Ultraschallsensor (405) kein Echo detektiert, wobei sich der erste logische Wert vom zweiten logischen Wert unterscheidet, und
- die zweite Phase (125) nach einem vordefinierten Zeitpunkt und/oder bei Vorliegen einer vordefinierten Bedingung zu beenden und die dritte Phase (130) des Ultraschallmesszyklus (110) zu beginnen, und
- in der dritten Phase (130) des Ultraschallmesszyklus (110) mittels UART-Protokoll Daten (150, 155 bis 158, 160) an das Rechnersystem (505) zu übertragen.

2. Ultraschallsensor (405) nach Anspruch 1,
- wobei der Ultraschallsensor (405) dazu eingerichtet ist, das Signal der UART-Datenschnittstelle (430) des Ultraschallsensors (405) während der zweiten Phase (125) für eine vordefinierte Pulszeitdauer auf den ersten logischen Wert zu setzen, wenn der Ultraschallsensor (405) ein Echo detektiert, und das Signal der UART-Datenschnittstelle (430) ansonsten während der zweiten Phase (125) auf einen zweiten logischen Wert zu setzen, wenn der Ultraschallsensor (405) kein Echo detektiert.

3. Ultraschallsensor (405) nach Anspruch 2,
- wobei die Pulszeitdauer von einem Parameter des detektierten Echos abhängt.

4. Ultraschallsensor (405) nach Anspruch 3,
- wobei die Pulszeitdauer von der Amplitude eines durch den Ultraschallsensor erzeugten Echosignals abhängt.

5. Ultraschallsensor (405) nach einem der Ansprüche 1 bis 4,
- wobei die Daten (150, 155 bis 158, 160), die der Ultraschallsensor (405) in der dritten Phase (130) des Ultraschallmesszyklus (110) an das Rechnersystem (505) überträgt, ein oder mehrere der folgenden Daten umfassen:
- Statusinformationen (150), die Messwerte physikalischer Parameter des Ultraschallsensors (405) wiedergeben, und/oder
- Statusinformationen (150), die logische Werte logischer Schaltnetzwerke ( 435, 445, 485) innerhalb des Ultraschallsensors (405) wiedergeben, und/oder
- Statusinformationen (150), die Ergebnisse von Selbsttests des Ultraschallsensors (405) wiedergeben, und/oder
- Statusinformationen (150), die Messwerte der Ultraschallübertragungsstrecke (465, 510, 515, 520, 465) des Ultraschallsensors (405) wiedergeben, in die der Ultraschallsensor (405) Ultraschallsignale (510) hineinsendet und/oder aus der der Ultraschallsensor (405) Ultraschallsignale (520) empfängt, und/oder
- Statusinformationen (150), die angeben, welche Art von Ultraschallburst und/oder Ultraschallsignal (510) der Ultraschallsensor (405) in der unmittelbar vorausgehenden Ultraschallmessphase (110) ausgesendet haben will, und/oder
- Statusinformationen (150), die Werte des Ultraschallbursts und/oder Ultraschallsignals (510) des Ultraschallsensors (405) angeben, den der Ultraschallsensor (405) in der unmittelbar vorausgehenden zweiten Phase (125) ausgesendet haben will, und/oder
- Informationen, die Werte des Ultraschallbursts und/oder Ultraschallsignals (520) angeben, den der Ultraschallsensor (405) in der unmittelbar vorausgehenden zweiten Phase (125) empfangen haben will, und/oder
- Echoinformationen (155, 156, 157, 158), die Messwerte der in der zweiten Phase (125) empfangenen Echos (140, 141, 142, 143, 144) wiedergeben, und/oder
- Echoinformationen (155, 156, 157, 158), die Messwerte der in der zweiten Phase (125) empfangenen Echos (140, 141, 142, 143, 144) wiedergeben, wobei diese Messwerte insbesondere
- die Nummer des Echos (140, 141, 142, 143, 144) und/oder
- die Amplitude des Echos (140, 141, 142, 143, 144) und/oder
- den Zeitpunkt des Empfangs des Echos (140, 141, 142, 143, 144) und/oder
- einen Vertrauenswert für die Wahrscheinlichkeit, dass das Echo (140, 141, 142, 143, 144) tatsächlich ein Echo eines Objekts (515) in der Ultraschallübertragungsstrecke des Ultraschallsensors (405) ist, in die der Ultraschallsensor (405) Ultraschallsignale (510) hineinsendet, und/oder aus der der Ultraschallsensor (405) Ultraschallsignale (520) empfängt, umfassen und/oder
- Kommandoinformationen, die angeben, welche Kommandos bzw. welches Kommando (135) der Ultraschallsensor (405) in einer der vorausgehenden ersten Phasen (120) und/oder in der unmittelbar vorausgehenden ersten Phase (120) empfangen hat, und/oder
- Kommandoinformationen, die angeben, welche Kommandos bzw. welches Kommando (135) der Ultraschallsensor (405) in einer der vorausgehenden ersten Phasen (120) und/oder in der unmittelbar vorausgehenden ersten Phase (120) empfangen hat und die bestimmt haben, welche Art von Ultraschallburst bzw. Ultraschallsignal (510) der Ultraschallsensor (405) ausgesendet hat, und/oder
- Prüfinformationen (160) der in der dritten Phase (130) des Ultraschallmesszyklus (110) übertragenen Daten, insbesondere CRC-Daten, wobei das Rechnersystem (505) diese Prüfinformationen prüfen kann, um den ordnungsgemäßen Empfang der Daten zu prüfen, die der Ultraschallsensor (405) an das Rechnersystem (505) in der dritten Phase (130) des Ultraschallmesszyklus (110) überträgt, und/oder
- Prüfinformationen (160) der in der zweiten Phase (125) signalisierten Informationen (140, 141, 142, 143, 144), wobei das Rechnersystem (505) diese Prüfinformationen (160) prüfen kann, um den ordnungsgemäßen Empfang der in der zweiten Phase (125) signalisierten Informationen (140, 141, 142, 143, 144) zu prüfen, und/oder
- Prüfinformationen (160) der in der ersten Phase (120) von dem Rechnersystem (505) signalisierten Kommandos (135), wobei das Rechnersystem (505) diese Prüfinformationen prüfen kann, um den ordnungsgemäßen Empfang der in der in der ersten Phase (120) signalisierten Kommandos (135) durch den Ultraschallsensor (405) zu prüfen, und/oder
- Prüfinformationen (160) der in der ersten Phase (120) signalisierten Kommandos (135), die angeben, ob der Ultraschallsensor (405) bei der Übertragung eines oder mehrerer Kommandos (135) vom Rechnersystem (505) an den Ultraschallsensor (405) in der ersten Phase (120) einen Fehler erkannt hat, und/oder
- Prüfinformationen (160), die die Ergebnisse von Selbsttests oder Tests des Ultraschallsensors (405) wiedergeben, und/oder
- Längeninformationen, die angeben oder die es ermöglichen zu berechnen, wie viele Daten der Ultraschallsensor (405) in der dritten Phase (130) des Ultraschallmesszyklus (110) an das Rechensystem (505) übertragen hat, und/oder
- wobei der Ultraschallsensor dazu eingerichtet ist, ein Empfangssignals eines Ultraschalltransducers des Ultraschallsensors bzw. eines Ultraschallempfängers des Ultraschallsensors in Abhängigkeit von einem akustischen Ultraschallsignal, das der Ultraschallsensor empfängt, zu bilden.

6. Ultraschallsensor (405) nach einem der Ansprüche 1 bis 5,
- wobei der Ultraschallsensor (405) dazu eingerichtet ist, ein Synchronisationssignal zur Synchronisation der UART-Taktfrequenz eines Teilnehmers der UART-Kommunikation über die UART-Datenschnittstelle (430) zu übermitteln.

7. Ultraschallsensor (405) nach Anspruch 6,
- wobei der Ultraschallsensor (405) einen Systemtakt und/oder einen UART-Systemtakt (540) der UART-Datenschnittstelle (430) aufweist und
- wobei der Ultraschallsensor (405) Parameter des Systemtakts und/oder des UART-Systemtakts (540) in Abhängigkeit von einem dem Ultraschallsensor (405) übermittelten Synchronisationssignal zur Synchronisation der UART-Taktfrequenz ändert.

8. Ultraschallsensor (405) nach einem der Ansprüche 1 bis 7,
- wobei der Ultraschallsensor (405) dazu eingerichtet ist, eines oder mehrere Kommandos (135) in der ersten Phase (120) zu empfangen und auszuführen, wobei das Kommando (135) eines oder mehrere der folgenden Kommandos und/oder Unterkommandos umfasst:
- eine Synchronisationsinformation zur Synchronisation eines Systemtakts des Ultraschallsensors (405) und/oder eines UART-Takts 540) der UART-Datenschnittstelle (430), und/oder
- eine Längeninformation, die angibt welche Länge das Kommando (135) hat und/oder wie viele Kommandodaten das Kommando (135) umfasst, und/oder
- eine Prüfinformation, insbesondere ein Prüfbit und/oder einen Prüfwert, wie insbesondere eine CRC-Check-Summe, des Kommandos (135) und/oder mehrerer Kommandos, und/oder
- die Anzahl der Unterkommandos, die das gesamte Kommando (135) bilden, und/oder
- ein Kommando (135) bzw. Unterkommando, dass der Ultraschallsensor (405) die Messung in der zweiten Phase (125) in der Art, wie der Ultraschallsensors (405) sie bei der letzten Messung in der zweiten Phase (125) des vergangenen Ultraschallmesszyklus (110) durchgeführt hat, wiederholt durchführen soll, und/oder
- ein Kommando (135) bzw. Unterkommando, dass der Ultraschallsensor (405) eine Messung in der zweiten Phase (125) in der Art, wie der Ultraschallsensors (405) sie bei einer vorausgegangenen Messung in einer zweiten Phase (125) eines vorausgegangenen Ultraschallmesszyklus (110) durchgeführt hat, wiederholt durchführen soll, und/oder
- ein Kommando (135) bzw. Unterkommando, dass der Ultraschallsensor (405) die Messung in einer nachfolgenden zweiten Phase (125) entsprechend einer vorgegeben und dem Ultraschallsensor (405) bekannten Form durchführen soll, und/oder
- ein Kommando (135) bzw. Unterkommando, dass der Ultraschallsensor (405) die Messung in der unmittelbar der vorliegenden ersten Phase (120) nachfolgenden zweiten Phase (125) entsprechend einer vorgegeben und dem Ultraschallsensor (405) bekannten Form durchführen soll, und/oder
- ein Kommando (135) bzw. Unterkommando, dass der Ultraschallsensor (405) die Messung in einer zweiten Phase (125) mit einem Ultraschallburst (510) ausführen soll, der einen Chirp entsprechend einer zuvor durchgeführten Chirp-Richtung in einem zuvor durchgeführten Ultraschallmesszyklus (110) zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der einen Chirp entsprechend dem zuletzt unmittelbar zuvor durchgeführten Chirp-Richtung im unmittelbar zuvor durchgeführten Ultraschallmesszyklus (110) zeigen soll, und/oder
- ein Kommando (135) bzw. Unterkommando, dass der Ultraschallsensor (405) die Messung in einer nachfolgenden Ultraschallmessphase (110) mit einem Ultraschallburst (510) ausführen soll, der einen Chirp entgegen einer zuvor durchgeführten Chirp-Richtung in einem zuvor durchgeführten Ultraschallmesszyklus (110) zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der einen Chirp entgegen dem zuletzt unmittelbar zuvor durchgeführten Chirp-Richtung im unmittelbar zuvor durchgeführten Ultraschallmesszyklus (110) zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der einen Chirp-down zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der einen Chirp-down zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der einen Chirp-up zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der einen Chirp-up zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der eine vorbestimmte Frequenz zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der eine vorbestimmte Frequenz zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der eine vorbestimmte oder übermittelte Startfrequenz zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der eine vorbestimmte oder übermittelte Startfrequenz zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der eine vorbestimmte oder übermittelte Endfrequenz zeigen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der eine vorbestimmte oder übermittelte Endfrequenz zeigen soll, und/oder
- ein Kommando (135) bzw. Unterkommando, dass der Ultraschallsensor (405) die Messung in einer nachfolgenden zweiten Phase (125) mit einem Ultraschallburst (510) ausführen soll, der eine vorbestimmte Anzahl an Ultraschallpulsen aufweisen soll, und/oder
- ein Kommando (135) bzw. Unterkommando, dass der Ultraschallsensor (405) die Messung in der unmittelbar nachfolgenden zweiten Phase (125) mit einem Ultraschallburst (510) ausführen soll, der eine vorbestimmte Anzahl an Ultraschallpulsen aufweisen soll, und/oder
- ein Kommando (135) bzw. Unterkommando, dass der Ultraschallsensor (405) die Messung in einer oder mehreren nachfolgenden zweiten Phase (125) mit mehreren aufeinanderfolgenden Ultraschallbursts (510) ausführen soll, der die jeder für sich eine vorbestimmte Anzahl an Ultraschallpulsen aufweisen sollen, und/oder
- ein Kommando (135) oder Unterkommando, das dem Ultraschallsensor (405) signalisiert, dass in n nachfolgenden Ultraschallmesszyklen (110), insbesondere durch das Rechnersystem (505), die Kommandophase (120) übersprungen werden soll, wobei n eine ganze positive Zahl größer gleich 0 ist, und/oder
- ein Kommando (135) bzw. Unterkommando, dass signalisiert, dass die eigentlich nachfolgende zweiten Phase (125) dieses Ultraschallmesszyklus (110) nicht ausgeführt wird, und/oder
- ein Kommando (135) bzw. Unterkommando, dass signalisiert, dass die eigentlich nachfolgende dritte Phase (130) des Ultraschallmesszyklus (110) nicht ausgeführt wird, und/oder
- ein Kommando (135) bzw. Unterkommando, dass ein oder mehrere der vorstehenden Unterkommandos inhaltlich und/oder in ihrer Wirkung umfasst, und/oder
- ein Kommando (135), dass die UART-Kommunikation für einen vorbestimmten Zeitraum und/oder bis zum Auftreten eines Rückschaltsignals in der Datenkommunikation auf ein anderes Kommunikationsprotokoll für die Kommunikation zwischen einem Ultraschallsensor und dem Rechnersystem umstellt.

9. Ultraschallsensor (405) nach einem der Ansprüche 1 bis 8,
- wobei der Ultraschallsensor (405) dazu eingerichtet ist, die Ultraschallburst bzw. das Ultraschallsignal (510) zu Beginn der zweiten Phase (125) entsprechend einem zuvor empfangenen Kommando (135) und/oder Unterkommando auszusenden, und
- wobei der Ultraschallsensor (405) dazu eingerichtet ist, ein reflektiertes Ultraschallsignal bzw. einen reflektierten Ultraschallburst (520) in ein Empfangssignal (470) in der zweiten Phase (125) zu wandeln und zu empfangen, und
- wobei der Ultraschallsensor (405) dazu eingerichtet ist, ein Hüllkurvensignal (105) aus dem Empfangssignal (470) in der zweiten Phase (125) zu bilden, und
- wobei der Ultraschallsensor (405) dazu eingerichtet ist, das Hüllkurvensignal (105) in der zweiten Phase (125) nach der Aussendung des Ultraschallbursts bzw. Ultraschallsignals (510) zu vermessen und eine Messwertfolge zu ermitteln und
- wobei der Ultraschallsensor (405) dazu eingerichtet ist, aus der Messwertfolge ein oder mehrerer Symbole für ein oder mehrere erkannte Signalobjekte mit jeweils zugehörigen Signalobjektparametern im Hüllkurvensignal (105) zu ermitteln, und
- wobei der Ultraschallsensor (405) dazu eingerichtet ist, solche Symbole für erkannte Signalobjekte und/oder die Parameter dieser Signalobjekte in der dritten Phase (130) des Ultraschallmesszyklus (110) an das Rechnersystem (505) zu übermitteln.

10. Ultraschallsensor (405) nach einem der Ansprüche 1 bis 9,
- wobei der Ultraschallsensor (405) dazu eingerichtet ist, den Ultraschallburst bzw. das besagte Ultraschallsignal (510) zu Beginn der zweiten Phase (125) entsprechend einem zuvor empfangenen Kommando (135) auszusenden, und
- wobei der Ultraschallsensor (405) dazu eingerichtet ist, ein reflektiertes Ultraschallsignal bzw. einen reflektierten Ultraschallburst (520) in ein Empfangssignal (470) in der zweiten Phase (125) zu wandeln und zu empfangen, und
- wobei der Ultraschallsensor (405) dazu eingerichtet ist, ein Hüllkurvensignal (105) aus dem Empfangssignal (470) in der zweiten Phase (125) zu bilden, und
- wobei der Ultraschallsensor (405) dazu eingerichtet ist, das Hüllkurvensignal (105) in der zweiten Phase (125) nach der Aussendung des Ultraschallbursts bzw. Ultraschallsignals (510) zu vermessen und Messwerte des Hüllkurvensignals (105) in der zweiten Phase (125) zu ermitteln, und
- wobei der Ultraschallsensor (405) dazu eingerichtet ist,
- das Eintreffen eines Echos (140, 141, 142, 143, 144) beim Ultraschallsensor (405) an das Rechnersystem (505) in der zweiten Phase (125) zu signalisieren, wenn der Werteverlauf des Hüllkurvensignals (105) den Momentanwert einer Schwellwertkurve (115) in eine erste Richtung kreuzt, und/oder
- das zeitliche Ende des Eintreffens eines Echos (140, 141, 142, 143, 144) beim Ultraschallsensor (405) an das Rechnersystem (505) in der zweiten Phase (125) zu signalisieren, wenn der Werteverlauf des Hüllkurvensignals (105) den Momentanwert einer Schwellwertkurve (115) in eine der ersten Richtung entgegengesetzte zweite Richtung kreuzt.

11. Ultraschallsensor (405) nach Anspruch 10,
- wobei der Ultraschallsensor (405) dazu eingerichtet ist, das Eintreffen von Echos (140, 141, 142, 143, 144) beim Ultraschallsensor (405) an das Rechnersystem (505) in der zweiten Phase (125) synchron zu einem Systemtakt des Ultraschallsensors und/oder synchron zu einem UART-Systemtakt (540) der UART-Datenschnittstelle (430) zu signalisieren.

12. Ultraschallsensor (405) nach einem der Ansprüche 1 bis 11,
- wobei der Ultraschallsensor (405) dazu eingerichtet ist, Diagnosedaten wie z.B. HW-Fehler einer mikroelektronischen Schaltung oder anderer Vorrichtungsteile des Ultraschallsensors (405) und andere Diagnose-Fehler des Ultraschallsensors (405) an das Rechnersystem (505) in der dritten Phase (130) des Ultraschallmesszyklus (110) zu signalisieren.

13. Ultraschallsensor (405) nach Anspruch einem der Ansprüche 1 bis 12,
- wobei der Ultraschallsensor (405) dazu eingerichtet ist, ermittelte Werte von bis zu vier Echos (140, 141, 142, 143, 144) als Daten in der dritten Phase (130) des Ultraschallmesszyklus (110) vom Ultraschallsensor (405) an das Rechnersystem (505) zu signalisieren,
- wobei es sich bei den übertragenen ermittelten Werten insbesondere um die EchoHöhe und/oder die zeitliche Echo-Position bezogen auf das Startsignal (185) handeln kann.

14. Ultraschallsensor (405) nach einem der Ansprüche 1 bis 13,
- wobei der Ultraschallsensor (405) dazu eingerichtet ist, den Beginn der zweiten Phase (125) innerhalb der zweiten Phase (125) mit einem ersten Puls (185) zu signalisieren, und
- wobei der Ultraschallsensor (405) dazu eingerichtet ist, den Beginn der eigentlichen Messphase (615) in der zweiten Phase (125) mit einem zweiten Puls (625) zu signalisieren;
- wobei der Ultraschallsensor (405) dazu eingerichtet ist, den zeitlichen Abstand zwischen dem ersten Puls (185) und dem zweiten Puls (625) zu signalisieren,
- wobei der zeitliche Abstand zwischen dem ersten Puls (185) und dem zweiten Puls (625) bevorzugt auf einen Fehler des Ultraschallsensors hindeutet, wenn der Wert dieses zeitlichen Abstands nicht in einem Erwartungswertintervall für den Wert dieses zeitlichen Abstands liegt.

15. Ultraschallsensor (405), nach einem der Ansprüche 5 und/oder 8,
- wobei der Ultraschallsensor (405) dazu eingerichtet ist, zumindest Teile der Daten (150, 155 bis 158, 160) in der dritten Phase (130) verschlüsselt an das Rechnersystem (505) zu übertragen und/oder zumindest Teile der Kommandos (135) in der ersten Phase (120) verschlüsselt von dem Rechnersystem (505) zu empfangen, wobei die Verschlüsselung bevorzugt unter Verwendung eines true-random number Zufallsgenerators, eines Quanten-Zufallsgenerators, eines Quantum Key Distribution Verfahrens oder einem Post-Quanten-Krypthographie-Verfahrens.

16. Ultraschallsensor (405) nach einem der vorherigen Ansprüche,
- wobei der Ultraschallsensor (405) dazu eingerichtet ist, innerhalb der ersten Phase von dem Rechnersystem (505) einen ausführbaren Code zu empfangen, der durch den Ultraschallsensor (405) ausgeführt werden kann,
- wobei der ausführbare Code bevorzugt mehrere Programmsequenzen aufweist, die durch den Ultraschallsensor nacheinander ausgeführt werden können, und
- wobei der ausführbare Code bevorzugt mindestens eine Verzweigung aufweist, wobei mindestens eine Verzweigung in Form einer if-Anweisung, einer if-else-Anweisung, einer switch-Anweisung, einer Abfrage einer Mehrfachbedingung, einer for-Schleife, einer while-Schleife oder einer Sprunganweisung ausgeführt ist.

17. Rechnersystem (505) für die Steuerung eines Ultraschallsensors (405), wobei das Rechnersystem (505) dazu eingerichtet ist,
- mit einem Ultraschallsensor (405) mittels eines UART-Protokolls über eine UART-Datenschnittstelle (430) des Ultraschallsensors (405) zu kommunizieren, und
- ein Verfahren für die Kommunikation mit dem Ultraschallsensor (505) mittels des UART-Protokolls durchzuführen, und
- die Kommunikation mit dem Ultraschallsensor (405) in zeitlich aufeinanderfolgenden und zeitlich nicht überlappenden Ultraschallmesszyklen (110) durchzuführen,
- wobei der jeweilige aktuelle Ultraschallmesszyklus (110) mindestens drei zeitlich einander nachfolgenden Phasen aufweist, also eine erste Phase (120), eine zweite Phase (125) und eine dritte Phase (130),
- den Ultraschallmesszyklus (110) zu Beginn der ersten Phase (120) des Ultraschallmesszyklus (110), zu starten, und
- in der ersten Phase (120) zumindest ein Kommando (135) an den Ultraschallsensor (405) zu senden, wobei in dem Kommando (135) Informationen darüber gespeichert sind, welche Art von Messung der Ultraschallsensor (405) in einem Ultraschallmesszyklus (110), in der zweiten Phase (125) des aktuellen Ultraschallmesszyklus (110), durchführen soll, und
- in der ersten Phase (125) mit dem Ultraschallsensor (405) mittels des UART-Protokolls zu kommunizieren und in der zweiten Phase unter Verwendung eines vom UART-Protokoll verschiedenen Kommunikationsprotokolls mit dem Ultraschallsensor (405) zu kommunizieren, und
- die zweite Phase (125) nach einem vordefinierten Zeitpunkt und/oder bei Vorliegen einer vordefinierten Bedingung zu beenden und die dritte Phase (130) des Ultraschallmesszyklus (110) zu beginnen, und
- in der dritten Phase (130) des Ultraschallmesszyklus (110) mittels UART-Protokoll Daten (150, 155 bis 158, 160) von dem Ultraschallsensor (405) zu empfangen.

18. System für die Durchführung einer Ultraschallmessung umfassend einen Ultraschallsensor (405) nach einem der Ansprüche 1 bis 16 und ein Rechnersystem (505) nach Anspruch 17.

19. Fahrzeug umfassend einen Ultraschallsensor nach einem der Ansprüche 1 bis 16.

20. Verfahren zur Durchführung einer Ultraschallmessung unter Verwendung eines Ultraschallsensors (405), wobei der Ultraschallsensor (405) eine UART-Datenschnittstelle (430) für die Kommunikation mit einem Rechnersystem (505) mittels eines UART-Protokolls aufweist, und das Verfahren die nachfolgenden Schritte aufweist:
- Durchführung von Ultraschallmessungen innerhalb von zeitlich aufeinanderfolgenden und nicht überlappenden Ultraschallmesszyklen (110) mittels des Ultraschallsensors (405),
- wobei der jeweils aktuelle Ultraschallmesszyklus (110) mindesten drei zeitlich einander nachfolgende Phasen aufweist, also eine erste Phase (120), eine zweite Phase (125) und eine dritte Phase (130) und,
- Starten eines Ultraschallmesszyklus (110) zu Beginn der ersten Phase (120) des Ultraschallmesszyklus (110), und
- Empfangen zumindest eines Kommandos (135) in der ersten Phase (120) von dem Rechnersystem (505) durch den Ultraschallsensor (405), wobei in dem Kommando (135) Informationen darüber gespeichert sind, welche Art von Messung der Ultraschallsensor (405) in einem Ultraschallmesszyklus (110), in der zweiten Phase (125) des aktuellen Ultraschallmesszyklus (110), durchführen soll, und
- Aussenden eines Ultraschallburst oder eines Ultraschallsignals (510) durch den Ultraschallsensor (405) zu Beginn der zweiten Phase (125), wobei die Eigenschaften des Ultraschallbursts bzw. des Ultraschallsignals (510) von einem von dem Rechnersystem (505) innerhalb der ersten Phase (120) empfangenen Kommando (135) abhängen, und
- Kommunikation des Ultraschallsensor (405) mit dem Rechnersystem (505) mittels UART-Protokoll in der ersten Phase (125) sowie unter Verwendung eines vom UART-Protokoll verschiedenen Kommunikationsprotokolls in der zweiten Phase, und
- Setzen eines Signals der UART-Schnittstelle (430) des Ultraschallsensors (405) auf einen ersten logischen Wert, wenn der Ultraschallsensor (405) während der zweiten Phase (125) ein Echo detektiert, und
- Setzen eines Signals der UART-Schnittstell (430) des Ultraschallsensors (405) auf einen zweiten logischen Wert, wenn der Ultraschallsensor (405) während der zweiten Phase (125) kein Echo detektiert, wobei sich der erste logische Wert vom zweiten logischen Wert unterscheidet, und
- Beenden der zweiten Phase (125) und Starten der dritten Phase (130) des Ultraschallmesszyklus (110) nach einem vordefinierten Zeitpunkt und/oder bei Vorliegen einer vordefinierten Bedingung, und
- Übertragung von Daten (150, 155 bis 158, 160) von dem Ultraschallsensor (405) an das Rechnersystem (505) in der dritten Phase (130) des Ultraschallmesszyklus (110) mittels UART-Protokoll.

21. Verfahren zur Steuerung eines Ultraschallsensors (405) unter Verwendung eines Rechnersystems (505), wobei das Rechnersystem (505) eine UART-Datenschnittstelle (430) für die Kommunikation mit einem Ultraschallsensor (405) mittels eines UART-Protokolls aufweist, und das Verfahren die nachfolgenden Schritte aufweist:
- Steuerung des Ultraschallsensor (405) innerhalb von zeitlich aufeinanderfolgenden und zeitlich nicht überlappenden Ultraschallmesszyklen (110),
- Einteilen des jeweils aktuellen Ultraschallmesszyklus (110) in mindesten drei zeitlich einander nachfolgende Phasen, das heißt in eine erste Phase (120), eine zweite Phase (125) und eine dritte Phase (130),
- Starten des Ultraschallmesszyklus (110) zu Beginn der ersten Phase (120) des Ultraschallmesszyklus (110),
- Senden mindestens eines Kommandos (135) von dem Rechnersystem (505) an den Ultraschallsensor (405) in der ersten Phase (120), wobei in dem Kommando Informationen darüber gespeichert sind, welche Art von Messung der Ultraschallsensor (405) in einem Ultraschallmesszyklus (110), in der zweiten Phase (125) des aktuellen Ultraschallmesszyklus (110), durchführen soll,
- Empfangen von Messdaten durch das Rechnersystem (505) von dem Ultraschallsensor (405) in der zweiten Phase (130),
- wobei die Kommunikation des Rechnersystem (505) mit dem Ultraschallsensor (405) in der ersten Phase (125) mittels UART-Protokoll erfolgt und in der zweiten Phase unter Verwendung eines vom UART-Protokoll verschiedenen Kommunikationsprotokolls erfolgt, und
- Beenden der zweiten Phase (125) nach einem vordefinierten Zeitpunkt und/oder bei Vorliegen einer vordefinierten Bedingung und Starten der dritten Phase (130) des Ultraschallmesszyklus (110),
- Empfangen von Daten (150, 155 bis 158, 160) durch das Rechnersystem (505) von dem Ultraschallsensor (405) in der dritten Phase (130) des Ultraschallmesszyklus (110) mittels UART-Protokoll.

22. Verfahren für die Durchführung einer Ultraschallmessung unter Verwendung eines Ultraschallsensors (405) und eines Rechnersystem (505), wobei der Ultraschallsensor (405) und das Rechnersystem (505) eine UART-Schnittstelle aufweisen und dazu ausgelegt sind, miteinander mittels UART-Protokoll zu kommunizieren, und wobei das Verfahren die nachfolgenden Schritte aufweist:
- Durchführung von Ultraschallmessungen innerhalb von zeitlich aufeinanderfolgenden und nicht überlappenden Ultraschallmesszyklen (110) mittels des Ultraschallsensors (405),
- wobei der jeweils aktuelle Ultraschallmesszyklus (110) mindesten drei zeitlich einander nachfolgende Phasen aufweist, also eine erste Phase (120), eine zweite Phase (125) und eine dritte Phase (130) und,
- Starten eines Ultraschallmesszyklus (110) zu Beginn der ersten Phase (120) des Ultraschallmesszyklus (110), und
- Senden zumindest eines Kommandos (135) in der ersten Phase (120) von dem Rechnersystem (505) an den Ultraschallsensor (405), wobei in dem Kommando (135) Informationen darüber gespeichert sind, welche Art von Messung der Ultraschallsensor (405) in einem Ultraschallmesszyklus (110), in der zweiten Phase (125) des aktuellen Ultraschallmesszyklus (110), durchführen soll, und
- Aussenden eines Ultraschallbursts oder eines Ultraschallsignals (510) durch den Ultraschallsensor (405) zu Beginn der zweiten Phase (125), wobei die Eigenschaften des Ultraschallbursts bzw. des Ultraschallsignals (510) von einem von dem Rechnersystem (505) innerhalb der ersten Phase (120) empfangenen Kommando (135) abhängen, und
- Kommunikation des Ultraschallsensor (405) mit dem Rechnersystem (505) mittels UART-Protokoll in der ersten Phase (125) sowie unter Verwendung eines vom UART-Protokoll verschiedenen Kommunikationsprotokolls in der zweiten Phase, und
- Setzen eines Signals der UART-Schnittstelle (430) des Ultraschallsensors (405) auf einen ersten logischen Wert, wenn der Ultraschallsensor (405) während der zweiten Phase (125) ein Echo detektiert, und
- Setzen eines Signals der UART-Schnittstell (430) des Ultraschallsensors (405) auf einen zweiten logischen Wert, wenn der Ultraschallsensor (405) während der zweiten Phase (125) kein Echo detektiert, wobei sich der erste logische Wert vom zweiten logischen Wert unterscheidet, und
- Beenden der zweiten Phase (125) und Starten der dritten Phase (130) des Ultraschallmesszyklus (110) nach einem vordefinierten Zeitpunkt und/oder bei Vorliegen einer vordefinierten Bedingung, und
- Übertragung von Daten (150, 155 bis 158, 160) von dem Ultraschallsensor (405) an das Rechnersystem (505) in der dritten Phase (130) des Ultraschallmesszyklus (110) mittels UART-Protokoll.

23. Computerprogrammprodukt, das Computeranweisungen aufweist,
wobei die Computeranweisungen von einem Ultraschallsensor (405) nach Anspruch 1 ausführbar sind und bewirken, dass der Ultraschallsensor (405) die Schritte des Verfahrens nach Anspruch 20 durchführt, wenn sie durch den Ultraschallsensor (405) ausgeführt werden,
oder wobei die Computeranweisungen von einem Rechnersystem (505) nach Anspruch 17 ausführbar sind und bewirken, dass das Rechnersystem (505) die Schritte des Verfahrens nach Anspruch 21 durchführt, wenn sie durch das Rechnersystem (505) durchgeführt werden.

## Claims

1. An ultrasonic sensor (405), wherein the ultrasonic sensor (405) is configured to
- communicate with a computer system (505) by means of a UART protocol via a UART data interface (430) of the ultrasonic sensor (405), and
- perform a method of communicating with the computer system (505) by means of the UART protocol, and
- perform the method in temporally successive and temporally non-overlapping ultrasonic measurement cycles (110), and
- perform the respective current ultrasonic measurement cycle (110) in at least three temporally successive phases, i.e. in a first phase (120), a second phase (125) and a third phase (130), and
- start the ultrasonic measurement cycle (110) at the beginning of the first phase (120) of the ultrasonic measurement cycle (110), and
- receive, in the first phase (120), at least one command (135) from the computer system (505) in which information is stored about what type of measurement the ultrasonic sensor (405) is to perform in an ultrasonic measurement cycle (110), in the second phase (125) of the current ultrasonic measurement cycle (110), and
- emit an ultrasonic burst or an ultrasonic signal (510) at the beginning of the second phase (125), wherein the characteristics of the ultrasonic burst or the ultrasonic signal (510) depend on a command (135) received from the computer system (505) within the first phase (120), and
- communicate in the first phase (125) with the computer system (505) by means of the UART protocol and to communicate in the second phase using a communication protocol different from the UART protocol, and
- set the signal of the UART data interface (430) of the ultrasonic sensor (405) to a first logic value during the second phase (125) if the ultrasonic sensor (405) detects an echo, and to set the signal of the UART data interface (430) to a second logic value during the second phase (125) if the ultrasonic sensor (405) does not detect an echo, wherein the first logic value is different from the second logic value, and
- terminate the second phase (125) after a predefined time and/or when a predefined condition is present and to start the third phase (130) of the ultrasonic measurement cycle (110), and
- transmit data (150, 155 to 158, 160) to the computer system (505) in the third phase (130) of the ultrasonic measurement cycle (110) by means of the UART protocol.

2. The ultrasonic sensor (405) according to claim 1,
- wherein the ultrasonic sensor (405) is configured to set the signal of the UART data interface (430) of the ultrasonic sensor (405) to a first logic value for a predefined pulse duration during the second phase (125) if the ultrasonic sensor (405) detects an echo, and to otherwise set the signal of the UART data interface (430) to a second logic value during the second phase (125) if the ultrasonic sensor (405) does not detect an echo.

3. The ultrasonic sensor (405) according to claim 2,
- wherein the pulse duration depends on a parameter of the detected echo.

4. The ultrasonic sensor (405) according to claim 3,
- wherein the pulse duration depends on the amplitude of an echo signal generated by the ultrasonic sensor.

5. The ultrasonic sensor (405) according to any one of claims 1 to 4,
- wherein the data (150, 155 to 158, 160) that the ultrasonic sensor (405) transmits to the computer system (505) in the third phase (130) of the ultrasonic measurement cycle (110) comprises one or more of the following data:
- status information (150) representing measured values of physical parameters of the ultrasonic sensor (405), and/or
- status information (150) representing logic values of logic switching networks (435, 445, 485) within the ultrasonic sensor (405), and/or
- status information (150) representing the results of self-tests of the ultrasonic sensor (405), and/or
- status information (150) representing measured values of the ultrasonic transmission path (465, 510, 515, 520, 465) of the ultrasonic sensor (405) into which the ultrasonic sensor (405) transmits ultrasonic signals (510) and/or from which the ultrasonic sensor (405) receives ultrasonic signals (520), and/or
- status information (150) indicating what type of ultrasonic burst and/or ultrasonic signal (510) the ultrasonic sensor (405) intends to have emitted in the immediately preceding ultrasonic measurement phase (110), and/or
- status information (150) indicating values of the ultrasonic burst and/or ultrasonic signal (510) of the ultrasonic sensor (405) which the ultrasonic sensor (405) intends to have emitted in the immediately preceding second phase (125), and/or
- information indicating values of the ultrasonic burst and/or ultrasonic signal (520) which the ultrasonic sensor (405) intends to have received in the immediately preceding second phase (125), and/or
- echo information (155, 156, 157, 158) representing measured values of the echoes (140, 141, 142, 143, 144) received in the second phase (125), and/or
- echo information (155, 156, 157, 158) representing measured values of the echoes (140, 141, 142, 143, 144) received in the second phase (125), wherein these measured values in particular include
- the number of the echo (140, 141, 142, 143, 144), and/or
- the amplitude of the echo (140, 141, 142, 143, 144), and/or
- the time of receiving the echo (140, 141, 142, 143, 144), and/or
- a confidence value for the probability that the echo (140, 141, 142, 143, 144) is actually an echo of an object (515) in the ultrasonic transmission path of the ultrasonic sensor (405) into which the ultrasonic sensor (405) transmits ultrasonic signals (510) and/or from which the ultrasonic sensor (405) receives ultrasonic signals (520), and/or
- command information indicating which commands or which command (135) the ultrasonic sensor (405) has received in one of the preceding first phases (120) and/or in the immediately preceding first phase (120), and/or
- command information indicating which commands or which command (135) the ultrasonic sensor (405) has received in one of the preceding first phases (120) and/or in the immediately preceding first phase (120), and which determined which type of ultrasonic burst or ultrasonic signal (510) the ultrasonic sensor (405) emitted, and/or
- check information (160) of the data transmitted in the third phase (130) of the ultrasonic measurement cycle (110), in particular CRC data, wherein the computer system (505) can check this check information in order to check the proper reception of the data transmitted by the ultrasonic sensor (405) to the computer system (505) in the third phase (130) of the ultrasonic measurement cycle (110), and/or
- check information (160) of the information (140, 141, 142, 143, 144) signaled in the second phase (125), wherein the computer system (505) can check this check information (160) to check proper reception of the information (140, 141, 142, 143, 144) signaled in the second phase (125), and/or
- check information (160) of the commands (135) signaled in the first phase (120) by the computer system (505), wherein the computer system (505) can check this check information to check proper reception by the ultrasonic sensor (405) of the commands (135) signaled in the first phase (120), and/or
- check information (160) of the commands (135) signaled in the first phase (120), indicating whether the ultrasonic sensor (405) has detected an error during the transmission of one or more commands (135) from the computer system (505) to the ultrasonic sensor (405) in the first phase (120), and/or
- check information (160) representing the results of self-tests or tests of the ultrasonic sensor (405), and/or
- length information indicating or enabling to calculate how much data the ultrasonic sensor (405) has transmitted to the computer system (505) in the third phase (130) of the ultrasonic measurement cycle (110), and/or
- wherein the ultrasonic sensor is configured to form a received signal of an ultrasonic transducer of the ultrasonic sensor or an ultrasonic receiver of the ultrasonic sensor depending on an acoustic ultrasonic signal received by the ultrasonic sensor.

6. The ultrasonic sensor (405) according to any one of claims 1 to 5,
- wherein the ultrasonic sensor (405) is configured to transmit a synchronization signal for synchronizing the UART clock frequency of a subscriber of the UART communication via the UART data interface (430).

7. The ultrasonic sensor (405) according to claim 6,
- wherein the ultrasonic sensor (405) comprises a system clock and/or a UART system clock (540) of the UART data interface (430), and
- wherein the ultrasonic sensor (405) changes parameters of the system clock and/or the UART system clock (540) depending on a synchronization signal transmitted to the ultrasonic sensor (405) for synchronizing the UART clock frequency.

8. The ultrasonic sensor (405) according to any one of claims 1 to 7,
- wherein the ultrasonic sensor (405) is configured to receive and execute one or more commands (135) in the first phase (120), wherein the command (135) comprises one or more of the following commands and/or sub-commands:
- synchronization information for synchronizing a system clock of the ultrasonic sensor (405) and/or a UART clock (540) of the UART data interface (430), and/or
- length information indicating the length of the command (135) and/or how much command data the command (135) comprises, and/or
- check information, in particular a check bit and/or a check value, such as in particular a CRC check sum, of the command (135) and/or several commands, and/or
- the number of sub-commands that compose the entire command (135), and/or
- a command (135) or sub-command that the ultrasonic sensor (405) should repeatedly perform the measurement in the second phase (125) in the same way as the ultrasonic sensor (405) performed it during the last measurement in the second phase (125) of the previous ultrasonic measurement cycle (110), and/or
- a command (135) or sub-command that the ultrasonic sensor (405) should repeatedly perform a measurement in the second phase (125) in the same way as the ultrasonic sensor (405) performed it during a preceding measurement in a second phase (125) of a preceding ultrasonic measurement cycle (110), and/or
- a command (135) or sub-command that the ultrasonic sensor (405) is to perform the measurement in a subsequent second phase (125) in accordance with a predetermined form known to the ultrasonic sensor (405), and/or
- a command (135) or sub-command that the ultrasonic sensor (405) is to perform the measurement in the second phase (125) immediately subsequent the present first phase (120) in accordance with a predetermined form known to the ultrasonic sensor (405), and/or
- a command (135) or sub-command that the ultrasonic sensor (405) is to perform the measurement in a second phase (125) with an ultrasonic burst (510) which is to show a chirp corresponding to a previously performed chirp direction in a previously performed ultrasonic measurement cycle (110), and/or
- a command (135) or sub-command that the ultrasonic sensor (405) is to perform the measurement in the immediately subsequent second phase (125) with an ultrasonic burst (510) which is to show a chirp corresponding to the last immediately preceding chirp direction in the immediately preceding ultrasonic measurement cycle (110), and/or
- a command (135) or sub-command that the ultrasonic sensor (405) is to perform the measurement in a subsequent ultrasonic measurement phase (110) with an ultrasonic burst (510) which is to show a chirp in the opposite direction to a previously performed chirp direction in a previously performed ultrasonic measurement cycle (110), and/or
- a command (135) or sub-command that the ultrasonic sensor (405) is to perform the measurement in the immediately subsequent second phase (125) with an ultrasonic burst (510) which is to show a chirp opposite to the last immediately preceding chirp direction in the immediately preceding ultrasonic measurement cycle (110), and/or
- a command (135) or sub-command that the ultrasonic sensor (405) is to perform the measurement in a subsequent second phase (125) with an ultrasonic burst (510), which is to show a chirp-down, and/or
- a command (135) or sub-command that the ultrasonic sensor (405) is to perform the measurement in the immediately subsequent second phase (125) with an ultrasonic burst (510), which is to show a chirp-down, and/or
- a command (135) or sub-command that the ultrasonic sensor (405) is to perform the measurement in a subsequent second phase (125) with an ultrasonic burst (510), which is to show a chirp-up, and/or
- a command (135) or sub-command that the ultrasonic sensor (405) is to perform the measurement in the immediately subsequent second phase (125) with an ultrasonic burst (510), which is to show a chirp-up, and/or
- a command (135) or sub-command that the ultrasonic sensor (405) is to perform the measurement in a subsequent second phase (125) with an ultrasonic burst (510), which is to show a predetermined frequency, and/or
- a command (135) or sub-command that the ultrasonic sensor (405) is to perform the measurement in the immediately subsequent second phase (125) with an ultrasonic burst (510), which is to show a predetermined frequency, and/or
- a command (135) or sub-command that the ultrasonic sensor (405) is to perform the measurement in a subsequent second phase (125) with an ultrasonic burst (510), which is to show a predetermined or transmitted starting frequency, and/or
- a command (135) or sub-command that the ultrasonic sensor (405) is to perform the measurement in the immediately subsequent second phase (125) with an ultrasonic burst (510), which is to show a predetermined or transmitted starting frequency, and/or
- a command (135) or sub-command that the ultrasonic sensor (405) is to perform the measurement in a subsequent second phase (125) with an ultrasonic burst (510), which is to show a predetermined or transmitted end frequency, and/or
- a command (135) or sub-command that the ultrasonic sensor (405) is to perform the measurement in the immediately subsequent second phase (125) with an ultrasonic burst (510), which is to show a predetermined or transmitted end frequency, and/or
- a command (135) or sub-command that the ultrasonic sensor (405) is to perform the measurement in a subsequent second phase (125) with an ultrasonic burst (510), which is to have a predetermined number of ultrasonic pulses, and/or
- a command (135) or sub-command that the ultrasonic sensor (405) is to perform the measurement in the immediately subsequent second phase (125) with an ultrasonic burst (510), which is to have a predetermined number of ultrasonic pulses, and/or
- a command (135) or sub-command that the ultrasonic sensor (405) is to perform the measurement in one or more subsequent second phases (125) with a plurality of successive ultrasonic bursts (510), each of which is to have a predetermined number of ultrasonic pulses, and/or
- a command (135) or sub-command which signals to the ultrasonic sensor (405) that the command phase (120) is to be skipped in subsequent ultrasonic measurement cycles (110), in particular by the computer system (505), wherein n is a positive integer greater than or equal to 0, and/or
- a command (135) or sub-command signaling that the actual subsequent second phase (125) of this ultrasonic measurement cycle (110) is not executed, and/or
- a command (135) or sub-command signaling that the actual subsequent third phase (130) of the ultrasonic measurement cycle (110) is not executed, and/or
- a command (135) or sub-command that comprises one or more of the above sub-commands in terms of content and/or effect, and/or
- a command (135) that switches the UART communication to a different communication protocol for communication between an ultrasonic sensor and the computer system for a predetermined period of time and/or until a switch-back signal occurs in the data communication.

9. The ultrasonic sensor (405) according to any one of claims 1 to 8,
- wherein the ultrasonic sensor (405) is configured to emit the ultrasonic burst or the ultrasonic signal (510) at the beginning of the second phase (125) according to a previously received command (135) and/or sub-command, and
- wherein the ultrasonic sensor (405) is configured to convert and receive a reflected ultrasonic signal or a reflected ultrasonic burst (520) into a received signal (470) in the second phase (125), and
- wherein the ultrasonic sensor (405) is configured to form an envelope signal (105) from the received signal (470) in the second phase (125), and
- wherein the ultrasonic sensor (405) is configured to measure the envelope signal (105) in the second phase (125) after emission of the ultrasonic burst or ultrasonic signal (510) and to determine a sequence of measured values, and
- wherein the ultrasonic sensor (405) is configured to determine one or more symbols for one or more detected signal objects with respectively associated signal object parameters in the envelope signal (105) from the sequence of measured values, and
- wherein the ultrasonic sensor (405) is configured to transmit such symbols for detected signal objects and/or the parameters of these signal objects to the computer system (505) in the third phase (130) of the ultrasonic measurement cycle (110).

10. The ultrasonic sensor (405) according to any one of claims 1 to 9,
- wherein the ultrasonic sensor (405) is configured to emit the ultrasonic burst or said ultrasonic signal (510) at the beginning of the second phase (125) according to a previously received command (135), and
- wherein the ultrasonic sensor (405) is configured to convert and receive a reflected ultrasonic signal or a reflected ultrasonic burst (520) into a received signal (470) in the second phase (125), and
- wherein the ultrasonic sensor (405) is configured to form an envelope signal (105) from the received signal (470) in the second phase (125), and
- wherein the ultrasonic sensor (405) is configured to measure the envelope signal (105) in the second phase (125) after emission of the ultrasonic burst or ultrasonic signal (510) and to determine measured values of the envelope signal (105) in the second phase (125), and
- wherein the ultrasonic sensor (405) is configured to
- signal the arrival of an echo (140, 141, 142, 143, 144) at the ultrasonic sensor (405) to the computer system (505) in the second phase (125) when the value curve of the envelope signal (105) crosses the instantaneous value of a threshold curve (115) in a first direction, and/or
- signal the end in time of the arrival of an echo (140, 141, 142, 143, 144) at the ultrasonic sensor (405) to the computer system (505) in the second phase (125) when the value curve of the envelope signal (105) crosses the instantaneous value of a threshold curve (115) in a second direction opposite the first direction.

11. The ultrasonic sensor (405) according to claim 10,
- wherein the ultrasonic sensor (405) is configured to signal the arrival of echoes (140, 141, 142, 143, 144) at the ultrasonic sensor (405) to the computer system (505) in the second phase (125) in synchronization with a system clock of the ultrasonic sensor and/or in synchronization with a UART system clock (540) of the UART data interface (430).

12. The ultrasonic sensor (405) according to any one of claims 1 to 11,
- wherein the ultrasonic sensor (405) is configured to signal diagnostic data such as HW faults of a microelectronic circuit or other device parts of the ultrasonic sensor (405) and other diagnostic faults of the ultrasonic sensor (405) to the computer system (505) in the third phase (130) of the ultrasonic measurement cycle (110).

13. The ultrasonic sensor (405) according to any one of claims 1 to 12,
- wherein the ultrasonic sensor (405) is configured to signal determined values of up to four echoes (140, 141, 142, 143, 144) as data in the third phase (130) of the ultrasonic measurement cycle (110) from the ultrasonic sensor (405) to the computer system (505),
- wherein the transmitted determined values may in particular be the echo height and/or the temporal echo position in relation to the start signal (185).

14. The ultrasonic sensor (405) according to any one of claims 1 to 13,
- wherein the ultrasonic sensor (405) is configured to signal the start of the second phase (125) within the second phase (125) with a first pulse (185), and
- wherein the ultrasonic sensor (405) is configured to signal the start of the actual measurement phase (615) in the second phase (125) with a second pulse (625);
- wherein the ultrasonic sensor (405) is configured to signal the time interval between the first pulse (185) and the second pulse (625),
- wherein the time interval between the first pulse (185) and the second pulse (625) preferably indicates an error of the ultrasonic sensor if the value of this time interval is not within an expected value interval for the value of this time interval.

15. The ultrasonic sensor (405) according to any one of claims 5 and/or 8,
- wherein the ultrasonic sensor (405) is configured to transmit at least parts of the data (150, 155 to 158, 160) in the third phase (130) encrypted to the computer system (505) and/or to receive at least parts of the commands (135) in the first phase (120) encrypted from the computer system (505), the encryption preferably using a true-random number random generator, a quantum random generator, a quantum key distribution method or a post-quantum cryptography method.

16. The ultrasonic sensor (405) according to one of the preceding claims,
- wherein the ultrasonic sensor (405) is configured to receive, within the first phase, from the computer system (505) an executable code which can be executed by the ultrasonic sensor (405),
- wherein the executable code preferably comprises several program sequences which can be executed one after the other by the ultrasonic sensor, and
- wherein the executable code preferably has at least one branch, wherein at least one branch is executed in the form of an if statement, an if-else statement, a switch statement, a query of a multiple condition, a for loop, a while loop or a jump statement.

17. A computer system (505) for controlling an ultrasonic sensor (405), wherein the computer system (505) is configured to
- communicate with an ultrasonic sensor (405) by means of a UART protocol via a UART data interface (430) of the ultrasonic sensor (405), and
- perform a method of communicating with the ultrasonic sensor (505) by means of the UART protocol, and
- perform the communication with the ultrasonic sensor (405) in temporally successive and temporally non-overlapping ultrasonic measurement cycles (110),
- wherein the respective current ultrasonic measurement cycle (110) has at least three temporally successive phases, i.e. a first phase (120), a second phase (125) and a third phase (130),
- start the ultrasonic measurement cycle (110) at the beginning of the first phase (120) of the ultrasonic measurement cycle (110), and
- send at least one command (135) to the ultrasonic sensor (405) in the first phase (120), wherein information is stored in the command (135) about what type of measurement the ultrasonic sensor (405) is to perform in an ultrasonic measurement cycle (110), in the second phase (125) of the current ultrasonic measurement cycle (110), and
- communicate in the first phase (125) with the ultrasonic sensor (405) by means of the UART protocol and to communicate in the second phase with the ultrasonic sensor (405) using a communication protocol different from the UART protocol, and
- end the second phase (125) after a predefined time and/or when a predefined condition is present and to start the third phase (130) of the ultrasonic measurement cycle (110), and
- receive data (150, 155 to 158, 160) from the ultrasonic sensor (405) in the third phase (130) of the ultrasonic measurement cycle (110) by means of the UART protocol.

18. A system for performing an ultrasonic measurement comprising an ultrasonic sensor (405) according to any one of claims 1 to 16 and a computer system (505) according to claim 17.

19. A vehicle comprising an ultrasonic sensor according to any one of claims 1 to 16.

20. A method of performing an ultrasonic measurement using an ultrasonic sensor (405), the ultrasonic sensor (405) having a UART data interface (430) for communication with a computer system (505) by means of a UART protocol, and the method comprising the following steps:
- performing ultrasonic measurements within temporally consecutive and non-overlapping ultrasonic measurement cycles (110) by means of the ultrasonic sensor (405),
- wherein the respective current ultrasonic measurement cycle (110) has at least three temporally successive phases, i.e. a first phase (120), a second phase (125) and a third phase (130), and
- starting the ultrasonic measurement cycle (110) at the beginning of the first phase (120) of the ultrasonic measurement cycle (110), and
- receiving at least one command (135) in the first phase (120) from the computer system (505) by the ultrasonic sensor (405), wherein information is stored in the command (135) about what type of measurement the ultrasonic sensor (405) is to perform in an ultrasonic measurement cycle (110), in the second phase (125) of the current ultrasonic measurement cycle (110), and
- emitting an ultrasonic burst or an ultrasonic signal (510) by the ultrasonic sensor (405) at the beginning of the second phase (125), wherein the characteristics of the ultrasonic burst or the ultrasonic signal (510) depend on a command (135) received from the computer system (505) within the first phase (120), and
- communication of the ultrasonic sensor (405) with the computer system (505) by means of the UART protocol in the first phase (125) and using a communication protocol different from the UART protocol in the second phase, and
- setting a signal of the UART interface (430) of the ultrasonic sensor (405) to a first logic value if the ultrasonic sensor (405) detects an echo during the second phase (125), and
- setting a signal of the UART interface (430) of the ultrasonic sensor (405) to a second logic value if the ultrasonic sensor (405) does not detect an echo during the second phase (125), wherein the first logic value is different from the second logic value, and
- terminating the second phase (125) and starting the third phase (130) of the ultrasonic measurement cycle (110) after a predefined time and/or when a predefined condition is present, and
- transmitting data (150, 155 to 158, 160) from the ultrasonic sensor (405) to the computer system (505) in the third phase (130) of the ultrasonic measurement cycle (110) using the UART protocol.

21. A method of controlling an ultrasonic sensor (405) using a computer system (505), the computer system (505) comprising a UART data interface (430) for communicating with an ultrasonic sensor (405) by means of a UART protocol, and the method comprising the following steps:
- controlling the ultrasonic sensor (405) within temporally consecutive and temporally non-overlapping ultrasonic measurement cycles (110),
- dividing the current ultrasonic measurement cycle (110) into at least three temporally successive phases, i.e. into a first phase (120), a second phase (125) and a third phase (130),
- starting the ultrasonic measurement cycle (110) at the beginning of the first phase (120) of the ultrasonic measurement cycle (110),
- sending at least one command (135) from the computer system (505) to the ultrasonic sensor (405) in the first phase (120), wherein the command stores information about what type of measurement the ultrasonic sensor (405) is to perform in an ultrasonic measurement cycle (110), in the second phase (125) of the current ultrasonic measurement cycle (110),
- receiving measurement data by the computer system (505) from the ultrasonic sensor (405) in the second phase (130),
- wherein the computer system (505) communicates with the ultrasonic sensor (405) in the first phase (125) using the UART protocol and in the second phase using a communication protocol different from the UART protocol, and
- terminating the second phase (125) after a predefined time and/or when a predefined condition is present, and starting the third phase (130) of the ultrasonic measurement cycle (110),
- receiving data (150, 155 to 158, 160) by the computer system (505) from the ultrasonic sensor (405) in the third phase (130) of the ultrasonic measurement cycle (110) using the UART protocol.

22. A method for performing an ultrasonic measurement using an ultrasonic sensor (405) and a computer system (505), wherein the ultrasonic sensor (405) and the computer system (505) have a UART interface and are adapted to communicate with each other by means of the UART protocol, and wherein the method comprises the following steps:
- performing ultrasonic measurements within temporally consecutive and non-overlapping ultrasonic measurement cycles (110) by means of the ultrasonic sensor (405),
- wherein the respective current ultrasonic measurement cycle (110) has at least three temporally successive phases, i.e. a first phase (120), a second phase (125) and a third phase (130), and
- starting the ultrasonic measurement cycle (110) at the beginning of the first phase (120) of the ultrasonic measurement cycle (110), and
- sending at least one command (135) in the first phase (120) from the computer system (505) to the ultrasonic sensor (405), wherein information is stored in the command (135) about what type of measurement the ultrasonic sensor (405) is to perform in an ultrasonic measurement cycle (110), in the second phase (125) of the current ultrasonic measurement cycle (110), and
- emitting an ultrasonic burst or an ultrasonic signal (510) by the ultrasonic sensor (405) at the beginning of the second phase (125), wherein the characteristics of the ultrasonic burst or the ultrasonic signal (510) depend on a command (135) received from the computer system (505) within the first phase (120), and
- communication of the ultrasonic sensor (405) with the computer system (505) by means of the UART protocol in the first phase (125) and using a communication protocol different from the UART protocol in the second phase, and
- setting a signal of the UART interface (430) of the ultrasonic sensor (405) to a first logic value if the ultrasonic sensor (405) detects an echo during the second phase (125), and
- setting a signal of the UART interface (430) of the ultrasonic sensor (405) to a second logic value if the ultrasonic sensor (405) does not detect an echo during the second phase (125), wherein the first logic value is different from the second logic value, and
- terminating the second phase (125) and starting the third phase (130) of the ultrasonic measurement cycle (110) after a predefined time and/or when a predefined condition is present, and
- transmitting data (150, 155 to 158, 160) from the ultrasonic sensor (405) to the computer system (505) in the third phase (130) of the ultrasonic measurement cycle (110) using the UART protocol.

23. A computer program product comprising computer instructions, wherein the computer instructions are executable by an ultrasonic sensor (405) according to claim 1 and cause the ultrasonic sensor (405) to perform the steps of the method according to claim 20 when performed by the ultrasonic sensor (405), or wherein the computer instructions are executable by a computer system (505) according to claim 17 and cause the computer system (505) to perform the steps of the method according to claim 21 when performed by the computer system (505).

## Revendications

1. Capteur à ultrasons (405), où le capteur à ultrasons (405) est configuré pour
- communiquer avec un système informatique (505) à l'aide d'un protocole UART via une interface de données UART (430) du capteur à ultrasons (405), et
- mettre en œuvre un procédé pour la communication avec le système informatique (505) à l'aide du protocole UART, et
- mettre en œuvre le procédé dans des cycles de mesure ultrasonore (110) consécutifs et non chevauchants dans le temps, et
- mettre en œuvre le cycle de mesure ultrasonore actuel (110) en au moins trois phases successives dans le temps, à savoir une première phase (120), une deuxième phase (125) et une troisième phase (130), et
- démarrer le cycle de mesure ultrasonore (110) au début de la première phase (120) du cycle de mesure ultrasonore (110), et
- dans la première phase (120), recevoir au moins une commande (135) du système informatique (505) dans laquelle sont stockées des informations sur le type de mesure que le capteur à ultrasons (405) doit mettre en œuvre dans un cycle de mesure ultrasonore (110) dans la deuxième phase (125) du cycle de mesure ultrasonore actuel (110), et
- émettre une salve ultrasonore ou un signal ultrasonore (510) au début de la deuxième phase (125), où les propriétés de la salve ultrasonore ou du signal ultrasonore (510) dépendant d'une commande (135) reçue du système informatique (505) dans la première phase (120), et
- dans la première phase (125), communiquer avec le système informatique (505) via le protocole UART et, dans la deuxième phase, communiquer à l'aide d'un protocole de communication différent du protocole UART, et
- régler le signal de l'interface de données UART (430) du capteur à ultrasons (405) sur une première valeur logique pendant la deuxième phase (125) si le capteur à ultrasons (405) détecte un écho, et régler le signal de l'interface de données UART (430) sur une deuxième valeur logique pendant la deuxième phase (125) si le capteur à ultrasons (405) ne détecte pas d'écho, où la première valeur logique est différente de la deuxième valeur logique, et
- terminer la deuxième phase (125) après un temps prédéfini et/ou en présence d'une condition prédéfinie et commencer la troisième phase (130) du cycle de mesure ultrasonore (110), et
- transmettre les données (150, 155 à 158, 160) au système informatique (505) au moyen du protocole UART dans la troisième phase (130) du cycle de mesure ultrasonore (110).

2. Capteur à ultrasons (405) selon la revendication 1,
- où le capteur à ultrasons (405) est configuré pour régler le signal de l'interface de données UART (430) du capteur à ultrasons (405) sur la première valeur logique pendant une durée d'impulsion prédéfinie pendant la deuxième phase (125) si le capteur à ultrasons (405) détecte un écho, et pour régler sinon le signal de l'interface de données UART (430) sur une deuxième valeur logique pendant la deuxième phase (125) si le capteur à ultrasons (405) ne détecte pas d'écho.

3. Capteur à ultrasons (405) selon la revendication 2,
- où la durée d'impulsion dépend d'un paramètre de l'écho détecté.

4. Capteur à ultrasons (405) selon la revendication 3,
- où la durée d'impulsion dépend de l'amplitude d'un signal d'écho généré par le capteur à ultrasons.

5. Capteur à ultrasons (405) selon l'une des revendications 1 à 4,
- où les données (150, 155 à 158, 160) que le capteur à ultrasons (405) transmet au système informatique (505) dans la troisième phase (130) du cycle de mesure ultrasonore (110) comprennent une ou plusieurs des données suivantes:
- des informations d'état (150), qui reflètent des valeurs mesurées de paramètres physiques du capteur à ultrasons (405), et/ou
- des informations d'état (150), qui reflètent des valeurs logiques de réseaux de commutation logiques (435, 445, 485) à l'intérieur du capteur à ultrasons (405), et/ou
- des informations d'état (150), qui reflètent des résultats d'autotests du capteur à ultrasons (405), et/ou
- des informations d'état (150), qui reflètent des valeurs mesurées du trajet de transmission ultrasonore (465, 510, 515, 520, 465) du capteur à ultrasons (405) dans lequel le capteur à ultrasons (405) transmet des signaux ultrasonores (510) et/ou duquel le capteur à ultrasons (405) reçoit des signaux ultrasonores (520), et/ou
- des informations d'état (150) qui indiquent quel type de salve ultrasonore et/ou de signal ultrasonore (510) le capteur à ultrasons (405) souhaite avoir transmis dans la phase de mesure ultrasonore (110) immédiatement précédente, et/ou
- des informations d'état (150) qui indiquent des valeurs de la salve ultrasonore et/ou du signal ultrasonore (510) du capteur à ultrasons (405) que le capteur à ultrasons (405) souhaite avoir émis dans la deuxième phase (125) immédiatement précédente, et/ou
- des informations, qui indiquent des valeurs de la salve ultrasonore et/ou du signal ultrasonore (520) que le capteur à ultrasons (405) souhaite avoir reçu dans la deuxième phase (125) immédiatement précédente, et/ou
- des informations d'écho (155, 156, 157, 158), qui reflètent des valeurs mesurées des échos (140, 141, 142, 143, 144) reçus dans la deuxième phase (125), et/ou
- des informations d'écho (155, 156, 157, 158), qui reflètent des valeurs mesurées des échos (140, 141, 142, 143, 144) reçus dans la deuxième phase (125), où ces valeurs mesurées comprennent en particulier
- le numéro de l'écho (140, 141, 142, 143, 144) et/ou
- l'amplitude de l'écho (140, 141, 142, 143, 144) et/ou
- le moment de la réception de l'écho (140, 141, 142, 143, 144) et/ou
- une valeur de confiance pour la probabilité que l'écho (140, 141, 142, 143, 144) soit effectivement un écho d'un objet (515) sur le trajet de transmission ultrasonore du capteur à ultrasons (405) dans lequel le capteur à ultrasons (405) émet des signaux ultrasonores (510) et/ou duquel le capteur à ultrasons (405) reçoit des signaux ultrasonores (520), et/ou
- des informations de commande, qui indiquent quelles commandes ou quelle commande (135) le capteur à ultrasons (405) a reçu dans l'une des premières phases (120) précédentes et/ou dans la première phase (120) immédiatement précédente, et/ou
- des informations de commande, qui indiquent quelles commandes ou quelle commande (135) le capteur à ultrasons (405) a reçu dans l'une des premières phases (120) précédentes et/ou dans la première phase (120) immédiatement précédente et qui ont déterminé quel type de salve ultrasonore ou de signal ultrasonore (510) le capteur à ultrasons (405) a émis, et/ou
- des informations de test (160) des données transmises dans la troisième phase (130) du cycle de mesure ultrasonore (110), en particulier des données CRC, où le système informatique (505) peut tester ces informations de test pour tester la bonne réception des données que le capteur à ultrasons (405) transmet au système informatique (505) dans la troisième phase (130) du cycle de mesure ultrasonore (110), et/ou
- des informations de test (160) des informations (140, 141, 142, 143, 144) signalées dans la deuxième phase (125), où le système informatique (505) peut tester ces informations de test (160) pour tester la bonne réception des informations (140, 141, 142, 143, 144) signalées dans la deuxième phase (125), et/ou
- des informations de test (160) des commandes (135) signalées par le système informatique (505) dans la première phase (120), où le système informatique (505) peut tester ces informations de test pour tester la bonne réception des commandes (135) signalées dans la première phase (120) par le capteur à ultrasons (405), et/ou
- des informations de test (160) des commandes (135) signalées dans la première phase (120), qui indiquent si le capteur à ultrasons (405) a détecté une erreur lors de la transmission d'une ou plusieurs commandes (135) du système informatique (505) au capteur à ultrasons (405) dans la première phase (120), et/ou
- des informations de test (160) qui reflètent les résultats d'autotests ou de tests du capteur à ultrasons (405), et/ou
- des informations de longueur qui indiquent ou qui permettent de calculer combien de données le capteur à ultrasons (405) a transmis au système informatique (505) dans la troisième phase (130) du cycle de mesure ultrasonore (110), et/ou
- où le capteur à ultrasons est configuré pour générer un signal de réception d'un transducteur à ultrasons du capteur à ultrasons ou d'un récepteur ultrasonore du capteur à ultrasons en fonction d'un signal ultrasonore acoustique que le capteur à ultrasons reçoit.

6. Capteur à ultrasons (405) selon l'une quelconque des revendications 1 à 5,
- où le capteur à ultrasons (405) est configuré pour transmettre un signal de synchronisation pour la synchronisation de la fréquence d'horloge UART d'un participant de la communication UART via l'interface de données UART (430).

7. Capteur à ultrasons (405) selon la revendication 6,
- où le capteur à ultrasons (405) présente une horloge système et/ou une horloge système UART (540) de l'interface de données UART (430) et
- où le capteur à ultrasons (405) modifie des paramètres de l'horloge système et/ou de l'horloge système UART (540) en fonction d'un signal de synchronisation transmis au capteur à ultrasons (405) pour la synchronisation de la fréquence d'horloge UART.

8. Capteur à ultrasons (405) selon l'une des revendications 1 à 7,
- où le capteur à ultrasons (405) est configuré pour recevoir et exécuter une ou plusieurs commandes (135) dans la première phase (120), où la commande (135) comprend une ou plusieurs des commandes et/ou sous-commandes suivantes:
- des informations de synchronisation pour synchroniser une horloge système du capteur à ultrasons (405) et/ou une horloge UART (540) de l'interface de données UART (430), et/ou
- des informations de longueur qui indiquent quelle longueur la commande (135) a et/ou combien de données de commande la commande (135) comprend, et/ou
- des informations de test, en particulier un bit de test et/ou une valeur de test, comme en particulier une somme de test CRC, de la commande (135) et/ou de plusieurs commandes, et/ou
- le nombre des sous-commandes qui forment toute la commande (135), et/ou
- une commande (135) ou sous-commande que le capteur à ultrasons (405) doit mettre en œuvre de manière répétée la mesure dans la deuxième phase (125) de la même manière que le capteur à ultrasons (405) l'a mise en œuvre lors de la dernière mesure dans la deuxième phase (125) du cycle de mesure ultrasonore (110) précédent, et/ou
- une commande (135) ou sous-commande que le capteur à ultrasons (405) doit mettre en œuvre la mesure de manière répétée dans la deuxième phase (125) de la même manière que le capteur à ultrasons (405) l'a mise en œuvre lors d'une mesure précédente dans une deuxième phase (125) d'un cycle de mesure ultrasonore (110) précédent, et/ou
- une commande (135) ou sous-commande que le capteur à ultrasons (405) doit mettre en œuvre la mesure dans une deuxième phase (125) ultérieure conformément à une forme prédéterminée et connue du capteur à ultrasons (405), et/ou
- une commande (135) ou sous-commande que le capteur à ultrasons (405) doit effectuer la mesure dans la deuxième phase (125) suivant immédiatement la première phase (120) en cours conformément à une forme prédéterminée et connue du capteur à ultrasons (405), et/ou
- une commande (135) ou sous-commande que le capteur à ultrasons (405) doit effectuer la mesure dans une deuxième phase (125) avec une salve ultrasonore (510) qui doit montrer un chirp correspondant à une direction de chirp mis en œuvre précédemment dans un cycle de mesure ultrasonore (110) mis en œuvre précédemment, et/ou
- une commande (135) ou sous-commande que le capteur à ultrasons (405) doit effectuer la mesure dans la deuxième phase (125) immédiatement suivante, avec une salve ultrasonore (510) qui doit présenter un chirp correspondant à la dernière direction de chirp effectuée immédiatement avant dans le cycle de mesure ultrasonore (110) mis en œuvre immédiatement avant, et/ou
- une commande (135) ou sous-commande que le capteur à ultrasons (405) doit effectuer la mesure dans une phase de mesure ultrasonore (110) ultérieure avec une salve ultrasonore (510) qui doit présenter un chirp opposé à une direction de chirp mise en œuvre précédemment dans un cycle de mesure ultrasonore (110) mis en œuvre précédemment, et/ou
- une commande (135) ou sous-commande que le capteur à ultrasons (405) doit effectuer la mesure dans la deuxième phase (125) immédiatement suivante avec une salve ultrasonore (510) qui doit présenter un chirp opposé à la direction de chirp mise en œuvre en dernier immédiatement avant dans le cycle de mesure ultrasonore (110) mis en œuvre immédiatement avant, et/ou
- une commande (135) ou sous-commande que le capteur à ultrasons (405) doit effectuer la mesure dans une deuxième phase (125) ultérieure avec une salve ultrasonore (510) qui doit présenter un chirp-down, et/ou
- une commande (135) ou sous-commande que le capteur à ultrasons (405) doit effectuer la mesure dans la deuxième phase (125) immédiatement suivante avec une salve ultrasonore (510) qui doit présenter un chirp-down, et/ou
- une commande (135) ou sous-commande que le capteur à ultrasons (405) doit effectuer la mesure dans une deuxième phase (125) ultérieure avec une salve ultrasonore (510) qui doit présenter un chirp-up, et/ou
- une commande (135) ou sous-commande que le capteur à ultrasons (405) doit effectuer la mesure dans la deuxième phase (125) immédiatement suivante avec une salve ultrasonore (510) qui doit présenter un chirp-up, et/ou
- une commande (135) ou sous-commande que le capteur à ultrasons (405) doit effectuer la mesure dans une deuxième phase (125) ultérieure avec une salve ultrasonore (510) qui doit présenter une fréquence prédéterminée, et/ou
- une commande (135) ou sous-commande que le capteur à ultrasons (405) doit effectuer la mesure dans la deuxième phase (125) immédiatement suivante avec une salve ultrasonore (510) qui doit présenter une fréquence prédéterminée, et/ou
- une commande (135) ou sous-commande que le capteur à ultrasons (405) doit effectuer la mesure dans la deuxième phase (125) ultérieure avec une salve ultrasonore (510) qui doit présenter une fréquence de départ prédéterminée ou transmise, et/ou
- une commande (135) ou sous-commande que le capteur à ultrasons (405) doit effectuer la mesure dans la deuxième phase (125) immédiatement suivante avec une salve ultrasonore (510) qui doit présenter une fréquence de départ prédéterminée ou transmise, et/ou
- une commande (135) ou sous-commande que le capteur à ultrasons (405) doit effectuer la mesure dans la deuxième phase (125) ultérieure avec une salve ultrasonore (510) qui doit présenter une fréquence de fin prédéterminée ou transmise, et/ou
- une commande (135) ou sous-commande que le capteur à ultrasons (405) doit effectuer la mesure dans la deuxième phase (125) immédiatement suivante avec une salve ultrasonore (510) qui doit présenter une fréquence de fin prédéterminée ou transmise, et/ou
- une commande (135) ou sous-commande que le capteur à ultrasons (405) doit effectuer la mesure dans une deuxième phase (125) suivante avec une salve ultrasonore (510) qui doit présenter un nombre prédéterminé d'impulsions ultrasonores, et/ou
- une commande (135) ou sous-commande que le capteur à ultrasons (405) doit effectuer la mesure dans la deuxième phase (125) immédiatement suivante avec une salve ultrasonore (510) qui doit présenter un nombre prédéterminé d'impulsions ultrasonores, et/ou
- une commande (135) ou sous-commande que le capteur à ultrasons (405) doit effectuer la mesure dans une ou plusieurs deuxièmes phases (125) ultérieures avec plusieurs salves ultrasonores (510) consécutives qui doivent présenter chacune un nombre prédéterminé d'impulsions ultrasonores, et/ou
- une commande (135) ou sous-commande qui signale au capteur à ultrasons (405) que, dans n cycles de mesure ultrasonore (110) ultérieurs, en particulier par le système informatique (505), la phase de commande (120) doit être ignorée, où n est un nombre entier positif supérieur ou égal à 0, et/ou
- une commande (135) ou sous-commande qui signale que la deuxième phase (125) suivante de ce cycle de mesure ultrasonore (110) n'est pas exécutée, et/ou
- une commande (135) ou sous-commande qui signale que la troisième phase (130) suivante du cycle de mesure ultrasonore (110) n'est pas exécutée, et/ou
- une commande (135) ou sous-commande qui comprend une ou plusieurs des sous-commandes précédentes en termes de contenu et/ou d'effet, et/ou
- une commande (135) que la communication UART est commutée vers un autre protocole de communication pour la communication entre un capteur à ultrasons et le système informatique pendant une durée prédéterminée et/ou jusqu'à la survenue d'un signal de retour dans la communication de données.

9. Capteur à ultrasons (405) selon l'une des revendications 1 à 8,
- où le capteur à ultrasons (405) est configuré pour transmettre la salve ultrasonore ou le signal ultrasonore (510) au début de la deuxième phase (125) conformément à une commande (135) et/ou sous-commande reçue précédemment, et
- où le capteur à ultrasons (405) est configuré pour convertir et recevoir un signal ultrasonore réfléchi ou une salve ultrasonore réfléchie (520) en un signal de réception (470) dans la deuxième phase (125), et
- où le capteur à ultrasons (405) est configuré pour former un signal d'enveloppe (105) à partir du signal de réception (470) dans la deuxième phase (125), et
- où le capteur à ultrasons (405) est configuré pour mesurer le signal d'enveloppe (105) dans la deuxième phase (125) après la transmission de la salve ultrasonore ou du signal ultrasonore (510) et pour déterminer une séquence de valeurs mesurées et
- où le capteur à ultrasons (405) est configuré pour déterminer un ou plusieurs symboles pour un ou plusieurs objets de signal détectés, chacun avec des paramètres d'objet de signal associés, dans le signal d'enveloppe (105) à partir de la séquence de valeurs mesurées, et
- où le capteur à ultrasons (405) est configuré pour transmettre de tels symboles pour des objets de signal détectés et/ou les paramètres de ces objets de signal au système informatique (505) dans la troisième phase (130) du cycle de mesure ultrasonore (110).

10. Capteur à ultrasons (405) selon l'une des revendications 1 à 9,
- où le capteur à ultrasons (405) est configuré pour transmettre la salve ultrasonore ou ledit signal ultrasonore (510) au début de la deuxième phase (125) conformément à une commande (135) reçue précédemment, et
- où le capteur à ultrasons (405) est configuré pour convertir et pour recevoir un signal ultrasonore réfléchi ou une salve ultrasonore réfléchie (520) en un signal de réception (470) dans la deuxième phase (125), et
- où le capteur à ultrasons (405) est configuré pour former un signal d'enveloppe (105) à partir du signal de réception (470) dans la deuxième phase (125), et
- où le capteur à ultrasons (405) est configuré pour mesurer le signal d'enveloppe (105) dans la deuxième phase (125) après la transmission de la salve ultrasonore ou du signal ultrasonore (510) et pour déterminer les valeurs mesurées du signal d'enveloppe (105) dans la deuxième phase (125), et
- où le capteur à ultrasons (405) est configuré pour
- signaler l'arrivée d'un écho (140, 141, 142, 143, 144) au niveau du capteur à ultrasons (405) au système informatique (505) dans la deuxième phase (125) lorsque le profil de valeurs du signal d'enveloppe (105) croise la valeur instantanée d'une courbe de valeur seuil (115) dans une première direction, et/ou
- signaler la fin temporelle de l'arrivée d'un écho (140, 141, 142, 143, 144) au niveau du capteur à ultrasons (405) au système informatique (505) dans la deuxième phase (125) lorsque le profil de valeurs du signal d'enveloppe (105) croise la valeur instantanée d'une courbe de valeur seuil (115) dans une deuxième direction opposée à la première direction.

11. Capteur à ultrasons (405) selon la revendication 10,
- où le capteur à ultrasons (405) est configuré pour signaler l'arrivée d'échos (140, 141, 142, 143, 144) au niveau du capteur à ultrasons (405) au système informatique (505) dans la deuxième phase (125) en synchronisation avec une horloge système du capteur à ultrasons et/ou en synchronisation avec une horloge système UART (540) de l'interface de données UART (430).

12. Capteur à ultrasons (405) selon l'une des revendications 1 à 11,
- où le capteur à ultrasons (405) est configuré pour signaler des données de diagnostic, comme par exemple des erreurs matérielles d'un circuit microélectronique ou d'autres composants du capteur à ultrasons (405) et d'autres erreurs de diagnostic du capteur à ultrasons (405) au système informatique (505) dans la troisième phase (130) du cycle de mesure ultrasonore (110).

13. Capteur à ultrasons (405) selon la revendication l'une des revendications 1 à 12,
- où le capteur à ultrasons (405) est configuré pour signaler des valeurs déterminées de jusqu'à quatre échos (140, 141, 142, 143, 144) comme données dans la troisième phase (130) du cycle de mesure ultrasonore (110) du capteur à ultrasons (405) au système informatique (505),
- où les valeurs déterminées transmises peuvent être en particulier la hauteur de l'écho et/ou la position temporelle de l'écho par rapport au signal de départ (185).

14. Capteur à ultrasons (405) selon l'une des revendications 1 à 13,
- où le capteur à ultrasons (405) est configuré pour signaler le début de la deuxième phase (125) au sein de la deuxième phase (125) avec une première impulsion (185), et
- où le capteur à ultrasons (405) est configuré pour signaler le début de la phase de mesure proprement dite (615) dans la deuxième phase (125) avec une deuxième impulsion (625);
- où le capteur à ultrasons (405) est configuré pour signaler l'intervalle de temps entre la première impulsion (185) et la deuxième impulsion (625),
- où l'intervalle de temps entre la première impulsion (185) et la deuxième impulsion (625) indique de préférence un défaut du capteur à ultrasons si la valeur de cet intervalle de temps ne se situe pas dans un intervalle de valeurs attendu pour la valeur de cet intervalle de temps.

15. Capteur à ultrasons (405) selon l'une des revendications 5 et/ou 8,
- où le capteur à ultrasons (405) est configuré pour transmettre au moins une partie des données (150, 155 à 158, 160) sous forme chiffrée au système informatique (505) dans la troisième phase (130) et/ou pour recevoir au moins des parties des commandes (135) sous forme chiffrée du système informatique (505) dans la première phase (120), où le chiffrement est de préférence effectué à l'aide d'un générateur de nombres aléatoires vrais, d'un générateur de nombres aléatoires quantiques, d'un procédé de distribution de clés quantiques ou d'un procédé de cryptographie post-quantique.

16. Capteur à ultrasons (405) selon l'une des revendications précédentes,
- où le capteur à ultrasons (405) est configuré pour recevoir du système informatique (505) dans la première phase un code exécutable qui peut être exécuté par le capteur à ultrasons (405),
- où le code exécutable présente de préférence plusieurs séquences de programme qui peuvent être exécutées successivement par le capteur à ultrasons, et
- où le code exécutable présente de préférence au moins une branche, où au moins une branche est exécutée sous la forme d'une instruction if, d'une instruction if-else, d'une instruction switch, d'une requête à conditions multiples, d'une boucle for, d'une boucle while ou d'une instruction jump.

17. Système informatique (505) pour la commande d'un capteur à ultrasons (405), où le système informatique (505) est configuré pour
- communiquer avec un capteur à ultrasons (405) à l'aide d'un protocole UART via une interface de données UART (430) du capteur à ultrasons (405), et
- mettre en œuvre un procédé pour la communication avec le capteur à ultrasons (505) à l'aide du protocole UART, et
- mettre en œuvre la communication avec le capteur à ultrasons (405) dans des cycles de mesure ultrasonore (110) successifs et non chevauchants dans le temps,
- où le cycle de mesure ultrasonore (110) actuel présente au moins trois phases successives dans le temps, à savoir une première phase (120), une deuxième phase (125) et une troisième phase (130),
- démarrer le cycle de mesure ultrasonore (110) au début de la première phase (120) du cycle de mesure ultrasonore (110), et
- dans la première phase (120) transmettre au moins une commande (135) au capteur à ultrasons (405), où dans la commande (135) sont stockées des informations sur le type de mesure que le capteur à ultrasons (405) doit mettre en œuvre dans un cycle de mesure ultrasonore (110), dans la deuxième phase (125) du cycle de mesure ultrasonore (110) actuel, et
- dans la première phase (125), communiquer avec le capteur à ultrasons (405) via le protocole UART et dans la deuxième phase communiquer avec le capteur à ultrasons (405) au moyen d'un protocole de communication différent du protocole UART, et
- terminer la deuxième phase (125) après une durée prédéfinie et/ou en présence d'une condition prédéfinie et commencer la troisième phase (130) du cycle de mesure ultrasonore (110), et
- dans la troisième phase (130) du cycle de mesure ultrasonore (110), recevoir des données (150, 155 à 158, 160) du capteur à ultrasons (405) au moyen d'un protocole UART.

18. Système pour la mise en œuvre d'une mesure ultrasonore comprenant un capteur à ultrasons (405) selon l'une des revendications 1 à 16 et un système informatique (505) selon la revendication 17.

19. Véhicule comprenant un capteur à ultrasons selon l'une des revendications 1 à 16.

20. Procédé pour la mise en œuvre d'une mesure ultrasonore utilisant un capteur à ultrasons (405), où le capteur à ultrasons (405) présente une interface de données UART (430) pour la communication avec un système informatique (505) au moyen d'un protocole UART, et le procédé présente les étapes suivantes:
- mise en œuvre de mesures ultrasonores dans des cycles de mesure ultrasonore consécutifs dans le temps et non chevauchants (110) au moyen du capteur à ultrasons (405),
- où le cycle de mesure ultrasonore (110) actuel présente au moins trois phases successives dans le temps, à savoir une première phase (120), une deuxième phase (125) et une troisième phase (130) et,
- démarrage d'un cycle de mesure ultrasonore (110) au début de la première phase (120) du cycle de mesure ultrasonore (110), et
- réception d'au moins une commande (135) du système informatique (505) par le capteur à ultrasons (405) dans la première phase (120), où dans la commande (135) sont stockées des informations sur le type de mesure que le capteur à ultrasons (405) doit mettre en œuvre dans un cycle de mesure ultrasonore (110), dans la deuxième phase (125) du cycle de mesure ultrasonore (110) actuel, et
- émission d'une salve ultrasonore ou d'un signal ultrasonore (510) par le capteur à ultrasons (405) au début de la deuxième phase (125), où les propriétés de la salve ultrasonore ou du signal ultrasonore (510) dépendent d'une commande (135) reçue par le système informatique (505) dans la première phase (120), et
- communication du capteur à ultrasons (405) avec le système informatique (505) au moyen d'un protocole UART dans la première phase (125) et au moyen d'un protocole de communication différent du protocole UART dans la deuxième phase, et
- réglage d'un signal de l'interface UART (430) du capteur à ultrasons (405) sur une première valeur logique si le capteur à ultrasons (405) détecte un écho pendant la deuxième phase (125), et
- réglage d'un signal de l'interface UART (430) du capteur à ultrasons (405) sur une deuxième valeur logique si le capteur à ultrasons (405) ne détecte aucun écho pendant la deuxième phase (125), où la première valeur logique est différente de la deuxième valeur logique, et
- arrêt de la deuxième phase (125) et démarrage de la troisième phase (130) du cycle de mesure ultrasonore (110) après une durée prédéfinie et/ou en présence d'une condition prédéfinie, et
- transmission de données (150, 155 à 158, 160) du capteur à ultrasons (405) au système informatique (505) dans la troisième phase (130) du cycle de mesure ultrasonore (110) au moyen d'un protocole UART.

21. Procédé pour la commande d'un capteur à ultrasons (405) au moyen d'un système informatique (505), où le système informatique (505) présente une interface de données UART (430) pour la communication avec un capteur à ultrasons (405) au moyen d'un protocole UART, et le procédé présente les étapes suivantes:
- commande du capteur à ultrasons (405) dans des cycles de mesure ultrasonore (110) consécutifs dans le temps et non chevauchants;
- division du cycle de mesure ultrasonore (110) en cours en au moins trois phases successives dans le temps, c'est-à-dire en une première phase (120), une deuxième phase (125) et une troisième phase (130),
- démarrage du cycle de mesure ultrasonore (110) au début de la première phase (120) du cycle de mesure ultrasonore (110),
- envoi d'au moins une commande (135) du système informatique (505) au capteur à ultrasons (405) dans la première phase (120), où dans la commande sont stockées des informations sur le type de mesure que le capteur à ultrasons (405) doit mettre en œuvre dans un cycle de mesure ultrasonore (110), dans la deuxième phase (125) du cycle de mesure ultrasonore (110) actuel,
- réception de données de mesure par le système informatique (505) en provenance du capteur à ultrasons (405) dans la deuxième phase (130),
- où la communication du système informatique (505) avec le capteur à ultrasons (405) dans la première phase (125) a lieu au moyen d'un protocole UART et dans la deuxième phase au moyen d'un protocole de communication différent du protocole UART, et
- arrêt de la deuxième phase (125) après une durée prédéfinie et/ou en présence d'une condition prédéfinie et démarrage de la troisième phase (130) du cycle de mesure ultrasonore (110),
- réception de données (150, 155 à 158, 160) par le système informatique (505) en provenance du capteur à ultrasons (405) dans la troisième phase (130) du cycle de mesure ultrasonore (110) au moyen d'un protocole UART.

22. Procédé pour la mise en œuvre d'une mesure ultrasonore au moyen d'un capteur à ultrasons (405) et d'un système informatique (505), où le capteur à ultrasons (405) et le système informatique (505) présentent une interface UART et sont conçus pour communiquer entre eux au moyen d'un protocole UART, et où le procédé présente les étapes suivantes:
- mise en œuvre de mesures ultrasonores dans des cycles de mesure ultrasonore (110) consécutifs dans le temps et non chevauchants à l'aide du capteur à ultrasons (405),
- où le cycle de mesure ultrasonore (110) en cours présente au moins trois phases successives dans le temps, à savoir une première phase (120), une deuxième phase (125) et une troisième phase (130) et
- démarrage d'un cycle de mesure ultrasonore (110) au début de la première phase (120) du cycle de mesure ultrasonore (110), et
- envoi d'au moins une commande (135) dans la première phase (120) depuis le système informatique (505) au capteur à ultrasons (405), où dans la commande (135) sont stockées des informations sur le type de mesure que le capteur à ultrasons (405) doit mettre en œuvre dans un cycle de mesure ultrasonore (110), dans la deuxième phase (125) du cycle de mesure ultrasonore (110) actuel, et
- émission d'une salve ultrasonore ou d'un signal ultrasonore (510) par le capteur à ultrasons (405) au début de la deuxième phase (125), où les propriétés de la salve ultrasonore ou du signal ultrasonore (510) dépendent d'une commande (135) reçue par le système informatique (505) dans la première phase (120), et
- communication du capteur à ultrasons (405) avec le système informatique (505) au moyen d'un protocole UART dans la première phase (125) et au moyen d'un protocole de communication différent du protocole UART dans la deuxième phase, et
- réglage d'un signal de l'interface UART (430) du capteur à ultrasons (405) sur une première valeur logique si le capteur à ultrasons (405) détecte un écho pendant la deuxième phase (125), et
- réglage d'un signal de l'interface UART (430) du capteur à ultrasons (405) sur une deuxième valeur logique si le capteur à ultrasons (405) ne détecte pas d'écho pendant la deuxième phase (125), où la première valeur logique diffère de la deuxième valeur logique, et
- arrêt de la deuxième phase (125) et démarrage de la troisième phase (130) du cycle de mesure ultrasonore (110) après une durée prédéfinie et/ou en présence d'une condition prédéfinie, et
- transmission de données (150, 155 à 158, 160) du capteur à ultrasons (405) au système informatique (505) dans la troisième phase (130) du cycle de mesure ultrasonore (110) au moyen d'un protocole UART.

23. Produit programme informatique, qui présente des instructions informatiques, où les instructions informatiques sont exécutables par un capteur à ultrasons (405) selon la revendication 1 et ont pour effet que le capteur à ultrasons (405) met en œuvre les étapes du procédé selon la revendication 20 lorsqu'elles sont exécutées par le capteur à ultrasons (405), ou où les instructions informatiques sont exécutables par un système informatique (505) selon la revendication 17 et ont pour effet que le système informatique (505) met en œuvre les étapes du procédé selon la revendication 21 lorsqu'elles sont mises en œuvre par le système informatique (505).
